(19) **Europäisches Patentamt / European Patent Office / Office européen des brevets**

(11) **EP 3 728 727 B1**

(12) # FASCICULE DE BREVET EUROPEEN

(45) Date de publication et mention
de la délivrance du brevet:
**20.08.2025 Bulletin 2025/34**

(21) Numéro de dépôt: **18833992.3**

(22) Date de dépôt: **19.12.2018**

(51) Classification Internationale des Brevets (IPC):
***D07B 1/06*** *(2006.01)*

(52) Classification Coopérative des Brevets (CPC):
(C-Sets disponibles)
**D07B 1/0613;** B60C 9/22; B60C 2009/2016;
B60C 2009/2096; D07B 1/0626; D07B 1/0633;
D07B 2201/1044; D07B 2201/1048;
D07B 2201/1052; D07B 2201/1068;
D07B 2201/1076; D07B 2201/2025;
D07B 2201/2029; D07B 2201/2061;
D07B 2401/2005; (Cont.)

(86) Numéro de dépôt international:
**PCT/FR2018/053416**

(87) Numéro de publication internationale:
**WO 2019/122720 (27.06.2019 Gazette 2019/26)**

(54) **CÂBLES MULTI-TORONS À DEUX COUCHES À TRÈS BAS, BAS ET MOYEN MODULES**

ZWEISCHICHTIGE MEHRADRIGE KABEL MIT SEHR NIEDRIGEM, NIEDRIGEM UND MITTLEREM MODUL

TWO-LAYER MULTI-STRAND CABLES HAVING VERY LOW, LOW AND MEDIUM MODULUS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.12.2017 FR 1762496**

(43) Date de publication de la demande:
**28.10.2020 Bulletin 2020/44**

(73) Titulaire: **COMPAGNIE GENERALE DES
ETABLISSEMENTS MICHELIN
63000 Clermont-Ferrand (FR)**

(72) Inventeurs:
• **CLEMENT, Emmanuel
63040 Clermont-Ferrand Cedex 9 (FR)**

• **BARBAT, Romain
63040 Clermont-Ferrand Cedex 9 (FR)**
• **CHEVALLEY, Marianna
63040 Clermont-Ferrand Cedex 9 (FR)**
• **GIANETTI, Alexandre
63040 Clermont-Ferrand Cedex 9 (FR)**
• **LAURENT, Stéphane
63040 Clermont-Ferrand Cedex 9 (FR)**

(74) Mandataire: **M.F.P. Michelin
DCJ/PI - F35 - Ladoux
23 place des Carmes-Déchaux
63040 Clermont-Ferrand Cedex 9 (FR)**

(56) Documents cités:
WO-A1-2008/026271 WO-A1-2013/174897
WO-A1-2014/048897 DE-U- 6 937 562
FR-A1- 2 947 574

EP 3 728 727 B1

(52) Classification Coopérative des Brevets (CPC):
(Cont.)D07B 2401/208; D07B 2501/2015;
D07B 2501/2046

C-Sets
D07B 2201/2025, D07B 2801/14;
D07B 2201/2061, D07B 2801/12, D07B 2801/24

(52) Classification Coopérative des Brevets (CPC):
(Cont.)D07B 2401/208; D07B 2501/2015;
D07B 2501/2046

**Description**

L'invention concerne les câbles multi-torons utilisables notamment pour le renforcement de pneumatiques, particulièrement de pneumatiques pour véhicules industriels lourds ainsi que les pneumatiques utilisant des tels câbles.

Un pneumatique à armature de carcasse radiale comprend une bande de roulement, deux bourrelets inextensibles, deux flancs reliant les bourrelets à la bande de roulement et une ceinture, ou armature de sommet, disposée circonférentiellement entre l'armature de carcasse et la bande de roulement. Cette armature de sommet comprend plusieurs armatures aux fonctions différentes.

L'armature de sommet comprend généralement une armature de travail comprenant deux nappes de travail, ou nappes croisées, comprenant des éléments filaires de renfort métalliques de travail agencés les uns sensiblement parallèlement aux autres dans chaque nappe de travail, mais croisés d'une nappe à l'autre, c'est-à-dire inclinés, symétriquement ou non, par rapport au plan circonférentiel médian, d'un angle allant généralement de 15° et 40°. Cette armature de travail permet, entre autres fonctions, la transmission au moins partielle des efforts transversaux exercés par le sol sur le pneumatique lors du roulage de ce dernier afin d'assurer la directionalité du pneumatique, c'est-à-dire la capacité du pneumatique à permettre au véhicule sur lequel il est monté de tourner.

De tels éléments filaires métalliques de travail sont notamment décrits dans WO2008026271. WO2008026271 décrit des câbles multi-torons à deux couches comprenant une couche interne du câble constituée de J>1 torons internes enroulés en hélice et une couche externe du câble constituée de L>1 torons externes enroulés autour de la couche interne du câble. Chaque toron interne et externe est à plusieurs couches et comprend au moins une couche interne constituée de Q>1 fils internes, éventuellement une couche intermédiaire constituée de P>1 fils intermédiaires enroulés autour de la couche interne, et une couche externe constituée de N>1 fils externes enroulés autour de la couche interne ou intermédiaire.

Dans WO2008026271, l'objectif est de fournir des éléments filaires de renfort de travail présentant une rigidité et une force à rupture aussi élevées que possible afin d'éviter les dégâts causés sur l'armature de sommet, et notamment sur l'armature de travail, par les obstacles rencontrés par le pneumatique lors de son roulage.

Dans WO2008026271, cet objectif est atteint en augmentant le nombre de torons internes et externes autant que faire se peut par rapport à des câbles multi-torons classiques dont la force à rupture est plus faible et pour lesquels J=1 et L=6, tels que notamment décrits dans WO2015090920. Ainsi, dans WO2008026271, l'objectif est de lutter contre la déformation imposée par les obstacles rencontrés en leur opposant des câbles les plus rigides et mécaniquement résistants possibles.

Toutefois, si cette solution est efficace contre des obstacles de dimensions relativement petites ou moyennes, elle s'avère inefficace à l'égard des obstacles de dimensions plus grandes. En effet, dans ces cas, les efforts exercés sur les câbles sont supérieurs à la dureté de l'acier et l'obstacle vient alors cisailler les câbles et ce, d'autant plus facilement que ces câbles sont rigides et s'opposent à la déformation imposée par l'obstacle.

On connait également de l'état de la technique des câbles tels que décrits dans WO2014048897.

L'invention a pour but un câble permettant d'éviter les dégâts causés par les obstacles sollicitant fortement l'armature de sommet, notamment l'armature travail du pneumatique.

## CABLE SELON L'INVENTION

A cet effet, l'invention a pour objet un câble multi-torons à deux selon la revendication 1.

Contrairement à l'état de la technique dans lequel les câbles présentent des modules bien supérieurs à 160 GPa et sont donc relativement rigides, les inventeurs ont trouvés que les câbles selon l'invention présentant des modules plus faibles sont plus performants à l'encontre des obstacles sollicitant fortement l'armature de sommet du pneumatique.

En effet, les inventeurs ont trouvé qu'il était plus efficace d'épouser l'obstacle grâce à un câble présentant un module plus faible plutôt que de tenter de rigidifier et de renforcer autant que possible les câbles pour s'opposer aux déformations imposées par les obstacles comme cela était enseigné dans l'état de la technique. En épousant les obstacles, on diminue le cisaillement exercé sur les câbles et donc le risque de rupture de ces câbles.

La valeur du module EC des câbles selon l'invention assure que ces derniers présentent des structures correspondant à des modules relativement faibles variant entre 50 GPa et 160 GPa et permettant donc d'épouser les obstacles rencontrés contrairement aux câbles de l'état de la technique, bien trop rigides.

En outre, la valeur du module EC des câbles selon l'invention assure que ces derniers présentent un module suffisant pour permettre une directionalité suffisante du pneumatique lorsqu'ils sont utilisés dans l'armature de travail.

Dans l'invention, le câble est à deux couches de torons, c'est-à-dire qu'il comprend un assemblage constitué de deux couches de torons, ni plus ni moins, c'est-à-dire que l'assemblage a deux couches de torons, pas une, pas trois, mais uniquement deux. La couche externe du câble est enroulée en hélice autour de la couche interne du câble au contact de la couche interne du câble.

En outre, contrairement au cas où J=1 et dans lequel il existerait un risque de voir, sous l'effet des efforts répétés de compression appliqués au câble, le toron interne sortir radialement du câble, la présence de plusieurs torons dans la couche interne du câble (J>1) enroulés en hélice permet de réduire ce risque, les efforts de compression étant alors répartis sur la pluralité de torons de la couche interne du câble et l'hélice maintenant les torons internes les uns avec les autres.

De façon optionnelle et préférée, dans un mode de réalisation, le câble est dépourvu de toute composition polymérique, notamment le câble est dépourvu de gaine de toute composition polymérique recouvrant le toron interne. Dans un autre mode de réalisation, le câble est dépourvu de toute composition élastomérique, notamment le câble est dépourvu de gaine de toute composition élastomérique recouvrant la couche interne du câble.

Par composition de polymère ou composition polymérique, on entend que la composition comprend au moins un polymère. De préférence, un tel polymère peut être un thermoplastique, par exemple un polyester ou un polyamide, un polymère thermodurcissable, un élastomère, par exemple du caoutchouc naturel, un élastomère thermoplastique ou un mélange de ces polymères.

Par composition d'élastomère ou composition élastomérique, on entend que la composition comprend au moins un élastomère ou un caoutchouc (les deux termes étant synonymes) et au moins un autre composant. De préférence, la composition d'élastomère comprend également un système de vulcanisation, une charge. Plus préférentiellement, l'élastomère est diénique.

Dans la description et les revendications, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de la borne « a » jusqu'à la borne « b » c'est-à-dire incluant les bornes strictes « a » et « b ».

On rappelle que, de manière connue, le pas d'un toron représente la longueur de ce toron, mesurée parallèlement à l'axe du câble, au bout de laquelle le toron ayant ce pas effectue un tour complet autour dudit axe du câble. De façon analogue, le pas d'un fil représente la longueur de ce fil, mesurée parallèlement à l'axe du toron dans lequel il se trouve, au bout de laquelle le fil ayant ce pas effectue un tour complet autour dudit axe du toron.

Par sens d'enroulement d'une couche de torons ou de fils, on entend le sens formé par les torons ou les fils par rapport à l'axe du câble ou du toron. Le sens d'enroulement est communément désigné par la lettre soit Z, soit S.

Les pas, sens d'enroulement et diamètres des fils et des torons sont déterminés conformément à la norme ASTM D2969-04 de 2014. Les rayons d'enroulement sont mesurés par observation au microscope sur une coupe du câble réalisée selon un axe perpendiculaire à l'axe du câble.

Par diamètres de fils proches, on entend que les rapports des diamètres des fils considérés deux à deux vont de 0,75 à 1,25. Par diamètres de fils identiques, on entend que les rapports des diamètres des fils considérés deux à deux sont égaux à 1.

Avantageusement, le câble est métallique. Par câble métallique, on entend par définition un câble formé de fils constitués intégralement (pour 100% des fils) d'un matériau métallique. Un tel câble métallique est préférentiellement mise en oeuvre avec des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages.

Lorsqu'un acier au carbone est avantageusement utilisé, sa teneur en carbone (% en poids d'acier) est de préférence comprise entre 0,2% et 1,2%, notamment entre 0,5% et 1,1 % ; ces teneurs représentent un bon compromis entre les propriétés mécaniques requises pour le pneumatique et la faisabilité des fils.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc.

De préférence, les fils d'une même couche d'un toron prédéterminé (interne ou externe) présentent tous sensiblement le même diamètre. Avantageusement les torons internes présentent tous sensiblement le même diamètre. Avantageusement, les torons externes présentent tous sensiblement le même diamètre. Par « sensiblement le même diamètre», on entend que les fils ou les torons ont des diamètres identiques aux tolérances industrielles près.

Dans la présente demande, le module EC d'un câble est calculé en mesurant la pente de la partie élastique d'une courbe force-allongement obtenue en appliquant la norme ASTM D2969-04 de 2014 au câble testé, puis en rapportant cette pente à la section métallique du câble, c'est-à-dire la somme des sections des fils constituants le câble. Alternativement, on peut déterminer la section métallique en mesurant la masse linéique du câble conformément à la norme ASTM D2969-04 de 2014 et en divisant cette masse linéique par la densité de l'acier utilisé.

La partie élastique de la courbe correspond à une partie sensiblement linéaire de la courbe force-allongement, partie qui est complémentaire à la partie structurale et à la partie plastique de la courbe force-allongement. La partie élastique correspond à un allongement élastique Ae et résulte de la construction du câble, notamment des angles des différentes couches et des diamètres des fils. La partie élastique, et l'allongement Ae correspondant, de la courbe force-allongement sont notamment décrits dans les documents US5843583, WO 2005/014925 et WO2007/090603 et correspondent à la partie et à l'allongement de la courbe force-allongement compris entre :

- la partie structurale correspondant à l'allongement structural As, résultant de l'aération du câble, c'est-à-dire l'espace vacant entre les différents fils ou torons constituants le câble, et
- la partie plastique correspondant à l'allongement plastique Ap, résultant de la plasticité (déformation irréversible au-delà de la limite d'élasticité) d'un ou plusieurs fils du câble.

Pour certains câbles, il n'existe pas d'aération dans le câble si bien que l'allongement structural As est nul. Dans tous les cas (As nul et As non nul), la partie élastique correspond à la partie linéaire de la courbe force-allongement présentant la pente la plus élevée.

Le module EC du câble est mesuré sur un câble issu de fabrication, c'est-à-dire dépourvu de toute composition élastomérique dans laquelle serait noyé le câble pour former une nappe. De façon analogue, le module EI de la couche interne du câble est mesuré en prenant la couche interne du câble soit à l'issue de sa fabrication, soit en déroulant la couche externe de torons externes du câble fini de façon à obtenir la couche interne du câble seule. En variante, on pourra mesurer les modules EC et EI en extrayant un câble d'un pneumatique et en enlevant toute composition élastomérique autour et dans le câble, par exemple par dégommage chimique comme cela est bien connu de l'homme du métier.

On adoptera également dans la description qui suit les définitions suivantes des angles d'hélice $\alpha$ de chaque toron interne dans la couche interne du câble et $\alpha'$ de chaque toron externe dans la couche externe du câble.

$\alpha = \arctan\left(\frac{2\pi\,RI}{PI}\right)$ dans laquelle RI est le rayon d'enroulement des torons internes et PI est le pas d'enroulement de chaque toron interne. $\alpha' = \arctan\left(\frac{2\pi\,RE}{PE}\right)$ dans laquelle RE est le rayon d'enroulement des torons externes et PE est le pas d'enroulement de chaque toron externe.

Les rayons d'enroulement RI et RE sont mesurés sur une coupe transversale perpendiculaire à l'axe principal du câble et correspondent à la distance entre le centre de l'hélice décrite par respectivement chaque toron interne et externe et le centre du câble.

Dans un mode de réalisation dans lequel chaque toron interne est à deux couches, on adoptera également dans la description qui suit les définitions suivantes des angles d'hélice $\beta$ de chaque fil interne dans la couche interne au sein de chaque toron interne et $\gamma$ de chaque fil externe dans la couche externe au sein de chaque toron interne.

$\beta = \arctan\left(\frac{2\pi\,R1}{p1}\right)$ dans laquelle R1 est le rayon d'enroulement des Q fils internes de chaque toron interne et p1 est le pas auquel sont assemblés les Q fils internes au sein de chaque toron interne. Dans le cas où Q=1, R1=0 et donc $\beta$=0.

$\gamma = \arctan\left(\frac{2\pi\,R2}{p2}\right)$ dans laquelle R2 est le rayon d'enroulement des N fils externes de chaque toron interne et p2 est le pas auquel sont assemblés les N fils externes au sein de chaque toron interne.

Dans ce mode de réalisation, chaque fil interne présente un diamètre D1 et chaque fil externe présente un diamètre D2. Les rayons d'enroulement R1 et R2 sont mesurés sur une coupe transversale perpendiculaire à l'axe principal de chaque toron interne pris individuellement et correspondent à la distance entre le centre de l'hélice décrite par respectivement chaque fil interne et externe et le centre du toron interne.

Dans un mode de réalisation dans lequel chaque toron interne est à trois couches, on adoptera également dans la description qui suit les définitions suivantes des angles d'hélice $\beta$ de chaque fil interne dans la couche interne au sein de chaque toron interne, $\delta$ de chaque fil intermédiaire dans la couche intermédiaire au sein de chaque toron interne, et $\gamma$ de

chaque fil externe dans la couche externe au sein de chaque toron interne. $\beta = \arctan\left(\frac{2\pi\,R1}{p1}\right)$ dans laquelle R1 est le rayon d'enroulement des Q fils internes de chaque toron interne et p1 est le pas auquel sont assemblés les Q fils internes au sein de chaque toron interne. Dans le cas où Q=1, R1=0 et donc $\beta$=0. $\delta = \arctan\left(\frac{2\pi\,R2}{p2}\right)$ dans laquelle R2 est le rayon d'enroulement des P fils intermédiaires de chaque toron interne et p2 est le pas auquel sont assemblés les P fils intermédiaires au sein de chaque toron interne. $\gamma = \arctan\left(\frac{2\pi\,R3}{p3}\right)$ dans laquelle R3 est le rayon d'enroulement des N

fils externes de chaque toron interne et p3 est le pas auquel sont assemblés les N fils externes au sein de chaque toron interne. Les rayons d'enroulement R1, R2 et R3 sont mesurés sur une coupe transversale perpendiculaire à l'axe principal de chaque toron interne pris individuellement et correspondent à la distance entre le centre de l'hélice décrite par respectivement chaque fil interne, intermédiaire et externe et le centre du toron interne.

Dans ce mode de réalisation, chaque fil interne présente un diamètre D1, chaque fil intermédiaire présente un diamètre D2 et chaque fil externe présente un diamètre D3.

Dans un mode de réalisation dans lequel chaque toron externe est à deux couches, on adoptera également dans la description qui suit les définitions suivantes des angles d'hélice β' de chaque fil interne dans la couche interne au sein de chaque toron externe et γ' de chaque fil externe dans la couche externe au sein de chaque toron externe.

$$\beta' = \arctan\left(\frac{2\pi\,R1'}{p1'}\right)$$ dans laquelle R1' est le rayon d'enroulement des Q' fils internes de chaque toron externe et p1' est le pas auquel sont assemblés les Q' fils internes au sein de chaque toron externe. Dans le cas où Q'=1, R1'=0 et donc β'=0. $$\gamma' = \arctan\left(\frac{2\pi\,R2'}{p2'}\right)$$ dans laquelle R2' est le rayon d'enroulement des N' fils externes de chaque toron externe et p2' est le pas auquel sont assemblés les N' fils externes au sein de chaque toron externe.

Dans ce mode de réalisation, chaque fil interne présente un diamètre D1' et chaque fil externe présente un diamètre D2'. Les rayons d'enroulement R1' et R2' sont mesurés sur une coupe transversale perpendiculaire à l'axe principal de chaque toron externe pris individuellement et correspondent à la distance entre le centre de l'hélice décrite par respectivement chaque fil interne et externe et le centre du toron externe.

Dans un mode de réalisation dans lequel chaque toron externe est à trois couches, on adoptera également dans la description qui suit les définitions suivantes des angles d'hélice β' de chaque fil interne dans la couche interne au sein de chaque toron externe, δ' de chaque fil intermédiaire dans la couche intermédiaire au sein de chaque toron externe, et γ' de chaque fil externe dans la couche externe au sein de chaque toron externe. $$\beta' = \arctan\left(\frac{2\pi\,R1'}{p1'}\right)$$ dans laquelle R1' est le rayon d'enroulement des Q' fils internes de chaque toron externe et p1' est le pas auquel sont assemblés les Q' fils internes au sein de chaque toron externe. Dans le cas où Q'=1, R1'=0 et donc β'=0. $$\delta' = \arctan\left(\frac{2\pi\,R2'}{p2'}\right)$$ dans laquelle R2' est le rayon d'enroulement des P' fils intermédiaires de chaque toron externe et p2' est le pas auquel sont assemblés les P' fils intermédiaires au sein de chaque toron externe. $$\gamma' = \arctan\left(\frac{2\pi\,R3'}{p3'}\right)$$ dans laquelle R3' est le rayon d'enroulement des N' fils externes de chaque toron externe et p3' est le pas auquel sont assemblés les N' fils externes au sein de chaque toron externe avant assemblage des torons internes et des torons externes entre eux. Dans ce mode de réalisation, chaque fil interne présente un diamètre D1', chaque fil intermédiaire présente un diamètre D2' et chaque fil externe présente un diamètre D3'. Les rayons d'enroulement R1', R2' et R3' sont mesurés sur une coupe transversale perpendiculaire à l'axe principal de chaque toron externe pris individuellement et correspondent à la distance entre le centre de l'hélice décrite par respectivement chaque fil interne, intermédiaire et externe et le centre du toron externe.

Selon l'invention, la couche interne du câble présentant un module EI, 25 GPa ≤ EI ≤ 180 GPa, de préférence 36 GPa ≤ EI ≤ 180 GPa.

Les câbles selon l'invention présentant une architecture dans laquelle J>1, les efforts transversaux les plus sévères qui s'exercent dans le câble lorsque celui-ci est mis en tension sont les efforts transversaux s'exerçant entre les torons internes, notamment dans le cas où la couche externe du câble est désaturée, au contraire d'un câble dans lequel J=1 et dans lequel les efforts transversaux les plus sévères sont les efforts transversaux exercés par les torons externes sur les torons internes, notamment dans le cas où la couche externe du câble est désaturée.

Dans une première variante dans laquelle la couche interne du câble présente un module relativement faible, la couche interne du câble présentant un module EI, 25 GPa ≤ EI ≤ 94 GPa, de préférence 36 GPa ≤ EI ≤ 94 GPa. Ainsi, plus le module de la couche interne est faible, mieux seront repris les efforts principaux et meilleure sera la force à rupture du câble. On maximise ici la force à rupture du câble en utilisant un module de la couche interne relativement faible. Dans une variante particulière, 25 GPa ≤ EI ≤ 102 GPa, de préférence 36 GPa ≤ EI ≤ 102 GPa.

Dans une deuxième variante dans laquelle la couche interne du câble présente un module plus élevé, la couche interne du câble présentant un module EI, 95 GPa ≤ EI ≤ 180 GPa.

Dans un mode de réalisation selon l'invention dans lequel la couche interne du câble et le câble présentent des modules relativement proches, 0,60 ≤ EC/EI ≤ 1,20. Dans ce mode de réalisation, les inventeurs émettent l'hypothèse que l'âme et la couche travaillent sensiblement ensemble lorsque le câble est sollicité, notamment en traction. Ainsi, on maximise le compromis entre force à rupture du câble et résistance aux coupures.

Dans un autre mode de réalisation selon l'invention dans lequel la couche interne du câble et le câble présentent des modules relativement différents, EC/EI ≤ 0,59 ou 1,21 ≤ EC/EI.

Dans une variante, la couche interne du câble présente un module relativement élevé par rapport au module du câble, c'est-à-dire EC/EI ≤ 0,59, de préférence 0,40 ≤ EC/EI ≤ 0,59. Dans cette variante, on favorise la résistance aux coupures du câble par rapport à sa force à rupture.

Dans une autre variante, la couche interne du câble présente un module relativement faible par rapport au module du câble, c'est-à-dire $1{,}21 \leq EC/EI$, de préférence $1{,}21 \leq EC/EI \leq 3{,}00$. Dans cette variante, on favorise la force à rupture du câble par rapport à sa résistance aux coupures.

Dans des modes préférés de l'invention, les câbles présentent les caractéristiques structurelles avantageuses suivantes.

Dans un mode de réalisation préféré, l'angle d'hélice $\alpha$ de chaque toron interne dans la couche interne du câble va :

- de 7° à 38° dans un mode de réalisation utilisant des torons internes et des torons externes à deux couches,
- de 4° à 41° dans un mode de réalisation utilisant des torons internes et des torons externes à trois couches,
- de 3° à 36° dans un mode de réalisation utilisant des torons internes à deux couches et des torons externes à trois couches,
- de 4° à 36° dans un mode de réalisation utilisant des torons internes à trois couches et des torons externes à deux couches.

Dans la variante particulière, l'angle d'hélice $\alpha$ de chaque toron interne dans la couche interne du câble va de 5° à 42°.

En contrôlant principalement la valeur de l'angle d'hélice $\alpha$, on contrôle largement la valeur du module associé à la couche interne du câble. En effet, l'angle d'hélice $\alpha$ intervient majoritairement par rapport aux angles des fils des couches dont la contribution au module est plus faible. Ainsi, plus l'angle d'hélice $\alpha$ de chaque toron interne est élevé, moins le module associé à la couche interne est élevé. Ainsi, Avantageusement, les torons internes sont enroulés en hélice à un pas PI allant de 10 mm à 65 mm, de préférence de 10 mm à 45 mm.

Dans un mode de réalisation préféré, l'angle d'hélice $\alpha'$ de chaque toron externe dans la couche externe du câble va

- de 7° à 38° dans un mode de réalisation utilisant des torons internes et des torons externes à deux couches,
- de 13° à 36° dans un mode de réalisation utilisant des torons internes et des torons externes à trois couches,
- de 10° à 34° dans un mode de réalisation utilisant des torons internes à deux couches et des torons externes à trois couches,
- de 10° à 32° dans un mode de réalisation utilisant des torons internes à trois couches et des torons externes à deux couches.

Dans la variante particulière, l'angle d'hélice $\alpha$ de chaque toron interne dans la couche interne du câble va de 10° à 32°.

De façon analogue à l'angle d'hélice $\alpha$, en contrôlant principalement la valeur de l'angle d'hélice $\alpha'$, on contrôle largement la valeur du module associé à la couche externe du câble. En effet, l'angle d'hélice $\alpha'$ intervient majoritairement par rapport aux angles des fils des couches dont la contribution au module est plus faible. Ainsi, plus l'angle d'hélice $\alpha'$ de chaque toron externe est élevé, moins le module associé à la couche externe est élevé. Avantageusement, les L torons externes sont enroulés en hélice à un pas PE allant de 30 mm à 65 mm, de préférence de 30 mm à 60 mm.

Dans la variante particulière utilisant des torons internes à deux couches, $20° \leq 2\alpha + \beta + \gamma \leq 136°$.

Dans la variante particulière utilisant des torons internes à trois couches, $50° \leq 3\alpha + \beta + \delta + \gamma \leq 80°$.

Dans la variante particulière utilisant des torons externes à deux couches, $39° \leq 2\alpha' + \beta' + \gamma' \leq 100°$.

Dans la variante particulière utilisant des torons externes à trois couches, $65° \leq 3\alpha' + \beta' + \delta' + \gamma' \leq 95°$.

Dans le mode de réalisation utilisant des torons internes et des torons externes à deux couches, $11° \leq 2\alpha + \beta + \gamma \leq 110°$ et

- dans un mode de réalisation dans lequel Q=1, on a avantageusement $11° \leq 2\alpha + \beta + \gamma \leq 74°$ , et

- dans un mode de réalisation dans lequel Q>1, on a avantageusement $16° \leq 2\alpha + \beta + \gamma \leq 110°$.

Dans un mode de réalisation utilisant des torons internes et des torons externes à trois couches, $25° \leq 3\alpha + \beta + \delta + \gamma \leq 158°$ et

- dans un mode de réalisation dans lequel Q=1, on a avantageusement $25° \leq 3\alpha + \beta + \delta + \gamma \leq 140°$ , et

- dans un mode de réalisation dans lequel Q>1, on a avantageusement $36° \leq 3\alpha + \beta + \delta + \gamma \leq 158°$.

Dans un mode de réalisation utilisant des torons internes à deux couches et des torons externes à trois couches, $16° \leq 2\alpha + \beta + \gamma \leq 105°$ et

- dans un mode de réalisation dans lequel Q=1, on a avantageusement $16° \le 2\alpha + \beta + \gamma \le 86°$ , et

- dans un mode de réalisation dans lequel Q>1, on a avantageusement $20° \le 2\alpha + \beta + \gamma \le 105°$.

Dans un mode de réalisation utilisant des torons internes à trois couches et des torons externes à deux couches, $26° \le 3\alpha + \beta + \delta + \gamma \le 162°$, et

- dans un mode de réalisation dans lequel Q=1, on a avantageusement $26° \le 3\alpha + \beta + \delta + \gamma \le 140°$ , et

- dans un mode de réalisation dans lequel Q>1, on a avantageusement $36° \le 3\alpha + \beta + \delta + \gamma \le 162°$.

Dans le mode de réalisation utilisant des torons internes et des torons externes à deux couches, $23° \le 2\alpha' + \beta' + \gamma' \le 97°$, et

- dans un mode de réalisation dans lequel Q'=1, on a avantageusement $23° \le 2\alpha' + \beta' + \gamma' \le 85°$ , et

- dans un mode de réalisation dans lequel Q'>1, on a avantageusement $28° \le 2\alpha' + \beta' + \gamma' \le 97°$.

Dans un mode de réalisation utilisant des torons internes et des torons externes à trois couches, $48° \le 3\alpha' + \beta' + \delta' + \gamma' \le 154°$, et

- dans un mode de réalisation dans lequel Q'=1, on a avantageusement $48° \le 3\alpha' + \beta' + \delta' + \gamma' \le 145°$, et

- dans un mode de réalisation dans lequel Q'>1, on a avantageusement $61° \le 3\alpha' + \beta' + \delta' + \gamma' \le 154°$.

Dans un mode de réalisation utilisant des torons internes à deux couches et des torons externes à trois couches, $47° \le 3\alpha' + \beta' + \delta' + \gamma' \le 147°$, et

- dans un mode de réalisation dans lequel Q'=1, on a avantageusement $47° \le 3\alpha' + \beta' + \delta' + \gamma' \le 147°$, et
- dans un mode de réalisation dans lequel Q'>1, on a avantageusement $62° \le 3\alpha' + \beta' + \delta' + \gamma' \le 140°$.

Dans un mode de réalisation utilisant des torons internes à trois couches et des torons externes à deux couches, $28° \le 2\alpha' + \beta' + \gamma' \le 96°$, et

- dans mode de réalisation dans lequel Q'=1, on a avantageusement $28° \le 2\alpha' + \beta' + \gamma' \le 86°$.
- dans un mode de réalisation dans lequel Q'>1, on a avantageusement $34° \le 2\alpha' + \beta' + \gamma' \le 96°$.

Dans un mode de réalisation utilisant des torons internes et des torons externes à deux couches, $28° \le 2\alpha' + \beta' + \gamma' \le 96°$. Dans un mode de réalisation dans lequel Q'=1, on a avantageusement $28° \le 2\alpha' + \beta' + \gamma' \le 86°$. Dans un mode de réalisation dans lequel Q'>1, on a avantageusement $34° \le 2\alpha' + \beta' + \gamma' \le 96°$. Dans la variante particulière, $73° \le 2\alpha + \beta + \gamma + 2\alpha' + \beta' + \gamma' \le 195°$.

Dans un mode de réalisation utilisant des torons internes et des torons externes à trois couches, $84° \le 3\alpha + \beta + \delta + \gamma + 3\alpha' + \beta' + \delta' + \gamma' \le 280°$. Dans un mode de réalisation dans lequel Q=1 et Q'=1, on a avantageusement $84° \le 3\alpha + \beta + \delta + \gamma + 3\alpha' + \beta' + \delta' + \gamma' \le 246°$. Dans un mode de réalisation dans lequel Q>1, Q'=1, on a avantageusement $96° \le 3\alpha + \beta + \delta + \gamma + 3\alpha' + \beta' + \delta' + \gamma' \le 261°$. Dans un mode de réalisation dans lequel Q=1 et Q'>1, on a avantageusement $88° \le 3\alpha + \beta + \delta + \gamma + 3\alpha' + \beta' + \delta' + \gamma' \le 254°$. Dans un mode de réalisation dans lequel Q>1, Q'>1, on a avantageusement $101° \le 3\alpha + \beta + \delta + \gamma + 3\alpha' + \beta' + \delta' + \gamma' \le 280°$. Dans la variante particulière, $130° \le 3\alpha + \beta + \delta + \gamma + 3\alpha' + \beta' + \delta' + \gamma' \le 170°$.

Dans un mode de réalisation utilisant des torons internes à deux couches et des torons externes à trois couches, $84° \le 2\alpha + \beta + \gamma + 3\alpha' + \beta' + \delta' + \gamma' \le 226°$. Dans un mode de réalisation dans lequel Q=1 et Q'=1, on a avantageusement $84° \le 2\alpha + \beta + \gamma + 3\alpha' + \beta' + \delta' + \gamma' \le 199°$. Dans un mode de réalisation dans lequel Q>1, Q'=1, on a avantageusement $88° \le 2\alpha + \beta + \gamma + 3\alpha' + \beta' + \delta' + \gamma' \le 206°$. Dans un mode de réalisation dans lequel Q=1 et Q'>1, on a avantageusement $96° \le 2\alpha + \beta + \gamma + 3\alpha' + \beta' + \delta' + \gamma' \le 214°$. Dans un mode de réalisation dans lequel Q>1, Q'>1, on a avantageusement $99° \le 2\alpha + \beta + \gamma + 3\alpha' + \beta' + \delta' + \gamma' \le 226°$. Dans la variante particulière, $110° \le 2\alpha + \beta + \gamma + 3\alpha' + \beta' + \delta' + \gamma' \le 150°$.

Dans un mode de réalisation utilisant des torons internes à trois couches et des torons externes à deux couches, $64° \le 3\alpha + \beta + \delta + \gamma + 2\alpha' + \beta' + \gamma' \le 224°$. Dans un mode de réalisation dans lequel Q=1 et Q'=1, on a avantageusement $64° \le 3\alpha + \beta + \delta + \gamma + 2\alpha' + \beta' + \gamma' \le 200°$. Dans un mode de réalisation dans lequel Q>1, Q'=1, on a avantageusement $73° \le 3\alpha + \beta + \delta + \gamma + 2\alpha' + \beta' + \gamma' \le 212°$. Dans un mode de réalisation dans lequel Q=1 et Q'>1, on a avantageusement $68° \le 3\alpha + \beta + \delta + \gamma + 2\alpha' + \beta' + \gamma' \le 220°$. Dans un mode de réalisation dans lequel Q>1, Q'>1, on a avantageusement $80° \le 3\alpha + \beta + \delta + \gamma + 2\alpha' +$

β' + γ' ≤ 224°. Dans la variante particulière, 110° ≤ 3α + β + δ + γ + 2α' + β' + γ' ≤ 150°.

Pour des diamètres de fils utilisés identiques ou proches, les angles ainsi définis permettent de définir structurellement un câble conforme à l'invention facile à fabriquer industriellement en jouant uniquement sur les angles d'hélice α, α', β, β', δ, δ', γ et γ'.

Dans un mode de réalisation utilisant des torons internes et des torons externes à deux couches :

- Dans le cas où Q>1, l'angle d'hélice β de chaque fil interne dans la couche interne au sein de chaque toron interne va de 4° à 25°, de préférence 4° à 17°. Avantageusement, les Q fils internes de chaque toron interne sont assemblés au sein de chaque toron interne à un pas p1 allant de 2 à 20 mm, de préférence de 5 à 20 mm.

- Dans le cas où Q=1, l'angle d'hélice γ de chaque fil externe dans la couche externe au sein de chaque toron interne va de 6° à 31°, de préférence de 5° à 26°. Avantageusement, les N fils externes de chaque toron interne sont assemblés au sein de chaque toron interne à un pas p2 allant de 4 à 40 mm, de préférence de 5 à 30 mm.

- Dans le cas où Q>1, l'angle d'hélice γ de chaque fil externe dans la couche externe au sein de chaque toron interne va de 5° à 31°. Avantageusement, les N fils externes de chaque toron interne sont assemblés au sein de chaque toron interne à un pas p2 allant de 4 à 40 mm.

- Dans le cas où Q'>1, l'angle d'hélice β' de chaque fil interne dans la couche interne au sein de chaque toron externe va de 4° à 25°, de préférence de 4° à 17°. Avantageusement, les Q' fils internes de chaque toron externe sont assemblés au sein de chaque toron externe à un pas p1' allant de 2 à 20 mm, de préférence de 5 à 20 mm.

- Dans le cas où Q=1, l'angle d'hélice γ' de chaque fil externe dans la couche externe au sein de chaque toron externe va de 6° à 31°, de préférence de 5° à 26°. Avantageusement, les N' fils externes de chaque toron interne sont assemblés au sein de chaque toron externe à un pas p2' allant de 4 à 40 mm de préférence de 5 à 30 mm.

- Dans le cas où Q>1, l'angle d'hélice γ' de chaque fil externe dans la couche externe au sein de chaque toron externe va de 5° à 31°. Avantageusement, les N' fils externes de chaque toron interne sont assemblés au sein de chaque toron externe à un pas p2' allant de 4 à 40 mm.

- Dans la variante particulière :

    i. si Q>1, β va de 4° à 25° et p1 va de 2 à 20 mm,
    ii. γ va de 6° à 31° et p2 va de 4 à 40 mm,
    iii. si Q'>1, β' va de 4° à 25° et p1 va de 2 à 20 mm,
    iv. γ' va de 6° à 31° et p2 va de 4 à 40 mm.

Dans un mode de réalisation utilisant des torons internes et des torons externes à trois couches :

- Dans le cas où Q>1, l'angle d'hélice β de chaque fil interne dans la couche interne au sein de chaque toron interne va de 4° à 17°. Avantageusement, dans le cas où Q>1, les Q fils internes de chaque toron interne sont assemblés au sein de chaque toron interne à un pas p1 allant de 5 à 15 mm. Dans le cas où Q=1, l'angle d'hélice δ de chaque fil intermédiaire dans la couche intermédiaire au sein de chaque toron interne va de 6° à 30°. Avantageusement, les P fils intermédiaires de chaque toron interne sont assemblés au sein de chaque toron interne à un pas p2 allant de 5 à 20 mm.

- Dans le cas où Q>1, l'angle d'hélice δ de chaque fil intermédiaire dans la couche intermédiaire au sein de chaque toron interne va de 8° à 22°. Avantageusement, les P fils intermédiaires de chaque toron interne sont assemblés au sein de chaque toron interne à un pas p2 allant de 10 à 20 mm.

- Dans le cas où Q=1, l'angle d'hélice γ de chaque fil externe dans la couche externe au sein de chaque toron interne va de 7° à 30°. Avantageusement, les N fils externes de chaque toron interne sont assemblés au sein de chaque toron interne à un pas p3 allant de 10 à 40 mm.

- Dans le cas où Q>1, l'angle d'hélice γ de chaque fil externe dans la couche externe au sein de chaque toron interne va de 9° à 25°. Avantageusement, les N fils externes de chaque toron interne sont assemblés au sein de chaque toron interne à un pas p3 allant de 10 à 40 mm.

- Dans le cas où Q'>1, l'angle d'hélice β' de chaque fil interne dans la couche interne au sein de chaque toron externe va de 4° à 20°. Avantageusement, les Q' fils internes de chaque toron externe sont assemblés au sein de chaque toron externe à un pas p1' allant de 5 à 15 mm.

- Dans le cas où Q'=1, l'angle d'hélice δ' de chaque fil intermédiaire dans la couche intermédiaire au sein de chaque toron externe va de 6° à 22°. Avantageusement, les P' fils intermédiaires de chaque toron externe sont assemblés au sein de chaque toron externe à un pas p2' allant de 5 à 20 mm.

- Dans le cas où Q'>1, l'angle d'hélice δ' de chaque fil intermédiaire dans la couche intermédiaire au sein de chaque toron externe va de 8° à 22°. Avantageusement, les P' fils intermédiaires de chaque toron externe sont assemblés au sein de chaque toron externe à un pas p2' allant de 10 à 20 mm.

- Dans le cas où Q'=1, l'angle d'hélice $\gamma$' de chaque fil externe dans la couche externe au sein de chaque toron externe va de 7° à 22°. Avantageusement, les N' fils externes de chaque toron externe sont assemblés au sein de chaque toron externe à un pas p3' allant de 10 à 40 mm
- Dans le cas où Q'>1, l'angle d'hélice $\gamma$' de chaque fil externe dans la couche externe au sein de chaque toron externe va de 9° à 25°. Avantageusement, les N' fils externes de chaque toron externe sont assemblés au sein de chaque toron externe à un pas p3' allant de 10 à 40 mm.
- Dans la variante particulière :

  i. si Q>1, $\beta$ va de 7° à 17° et p1 va de 1 à 10 mm,
  ii. $\delta$ va de 7° à 17° et p2 va de 2 à 20 mm,
  iii. $\gamma$ va de 7° à 17° et p3 va de 4 à 40 mm,
  iv. si Q'>1, $\beta$' va de 10° à 20° et p1' va de 1 à 10 mm,
  v. $\delta$' va de 10° à 20° et p2' va de 2 à 20 mm,
  vi. $\gamma$' va de 10° à 20° et p3' va de 4 à 40 mm.

Dans un mode de réalisation utilisant des torons internes à deux couches et des torons externes à trois couches :

- Dans le cas où Q>1, l'angle d'hélice $\beta$ de chaque fil interne dans la couche interne au sein de chaque toron interne va de 4° à 17°. Avantageusement, dans le cas où Q>1, les Q fils internes de chaque toron interne sont assemblés au sein de chaque toron interne à un pas p1 allant de 5 à 20 mm.
- Dans le cas où Q>1, l'angle d'hélice $\gamma$ de chaque fil externe dans la couche externe au sein de chaque toron interne va de 7° à 20°. Avantageusement, les N fils externes de chaque toron interne sont assemblés au sein de chaque toron interne à un pas p2 allant de 5 à 40 mm.
- Dans le cas où Q=1, l'angle d'hélice $\gamma$ de chaque fil externe dans la couche externe au sein de chaque toron interne va de 5° à 26°. Avantageusement, les N fils externes de chaque toron interne sont assemblés au sein de chaque toron interne à un pas p2 allant de 5 à 30 mm.
- Dans le cas où Q'>1, l'angle d'hélice $\beta$' de chaque fil interne dans la couche interne au sein de chaque toron externe va de 4° à 20°. Avantageusement, les Q' fils internes de chaque toron externe sont assemblés au sein de chaque toron externe à un pas p1' allant de 5 à 15 mm.
- Dans le cas où Q'=1, l'angle d'hélice $\delta$' de chaque fil intermédiaire dans la couche intermédiaire au sein de chaque toron externe va de 6° à 22°. Avantageusement, les P' fils intermédiaires de chaque toron externe sont assemblés au sein de chaque toron externe à un pas p2' allant de 5 à 20 mm.
- Dans le cas où Q'>1, l'angle d'hélice $\delta$' de chaque fil intermédiaire dans la couche intermédiaire au sein de chaque toron externe va de 8° à 22°. Avantageusement, les P' fils intermédiaires de chaque toron externe sont assemblés au sein de chaque toron externe à un pas p2' allant de 10 à 20 mm.
- Dans le cas où Q'=1, l'angle d'hélice $\gamma$' de chaque fil externe dans la couche externe au sein de chaque toron externe va de 7° à 22°. Avantageusement, les N' fils externes de chaque toron externe sont assemblés au sein de chaque toron externe à un pas p3' allant de 10 à 40 mm.
- Dans le cas où Q'>1, l'angle d'hélice $\gamma$' de chaque fil externe dans la couche externe au sein de chaque toron externe va de 9° à 25°. Avantageusement, les N' fils externes de chaque toron externe sont assemblés au sein de chaque toron externe à un pas p3' allant de 10 à 40 mm.
- Dans la variante particulière :

  i. Si Q>1, $\beta$ va de 7° à 17° et p1 va de 2 à 20 mm,
  ii. $\gamma$ va de 7° à 17° et p2 va de 4 à 40 mm,
  iii. Si Q'>1, $\beta$' va de 10° à 20° et p1' va de 1 à 10 mm,
  iv. $\delta$' va de 10° à 20° et p2' va de 2 à 20 mm,
  v. $\gamma$' va de 10° à 20° et p3' va de 4 à 40 mm.

Dans un mode de réalisation utilisant des torons internes à trois couches et des torons externes à deux couches :

- Dans le cas où Q>1, l'angle d'hélice $\beta$ de chaque fil interne dans la couche interne au sein de chaque toron interne va de 4° à 17°. Avantageusement, dans le cas où Q>1, les Q fils internes de chaque toron interne sont assemblés au sein de chaque toron interne à un pas p1 allant de 5 à 15 mm.
- Dans le cas où Q=1, l'angle d'hélice $\delta$ de chaque fil intermédiaire dans la couche intermédiaire au sein de chaque toron interne va de 6° à 30°. Avantageusement, les P fils intermédiaires de chaque toron interne sont assemblés au sein de chaque toron interne à un pas p2 allant de 5 à 20 mm.
- Dans le cas où Q>1, l'angle d'hélice $\delta$ de chaque fil intermédiaire dans la couche intermédiaire au sein de chaque toron interne va de 8° à 22°. Avantageusement, les P fils intermédiaires de chaque toron interne sont assemblés au sein de chaque toron interne à un pas p2 allant de 10 à 20 mm.

- Dans le cas où Q=1, l'angle d'hélice $\gamma$ de chaque fil externe dans la couche externe au sein de chaque toron interne va de 7° à 30°. Avantageusement, les N fils externes de chaque toron interne sont assemblés au sein de chaque toron interne à un pas p3 allant de 10 à 40 mm.

- Dans le cas où Q>1, l'angle d'hélice $\gamma$ de chaque fil externe dans la couche externe au sein de chaque toron interne va de 9° à 25°. Avantageusement, les N fils externes de chaque toron interne sont assemblés au sein de chaque toron interne à un pas p3 allant de 10 à 40 mm.

- Dans le cas où Q'>1, l'angle d'hélice $\beta'$ de chaque fil interne dans la couche interne au sein de chaque toron externe va de 4° à 17°. Avantageusement, les Q' fils internes de chaque toron externe sont assemblés au sein de chaque toron externe à un pas p1' allant de 5 à 20 mm. Dans le cas où Q'>1, l'angle d'hélice $\gamma'$ de chaque fil externe dans la couche externe au sein de chaque toron externe va de 7° à 20°. Avantageusement, les N' fils externes de chaque toron externe sont assemblés au sein de chaque toron externe à un pas p2' allant de 5 à 40 mm.

- Dans le cas où Q'=1, l'angle d'hélice $\gamma'$ de chaque fil externe dans la couche externe au sein de chaque toron externe va de 5° à 26°. Avantageusement, les N' fils externes de chaque toron externe sont assemblés au sein de chaque toron externe à un pas p2' allant de 5 à 30 mm.

- Dans la variante particulière :

   i. Si Q>1, $\beta$ va de 7° à 17° et p1 va de 1 à 10 mm,
   ii. $\delta$ va de 7° à 17° et p2 va de 2 à 20 mm,
   iii. $\gamma$ va de 7° à 17° et p3 va de 4 à 40 mm,
   iv. Si Q'>1, $\beta'$ va de 7° à 17° et p1' va de 2 à 20 mm,
   v. $\gamma'$ va de 7° à 17° et p2' va de 4 à 40 mm.

Pour des diamètres de fils utilisés identiques ou proches, les angles ainsi définis permettent de définir structurellement la couche interne du câble et les torons internes de cette couche afin d'obtenir un câble conforme à l'invention facile à fabriquer industriellement en jouant uniquement sur les angles des fils des couches. De plus, les pas p1, p1', p2, p2' et p3, p3' dans ces plages préférentielles permettent d'obtenir un câble présentant des propriétés mécaniques compatibles avec un usage pneumatique, un coût et une masse linéique du câble relativement faible.

## Câbles à très bas module de l'invention

Dans un mode de réalisation, le câble présente un module très bas, c'est-à-dire 50 GPa $\leq$ EC $\leq$ 89 GPa. Dans ce mode de réalisation, on privilégie la capacité du câble à épouser les obstacles rencontrés par rapport à la capacité du câble à conférer une directionalité élevée du pneumatique.

Dans des variantes préférées de câbles à très bas module, 25 GPa $\leq$ EI $\leq$ 180 GPa, de préférence 36 GPa $\leq$ EI $\leq$ 175 GPa. Dans la variante particulière, 25 GPa $\leq$ EI $\leq$ 175 GPa.

Dans une première variante dans laquelle la couche interne du câble à très bas module présente un module relativement faible, 25 GPa $\leq$ EI $\leq$ 94 GPa, de préférence 36 GPa $\leq$ EI $\leq$ 94 GPa. Dans la variante particulière, 25 GPa $\leq$ EI $\leq$ 102 GPa. Comme expliqué ci-dessus, on maximise ici la force à rupture du câble en utilisant un module de la couche interne relativement faible.

Dans une deuxième variante dans laquelle la couche interne du câble à très bas module présente un module plus élevé, 95 GPa $\leq$ EI $\leq$ 180 GPa, de préférence 95 GPa $\leq$ EI $\leq$ 175 GPa. Dans la variante particulière, 103 GPa $\leq$ EI $\leq$ 175 GPa. Du fait du très bas module du câble, une valeur relativement élevée du module de la couche interne entraine une valeur relativement faible du module de la couche externe et donc une excellente résistance aux coupures du câble.

Dans un mode de réalisation dans lequel la couche interne du câble et le câble à très bas module présentent des modules relativement proches, 0,60 $\leq$ EC/EI $\leq$ 1,20. Dans cette variante, les inventeurs émettent l'hypothèse que l'âme et la couche travaillent sensiblement ensemble lorsque le câble à très bas module est sollicité, notamment en traction. Ainsi, on maximise le compromis entre force à rupture du câble et résistance aux coupures.

Dans un mode de réalisation dans lequel les couches interne et externe du câble à très bas module présentent des modules relativement différents, EC/EI $\leq$ 0,59 ou 1,21 $\leq$ EC/EI.

Dans une variante, la couche interne du câble à très bas module présente un module relativement élevé par rapport au module de la couche externe du câble à très bas module, c'est-à-dire EC/EI $\leq$ 0,59, de préférence 0,40 $\leq$ EC/EI $\leq$ 0,59. Dans cette variante, on favorise la résistance aux coupures du câble par rapport à sa force à rupture.

Dans une autre variante, la couche interne du câble à très bas module présente un module relativement petit par rapport au module de la couche externe du câble à très bas module, c'est-à-dire 1,21 $\leq$ EC/EI, de préférence 1,21 $\leq$ EC/EI $\leq$ 3,00. Dans cette variante, on favorise la force à rupture du câble par rapport à sa résistance aux coupures.

Dans des variantes préférées de l'invention, les câbles à très bas module présentent les caractéristiques structurelles avantageuses suivantes.

Dans des variantes préférées de l'invention, les câbles à très bas module présentent les caractéristiques structurelles avantageuses suivantes.

Dans un mode de réalisation préféré, l'angle d'hélice $\alpha$ de chaque toron interne dans la couche interne du câble va :

- de 3° à 42° dans un mode de réalisation utilisant des torons internes et des torons externes à deux couches,
- de 6° à 41° dans un mode de réalisation utilisant des torons internes et des torons externes à trois couches,
- de 5° à 36° dans un mode de réalisation utilisant des torons internes à deux couches et des torons externes à trois couches,
- de 4° à 36° dans un mode de réalisation utilisant des torons internes à trois couches et des torons externes à deux couches.

Dans la variante particulière, l'angle d'hélice $\alpha$ de chaque toron interne dans la couche interne du câble va de 9° à 42°.

Dans un mode de réalisation préféré, l'angle d'hélice $\alpha'$ de chaque toron externe dans la couche externe du câble va :

- de 13° à 38° dans un mode de réalisation utilisant des torons internes et des torons externes à deux couches,
- de 18° à 36° dans un mode de réalisation utilisant des torons internes et des torons externes à trois couches,
- de 14° à 34° dans un mode de réalisation utilisant des torons internes à deux couches et des torons externes à trois couches,
- de 13° à 32° dans un mode de réalisation utilisant des torons internes à trois couches et des torons externes à deux couches.

Dans la variante particulière, l'angle d'hélice $\alpha$ de chaque toron interne dans la couche interne du câble va de 13° à 32°.

Dans la variante particulière utilisant des torons internes à deux couches, $29° \leq 2\alpha + \beta + \gamma \leq 136°$.

Dans la variante particulière utilisant des torons internes à trois couches, $50° \leq 3\alpha + \beta + \delta + \gamma \leq 80°$.

Dans la variante particulière utilisant des torons externes à deux couches, $42° \leq 2\alpha' + \beta' + \gamma' \leq 90°$.

Dans la variante particulière utilisant des torons externes à trois couches, $65° \leq 3\alpha' + \beta' + \delta' + \gamma' \leq 95°$.

Dans le mode de réalisation utilisant des torons internes et des torons externes à deux couches, $16° \leq 2\alpha + \beta + \gamma \leq 110°$, et

• dans un mode de réalisation dans lequel Q=1, on a avantageusement $16° \leq 2\alpha + \beta + \gamma \leq 74°$, et

• dans un mode de réalisation dans lequel Q>1, on a avantageusement $23° \leq 2\alpha + \beta + \gamma \leq 110°$.

Dans un mode de réalisation utilisant des torons internes et des torons externes à trois couches, $29° \leq 3\alpha + \beta + \delta + \gamma \leq 158°$, et

• dans un mode de réalisation dans lequel Q=1, on a avantageusement $29° \leq 3\alpha + \beta + \delta + \gamma \leq 140°$, et

• dans un mode de réalisation dans lequel Q>1, on a avantageusement $42° \leq 3\alpha + \beta + \delta + \gamma \leq 158°$.

Dans un mode de réalisation utilisant des torons internes à deux couches et des torons externes à trois couches, $20° \leq 2\alpha + \beta + \gamma \leq 105°$, et

• dans un mode de réalisation dans lequel Q=1, on a avantageusement $20° \leq 2\alpha + \beta + \gamma \leq 86°$, et

• dans un mode de réalisation dans lequel Q>1, on a avantageusement $27° \leq 2\alpha + \beta + \gamma \leq 105°$.

Dans un mode de réalisation utilisant des torons internes à trois couches et des torons externes à deux couches, $35° \leq 3\alpha + \beta + \delta + \gamma \leq 162°$, et

• dans un mode de réalisation dans lequel Q=1, on a avantageusement $35° \leq 3\alpha + \beta + \delta + \gamma \leq 140°$, et
• dans un mode de réalisation dans lequel Q>1, on a avantageusement $36° \leq 3\alpha + \beta + \delta + \gamma \leq 162°$.

Dans le mode de réalisation utilisant des torons internes et des torons externes à deux couches, $43° \leq 2\alpha' + \beta' + \gamma' \leq 97°$, et

- dans un mode de réalisation dans lequel Q'=1, on a avantageusement $47° \leq 2\alpha' + \beta' + \gamma' \leq 85°$, et

- dans un mode de réalisation dans lequel Q'>1, on a avantageusement $43° \leq 2\alpha' + \beta' + \gamma' \leq 97°$.

Dans un mode de réalisation utilisant des torons internes et des torons externes à trois couches, $65° \leq 3\alpha' + \beta' + \delta' + \gamma' \leq 153°$, et

- dans un mode de réalisation dans lequel Q'=1, on a avantageusement $65° \leq 3\alpha' + \beta' + \delta' + \gamma' \leq 143°$, et

- dans un mode de réalisation dans lequel Q'>1, on a avantageusement $78° \leq 3\alpha' + \beta' + \delta' + \gamma' \leq 153°$.

Dans un mode de réalisation utilisant des torons internes à deux couches et des torons externes à trois couches, $66° \leq 3\alpha' + \beta' + \delta' + \gamma' \leq 147°$, et

- dans un mode de réalisation dans lequel Q'=1, on a avantageusement $66° \leq 3\alpha' + \beta' + \delta' + \gamma' \leq 147°$, et
- dans un mode de réalisation dans lequel Q'>1, on a avantageusement $75° \leq 3\alpha' + \beta' + \delta' + \gamma' \leq 140°$.

Dans un mode de réalisation utilisant des torons internes à trois couches et des torons externes à deux couches, $34° \leq 2\alpha' + \beta' + \gamma' \leq 96°$, et

- dans un mode de réalisation dans lequel Q'=1, on a avantageusement $34° \leq 2\alpha' + \beta' + \gamma' \leq 86°$, et

- dans un mode de réalisation dans lequel Q'>1, on a avantageusement $42° \leq 2\alpha' + \beta' + \gamma' \leq 96°$.

Dans un mode de réalisation utilisant des torons internes et des torons externes à deux couches, $85° \leq 2\alpha + \beta + \gamma + 2\alpha' + \beta' + \gamma' \leq 184°$. Dans un mode de réalisation dans lequel Q=1 et Q'=1, on a avantageusement $85° \leq 2\alpha + \beta + \gamma + 2\alpha' + \beta' + \gamma' \leq 145°$. Dans un mode de réalisation dans lequel Q>1, Q'=1, on a avantageusement $108° \leq 2\alpha + \beta + \gamma + 2\alpha' + \beta' + \gamma' \leq 154°$. Dans un mode de réalisation dans lequel Q=1 et Q'>1, on a avantageusement $90° \leq 2\alpha + \beta + \gamma + 2\alpha' + \beta' + \gamma' \leq 151°$. Dans un mode de réalisation dans lequel Q>1, Q'>1, on a avantageusement $110° \leq 2\alpha + \beta + \gamma + 2\alpha' + \beta' + \gamma' \leq 184°$. Dans la variante particulière, $109° \leq 20 + \beta + \gamma + 2\alpha' + \beta' + \gamma' \leq 195°$.

Dans un mode de réalisation utilisant des torons internes et des torons externes à trois couches, $138° \leq 3\alpha + \beta + \delta + \gamma + 3\alpha' + \beta' + \delta' + \gamma' \leq 280°$. Dans un mode de réalisation dans lequel Q=1 et Q'=1, on a avantageusement $138° \leq 3\alpha + \beta + \delta + \gamma + 3\alpha' + \beta' + \delta' + \gamma' \leq 246°$. Dans un mode de réalisation dans lequel Q>1, Q'=1, on a avantageusement $144° \leq 3\alpha + \beta + \delta + \gamma + 3\alpha' + \beta' + \delta' + \gamma' \leq 261°$. Dans un mode de réalisation dans lequel Q=1 et Q'>1, on a avantageusement $148° \leq 3\alpha + \beta + \delta + \gamma + 3\alpha' + \beta' + \delta' + \gamma' \leq 254°$. Dans un mode de réalisation dans lequel Q>1, Q'>1, on a avantageusement $144° \leq 3\alpha + \beta + \delta + \gamma + 3\alpha' + \beta' + \delta' + \gamma' \leq 280°$. Dans la variante particulière, $130° \leq 3\alpha + \beta + \delta + \gamma + 3\alpha' + \beta' + \delta' + \gamma' \leq 170°$.

Dans un mode de réalisation utilisant des torons internes à deux couches et des torons externes à trois couches, $146° \leq 2\alpha + \beta + \gamma + 3\alpha' + \beta' + \delta' + \gamma' \leq 226°$. Dans un mode de réalisation dans lequel Q=1 et Q'=1, on a avantageusement $134° \leq 2\alpha + \beta + \gamma + 3\alpha' + \beta' + \delta' + \gamma' \leq 199°$. Dans un mode de réalisation dans lequel Q>1, Q'=1, on a avantageusement $130° \leq 2\alpha + \beta + \gamma + 3\alpha' + \beta' + \delta' + \gamma' \leq 206°$. Dans un mode de réalisation dans lequel Q=1 et Q'>1, on a avantageusement $152° \leq 2\alpha + \beta + \gamma + 3\alpha' + \beta' + \delta' + \gamma' \leq 214°$. Dans un mode de réalisation dans lequel Q>1, Q'>1, on a avantageusement $146° \leq 2\alpha + \beta + \gamma + 3\alpha' + \beta' + \delta' + \gamma' \leq 226°$. Dans la variante particulière, $110° \leq 2\alpha + \beta + \gamma + 3\alpha' + \beta' + \delta' + \gamma' \leq 150°$.

Dans un mode de réalisation utilisant des torons internes à trois couches et des torons externes à deux couches, $100° \leq 3\alpha + \beta + \delta + \gamma + 2\alpha' + \beta' + \gamma' \leq 224°$. Dans un mode de réalisation dans lequel Q=1 et Q'=1, on a avantageusement $100° \leq 3\alpha + \beta + \delta + \gamma + 2\alpha' + \beta' + \gamma' \leq 200°$. Dans un mode de réalisation dans lequel Q>1, Q'=1, on a avantageusement $104° \leq 3\alpha + \beta + \delta + \gamma + 2\alpha' + \beta' + \gamma' \leq 212°$. Dans un mode de réalisation dans lequel Q=1 et Q'>1, on a avantageusement $117° \leq 3\alpha + \beta + \delta + \gamma + 2\alpha' + \beta' + \gamma' \leq 220°$. Dans un mode de réalisation dans lequel Q>1, Q'>1, on a avantageusement $121° \leq 3\alpha + \beta + \delta + \gamma + 2\alpha' + \beta' + \gamma' \leq 224°$. Dans la variante particulière, $110° \leq 3\alpha + \beta + \delta + \gamma + 2\alpha' + \beta' + \gamma' \leq 150°$.

Pour des diamètres de fils utilisés identiques ou proches, les angles ainsi définis permettent de définir structurellement la couche interne du câble et les torons internes de cette couche afin d'obtenir un câble conforme à l'invention facile à fabriquer industriellement en jouant uniquement sur les angles des fils des couches. De plus, les pas p1, p1', p2, p2' et p3, p3' dans ces plages préférentielles permettent d'obtenir un câble présentant des propriétés mécaniques compatibles avec un usage pneumatique, un coût et une masse linéique du câble relativement faible.

Les valeurs des angles d'hélice $\beta$, $\gamma$, $\delta$, $\beta'$, $\gamma'$, $\delta'$, ainsi que celles des pas p1, p2, p3, p1', p2', p3' permettant d'obtenir des câbles à très bas module sont identiques à celles déjà décrites ci-dessus.

**Câbles à bas module de l'invention**

Dans un autre mode de réalisation, le câble présente un module bas, c'est-à-dire 90 GPa ≤ EC ≤ 130 GPa. Dans ce mode de réalisation, on adopte un compromis équilibré entre la capacité du câble à épouser les obstacles rencontrés et la capacité du câble à conférer une directionalité élevée du pneumatique.

Dans des variantes préférées de câbles à bas module, 25 GPa ≤ EI ≤ 180 GPa, de préférence 64 GPa ≤ EI ≤ 180 GPa. Dans la variante préférée, 35 GPa ≤ EI ≤ 175 GPa.

Dans une première variante dans laquelle la couche interne du câble à bas module présente un module relativement faible, 25 GPa ≤ EI ≤ 94 GPa, de préférence, 64 GPa ≤ EI ≤ 94 GPa. Dans la variante particulière, 35 GPa ≤ EI ≤ 102 GPa. Comme expliqué ci-dessus, on maximise ici la force à rupture du câble en utilisant un module de la couche interne relativement faible.

Dans une deuxième variante dans laquelle la couche interne du câble à bas module présente un module plus élevé, 95 GPa ≤ EI ≤ 180 GPa. Dans la variante particulière, 103 GPa ≤ EI ≤ 175 GPa.

Dans un mode de réalisation dans lequel la couche interne du câble et le câble à bas module présentent des modules relativement proches, 0,60 ≤ EC/EI ≤ 1,20. Dans cette variante, les inventeurs émettent l'hypothèse que l'âme et la couche travaillent sensiblement ensemble lorsque le câble à bas module est sollicité, notamment en traction. Ainsi, on maximise le compromis entre force à rupture du câble et résistance aux coupures.

Dans un mode de réalisation dans lequel les couches interne et externe du câble à bas module présentent des modules relativement différents, EC/EI ≤ 0,59 ou 1,21 ≤ EC/EI.

Dans une variante, la couche interne du câble à bas module présente un module relativement élevé par rapport au module de la couche externe du câble à bas module, c'est-à-dire EC/EI ≤ 0,59, de préférence 0,40 ≤ EC/EI ≤ 0,59. Dans cette variante, on favorise la résistance aux coupures du câble par rapport à sa force à rupture.

Dans une autre variante, la couche interne du câble à bas module présente un module relativement petit par rapport au module de la couche externe du câble à bas module, c'est-à-dire 1,21 ≤ EC/EI, de préférence 1,21 ≤ EC/EI ≤ 2,82. Dans cette variante, on favorise la force à rupture du câble par rapport à sa résistance aux coupures.

Dans des variantes préférées de l'invention, les câbles à très bas module présentent les caractéristiques structurelles avantageuses suivantes.

Dans un mode de réalisation préféré, l'angle d'hélice α de chaque toron interne dans la couche interne du câble va :

- de 3° à 36° dans un mode de réalisation utilisant des torons internes et des torons externes à deux couches,
- de 4° à 31° dans un mode de réalisation utilisant des torons internes et des torons externes à trois couches,
- de 3° à 31° dans un mode de réalisation utilisant des torons internes à deux couches et des torons externes à trois couches,
- de 4° à 27° dans un mode de réalisation utilisant des torons internes à trois couches et des torons externes à deux couches.

Dans la variante particulière, l'angle d'hélice α de chaque toron interne dans la couche interne du câble va de 5° à 36°.

Dans un mode de réalisation préféré, l'angle d'hélice α' de chaque toron externe dans la couche externe du câble va :

- de 9° à 27° dans un mode de réalisation utilisant des torons internes et des torons externes à deux couches,
- de 13° à 32° dans un mode de réalisation utilisant des torons internes et des torons externes à trois couches,
- de 10° à 31° dans un mode de réalisation utilisant des torons internes à deux couches et des torons externes à trois couches,
- de 11° à 31° dans un mode de réalisation utilisant des torons internes à trois couches et des torons externes à deux couches.

Dans la variante particulière, l'angle d'hélice α de chaque toron interne dans la couche interne du câble va de 10° à 25°.

Dans la variante particulière utilisant des torons internes à deux couches, 27° ≤ 2α + β + γ ≤ 108°.

Dans la variante particulière utilisant des torons internes à trois couches, 50° ≤ 3α + β + δ + γ ≤ 80°.

Dans la variante particulière utilisant des torons externes à deux couches, 39° ≤ 2α' + β' + γ' ≤ 65°.

Dans la variante particulière utilisant des torons externes à trois couches, 65° ≤ 3α' + β' + δ' + γ' ≤ 95°.

Dans le mode de réalisation utilisant des torons internes et des torons externes à deux couches, 13° ≤ 2α + β + γ ≤ 110°, et

  ∘ dans un mode de réalisation dans lequel Q=1, on a avantageusement 13° ≤ 2α + β + γ ≤ 74°, et
  ∘ dans un mode de réalisation dans lequel Q>1, on a avantageusement 16° ≤ 2α + β + γ ≤ 110°.

Dans un mode de réalisation utilisant des torons internes et des torons externes à trois couches, $25° \leq 3\alpha + \beta + \delta + \gamma \leq 125°$, et

○ dans un mode de réalisation dans lequel Q=1, on a avantageusement $25° \leq 3\alpha + \beta + \delta + \gamma \leq 120°$, et

○ dans un mode de réalisation dans lequel Q>1, on a avantageusement $36° \leq 3\alpha + \beta + \delta + \gamma \leq 125°$.

Dans un mode de réalisation utilisant des torons internes à deux couches et des torons externes à trois couches, $16° \leq 2\alpha + \beta + \gamma \leq 86°$, et

○ dans un mode de réalisation dans lequel Q=1, on a avantageusement $16° \leq 2\alpha + \beta + \gamma \leq 86°$, et
○ dans un mode de réalisation dans lequel Q>1, on a avantageusement $19° \leq 2\alpha + \beta + \gamma \leq 85°$.

Dans un mode de réalisation utilisant des torons internes à trois couches et des torons externes à deux couches, $26° \leq 3\alpha + \beta + \delta + \gamma \leq 128°$, et

○ dans un mode de réalisation dans lequel Q=1, on a avantageusement $26° \leq 3\alpha + \beta + \delta + \gamma \leq 113°$, et

○ dans un mode de réalisation dans lequel Q>1, on a avantageusement $36° \leq 3\alpha + \beta + \delta + \gamma \leq 128°$.

Dans le mode de réalisation utilisant des torons internes et des torons externes à deux couches, $31° \leq 2\alpha' + \beta' + \gamma' \leq 71°$, et

○ dans un mode de réalisation dans lequel Q'=1, on a avantageusement $31° \leq 2\alpha' + \beta' + \gamma' \leq 66°$, et
○ dans un mode de réalisation dans lequel Q'>1, on a avantageusement $39° \leq 2\alpha' + \beta' + \gamma' \leq 71°$.

Dans un mode de réalisation utilisant des torons internes et des torons externes à trois couches, $54° \leq 3\alpha' + \beta' + \delta' + \gamma' \leq 123°$, et

○ dans un mode de réalisation dans lequel Q'=1, on a avantageusement $54° \leq 3\alpha' + \beta' + \delta' + \gamma' \leq 118°$, et
○ dans un mode de réalisation dans lequel Q'>1, on a avantageusement $65° \leq 3\alpha' + \beta' + \delta' + \gamma' \leq 123°$

Dans un mode de réalisation utilisant des torons internes à deux couches et des torons externes à trois couches, $54° \leq 3\alpha' + \beta' + \delta' + \gamma' \leq 125°$, et

○ dans un mode de réalisation dans lequel Q'=1, on a avantageusement $54° \leq 3\alpha' + \beta' + \delta' + \gamma' \leq 120°$, et
○ dans un mode de réalisation dans lequel Q'>1, on a avantageusement $64° \leq 3\alpha' + \beta' + \delta' + \gamma' \leq 125°$.

Dans un mode de réalisation utilisant des torons internes à trois couches et des torons externes à deux couches, $28° \leq 2\alpha' + \beta' + \gamma' \leq 89°$, et

○ dans un mode de réalisation dans lequel Q'=1, on a avantageusement $28° \leq 2\alpha' + \beta' + \gamma' \leq 85°$, et
○ dans un mode de réalisation dans lequel Q'>1, on a avantageusement $36° \leq 2\alpha' + \beta' + \gamma' \leq 89°$.

Dans un mode de réalisation utilisant des torons internes et des torons externes à deux couches, $65° \leq 2\alpha + \beta + \gamma + 2\alpha' + \beta' + \gamma' \leq 153°$. Dans un mode de réalisation dans lequel Q=1 et Q'=1, on a avantageusement $65° \leq 2\alpha + \beta + \gamma + 2\alpha' + \beta' + \gamma' \leq 117°$. Dans un mode de réalisation dans lequel Q>1, Q'=1, on a avantageusement $72° \leq 2\alpha + \beta + \gamma + 2\alpha' + \beta' + \gamma° \leq 133°$. Dans un mode de réalisation dans lequel Q=1 et Q'>1, on a avantageusement $81° \leq 2\alpha + \beta + \gamma + 2\alpha' + \beta' + \gamma' \leq 130°$. Dans un mode de réalisation dans lequel Q>1, Q'>1, on a avantageusement $79° \leq 2\alpha + \beta + \gamma + 2\alpha' + \beta' + \gamma' \leq 153°$. Dans la variante particulière, $82° \leq 2\alpha + \beta + \gamma + 2\alpha' + \beta' + \gamma' \leq 153°$.

Dans un mode de réalisation utilisant des torons internes et des torons externes à trois couches, $107° \leq 3\alpha + \beta + \delta + \gamma + 3\alpha' + \beta' + \delta' + \gamma° \leq 211°$. Dans un mode de réalisation dans lequel Q=1 et Q'=1, on a avantageusement $107° \leq 3\alpha + \beta + \delta + \gamma + 3\alpha' + \beta' + \delta' + \gamma' \leq 197°$. Dans un mode de réalisation dans lequel Q>1, Q'=1, on a avantageusement $113° \leq 3\alpha + \beta + \delta + \gamma + 3\alpha' + \beta' + \delta' + \gamma' \leq 206°$. Dans un mode de réalisation dans lequel Q=1 et Q'>1, on a avantageusement $115° \leq 3\alpha + \beta + \delta + \gamma + 3\alpha' + \beta' + \delta' + \gamma' \leq 202°$. Dans un mode de réalisation dans lequel Q>1, Q'>1, on a avantageusement $120° \leq 3\alpha + \beta + \delta + \gamma + 3\alpha' + \beta' + \delta' + \gamma' \leq 211°$. Dans la variante particulière, $130° \leq 3\alpha + \beta + \delta + \gamma + 3\alpha° + \beta' + \delta' + \gamma' \leq 170°$.

Dans un mode de réalisation utilisant des torons internes à deux couches et des torons externes à trois couches, $87° \leq 2\alpha + \beta + \gamma + 3\alpha' + \beta' + \delta' + \gamma' \leq 172°$. Dans un mode de réalisation dans lequel Q=1 et Q'=1, on a avantageusement $87° \leq$

$2\alpha + \beta + \gamma + 3\alpha' + \beta' + \delta' + \gamma' \leq 160°$. Dans un mode de réalisation dans lequel Q>1, Q'=1, on a avantageusement $90° \leq 2\alpha + \beta + \gamma + 3\alpha' + \beta' + \delta' + \gamma' \leq 165°$. Dans un mode de réalisation dans lequel Q=1 et Q'>1, on a avantageusement $111° \leq 2\alpha + \beta + \gamma + 3\alpha' + \beta' + \delta' + \gamma' \leq 166°$. Dans un mode de réalisation dans lequel Q>1, Q'>1, on a avantageusement $111° \leq 2\alpha + \beta + \gamma + 3\alpha' + \beta' + \delta' + \gamma' \leq 172°$. Dans la variante particulière, $110° \leq 2\alpha + \beta + \gamma + 3\alpha' + \beta' + \delta' + \gamma' \leq 150°$.

Dans un mode de réalisation utilisant des torons internes à trois couches et des torons externes à deux couches, $74° \leq 3\alpha + \beta + \delta + \gamma + 2\alpha' + \beta' + \gamma' \leq 183°$. Dans un mode de réalisation dans lequel Q=1 et Q'=1, on a avantageusement $74° \leq 3\alpha + \beta + \delta + \gamma + 2\alpha' + \beta' + \gamma' \leq 158°$. Dans un mode de réalisation dans lequel Q>1, Q'=1, on a avantageusement $86° \leq 3\alpha + \beta + \delta + \gamma + 2\alpha' + \beta' + \gamma' \leq 168°$. Dans un mode de réalisation dans lequel Q=1 et Q'>1, on a avantageusement $84° \leq 3\alpha + \beta + \delta + \gamma + 2\alpha' + \beta' + \gamma' \leq 168°$. Dans un mode de réalisation dans lequel Q>1, Q'>1, on a avantageusement $94° \leq 3\alpha + \beta + \delta + \gamma + 2\alpha' + \beta' + \gamma' \leq 183°$. Dans la variante particulière, $110° \leq 3\alpha + \beta + \delta + \gamma + 2\alpha' + \beta' + \gamma' \leq 150°$.

Pour des diamètres de fils utilisés identiques ou proches, les angles ainsi définis permettent de définir structurellement la couche interne du câble et les torons internes de cette couche afin d'obtenir un câble conforme à l'invention facile à fabriquer industriellement en jouant uniquement sur les angles des fils des couches. De plus, les pas p1, p1', p2, p2' et p3, p3' dans ces plages préférentielles permettent d'obtenir un câble présentant des propriétés mécaniques compatibles avec un usage pneumatique, un coût et une masse linéique du câble relativement faible.

Les valeurs des angles d'hélice $\beta$, $\gamma$, $\delta$, $\beta'$, $\gamma'$, $\delta'$, ainsi que celles des pas p1, p2, p3, p1', p2', p3' permettant d'obtenir des câbles à bas module sont identiques à celles déjà décrites ci-dessus.

## Câbles à moyen module de l'invention

Dans encore un autre mode de réalisation, le câble présente un module moyen, c'est-à-dire $131\ GPa \leq EC \leq 160\ GPa$. Dans ce mode de réalisation, on privilégie la capacité du câble à conférer une directionalité élevée du pneumatique par rapport à la capacité du câble à épouser les obstacles rencontrés.

Dans des variantes préférées de câbles à moyen module, $78\ GPa \leq EI \leq 180\ GPa$, de préférence $100\ GPa \leq EI \leq 180\ GPa$. Dans la variante préférée, $125\ GPa \leq EI \leq 180\ GPa$.

Dans une première variante dans laquelle la couche interne du câble à moyen module présente un module relativement faible, $78\ GPa \leq EI \leq 94\ GPa$. Comme expliqué ci-dessus, on maximise ici la force à rupture du câble en utilisant un module de la couche interne relativement faible.

Dans une deuxième variante dans laquelle la couche interne du câble à bas module présente un module plus élevé, $95\ GPa \leq EI \leq 180\ GPa$.

Dans un mode de réalisation dans lequel la couche interne du câble et le câble à moyen module présentent des modules relativement proches, $0,60 \leq EC/EI \leq 1,20$, de préférence $0,80 \leq EC/EI \leq 1,15$. Dans ce mode de réalisation, les inventeurs émettent l'hypothèse que l'âme et la couche travaillent sensiblement ensemble lorsque le câble à moyen module est sollicité, notamment en traction. Ainsi, on maximise le compromis entre force à rupture du câble et résistance aux coupures.

Dans un mode de réalisation dans lequel les couches interne et externe du câble à moyen module présentent des modules relativement différents, $EC/EI \leq 0,59$ ou $1,21 \leq EC/EI$.

Dans une variante, la couche interne du câble à moyen module présente un module relativement élevé par rapport au module de la couche externe du câble à moyen module, c'est-à-dire $EC/EI \leq 0,59$, de préférence $0,40 \leq EC/EI \leq 0,59$. Dans cette variante, on favorise la résistance aux coupures du câble par rapport à sa force à rupture.

Dans une autre variante, la couche interne du câble à moyen module présente un module relativement petit par rapport au module de la couche externe du câble à moyen module, c'est-à-dire $1,21 \leq EC/EI$, de préférence $1,21 \leq EC/EI \leq 3,00$. Dans cette variante, on favorise la force à rupture du câble par rapport à sa résistance aux coupures.

Dans des variantes préférées de l'invention, les câbles à moyen module présentent les caractéristiques structurelles avantageuses suivantes.

Dans un mode de réalisation préféré, l'angle d'hélice $\alpha$ de chaque toron interne dans la couche interne du câble va :

- de 3° à 24° dans un mode de réalisation utilisant des torons internes et des torons externes à deux couches,
- de 4° à 22° dans un mode de réalisation utilisant des torons internes et des torons externes à trois couches,
- de 3° à 20° dans un mode de réalisation utilisant des torons internes à deux couches et des torons externes à trois couches,
- de 4° à 23° dans un mode de réalisation utilisant des torons internes à trois couches et des torons externes à deux couches.

Dans la variante particulière, l'angle d'hélice $\alpha$ de chaque toron interne dans la couche interne du câble va de 5° à 19°.

Dans un mode de réalisation préféré, l'angle d'hélice $\alpha'$ de chaque toron externe dans la couche externe du câble va :

- de 11° à 20° dans un mode de réalisation utilisant des torons internes et des torons externes à deux couches,
- de 11° à 21° dans un mode de réalisation utilisant des torons internes et des torons externes à trois couches,
- de 10° à 22° dans un mode de réalisation utilisant des torons internes à deux couches et des torons externes à trois couches,
- de 10° à 27° dans un mode de réalisation utilisant des torons internes à trois couches et des torons externes à deux couches.

Dans la variante particulière, l'angle d'hélice $\alpha$' de chaque toron externe dans la couche externe du câble va de 11° à 20°.

Dans la variante particulière utilisant des torons internes à deux couches, $23° \leq 2\alpha + \beta + \gamma \leq 55°$.

Dans la variante particulière utilisant des torons internes à trois couches, $50° \leq 3\alpha + \beta + \delta + \gamma \leq 80°$.

Dans la variante particulière utilisant des torons externes à deux couches, $39° \leq 2\alpha' + \beta' + \gamma' \leq 57°$.

Dans la variante particulière utilisant des torons externes à trois couches, $65° \leq 3\alpha' + \beta' + \delta' + \gamma' \leq 95°$.

Dans le mode de réalisation utilisant des torons internes et des torons externes à deux couches, $11° \leq 2\alpha + \beta + y \leq 64°$, et

   ◦ dans un mode de réalisation dans lequel Q=1, on a avantageusement $11° \leq 2\alpha + \beta + \gamma \leq 64°$, et

   ◦ dans un mode de réalisation dans lequel Q>1, on a avantageusement $16° \leq 2\alpha + \beta + \gamma \leq 63°$.

Dans un mode de réalisation utilisant des torons internes et des torons externes à trois couches, $25° \leq 3\alpha + \beta + \gamma + \delta \leq 97°$, et

   ◦ dans un mode de réalisation dans lequel Q=1, on a avantageusement $25° \leq 3\alpha + \beta + y + \delta \leq 97°$, et

   ◦ dans un mode de réalisation dans lequel Q>1, on a avantageusement $36° \leq 3\alpha + \beta + \gamma + \delta \leq 97°$

Dans un mode de réalisation utilisant des torons internes à deux couches et des torons externes à trois couches, $16° \leq 2\alpha + \beta + \gamma \leq 68°$, et

   ◦ dans un mode de réalisation dans lequel Q=1, on a avantageusement $16° \leq 2\alpha + \beta + \gamma \leq 56°$, et
   ◦ dans un mode de réalisation dans lequel Q>1, on a avantageusement $20° \leq 2\alpha + \beta + \gamma \leq 68°$.

Dans un mode de réalisation utilisant des torons internes à trois couches et des torons externes à deux couches, $26° \leq 3\alpha + \beta + \gamma + \delta \leq 97°$, et

   ◦ dans un mode de réalisation dans lequel Q=1, on a avantageusement $26° \leq 3\alpha + \beta + \gamma + \delta \leq 86°$, et

   ◦ dans un mode de réalisation dans lequel Q>1, on a avantageusement $36° \leq 3\alpha + \beta + \gamma + \delta \leq 97°$.

Dans le mode de réalisation utilisant des torons internes et des torons externes à deux couches, $23° \leq 2\alpha' + \beta' + \gamma' \leq 58°$, et

   ◦ dans un mode de réalisation dans lequel Q'=1, on a avantageusement $23° \leq 2\alpha' + \beta' + \gamma' \leq 52°$, et
   ◦ dans un mode de réalisation dans lequel Q'>1, on a avantageusement $27° \leq 2\alpha' + \beta' + \gamma' \leq 58°$.

Dans un mode de réalisation utilisant des torons internes et des torons externes à trois couches, $48° \leq 3\alpha' + \beta' + \gamma' + \delta' \leq 89°$, et

   ◦ dans un mode de réalisation dans lequel Q'=1, on a avantageusement $48° \leq 3\alpha' + \beta' + \gamma' + \delta' \leq 81°$, et
   ◦ dans un mode de réalisation dans lequel Q'>1, on a avantageusement $61° \leq 3\alpha' + \beta' + \gamma' + \delta' \leq 89°$.

Dans un mode de réalisation utilisant des torons internes à deux couches et des torons externes à trois couches, $47° \leq 3\alpha' + \beta' + \gamma' + \delta' \leq 89°$, et

   ◦ dans un mode de réalisation dans lequel Q'=1, on a avantageusement $47° \leq 3\alpha' + \beta' + \gamma' + \delta' \leq 86°$, et
   ◦ dans un mode de réalisation dans lequel Q'>1, on a avantageusement $62° \leq 3\alpha' + \beta' + \gamma' + \delta' \leq 89°$.

Dans un mode de réalisation utilisant des torons internes à trois couches et des torons externes à deux couches,

$30° \leq 2\alpha' + \beta' + \gamma' \leq 64°$, et

- dans un mode de réalisation dans lequel Q'=1, on a avantageusement $30° \leq 2\alpha' + \beta' + \gamma' \leq 62°$, et
- dans un mode de réalisation dans lequel Q'>1, on a avantageusement $37° \leq 2\alpha' + \beta' + \gamma' \leq 64°$.

Dans un mode de réalisation utilisant des torons internes et des torons externes à deux couches, $45° \leq 2\alpha + \beta + \gamma + 2\alpha' + \beta' + \gamma' \leq 108°$. Dans un mode de réalisation dans lequel Q=1 et Q'=1, on a avantageusement $45° \leq 2\alpha + \beta + \gamma + 2\alpha' + \beta' + \gamma' \leq 95°$. Dans un mode de réalisation dans lequel Q>1, Q'=1, on a avantageusement $55° \leq 2\alpha + \beta + \gamma + 2\alpha' + \beta' + \gamma° \leq 95°$. Dans un mode de réalisation dans lequel Q=1 et Q'>1, on a avantageusement $56° \leq 2\alpha + \beta + \gamma + 2\alpha' + \beta' + \gamma' \leq 102°$. Dans un mode de réalisation dans lequel Q>1, Q'>1, on a avantageusement $60° \leq 2\alpha + \beta + \gamma + 2\alpha' + \beta' + \gamma' \leq 108°$. Dans la variante particulière, $73° \leq 2\alpha + \beta + \gamma + 2\alpha' + \beta' + \gamma' \leq 102°$.

Dans un mode de réalisation utilisant des torons internes et des torons externes à trois couches, $84° \leq 3\alpha + \beta + \gamma + \delta + 3\alpha' + \beta' + \gamma' + \delta' \leq 161°$. Dans un mode de réalisation dans lequel Q=1 et Q'=1, on a avantageusement $84° \leq 3\alpha + \beta + \gamma + \delta + 3\alpha' + \beta' + \gamma° + \delta' \leq 153°$. Dans un mode de réalisation dans lequel Q>1, Q'=1, on a avantageusement $94° \leq 3\alpha + \beta + \gamma + \delta + 3\alpha' + \beta' + \gamma' + \delta' \leq 151°$. Dans un mode de réalisation dans lequel Q=1 et Q'>1, on a avantageusement $88° \leq 3\alpha + \beta + \gamma + \delta + 3\alpha' + \beta' + \gamma' + \delta' \leq 153°$. Dans un mode de réalisation dans lequel Q>1, Q'>1, on a avantageusement $101° \leq 3\alpha + \beta + \gamma + \delta + 3\alpha' + \beta' + \gamma' + \delta' \leq 161°$. Dans la variante particulière, $130° \leq 3\alpha + \beta + \delta + \gamma + 3\alpha' + \beta' + \delta' + \gamma' \leq 170°$.

Dans un mode de réalisation utilisant des torons internes à deux couches et des torons externes à trois couches, $84° \leq 2\alpha + \beta + \gamma + 3\alpha' + \beta' + \gamma' + \delta' \leq 136°$. Dans un mode de réalisation dans lequel Q=1 et Q'=1, on a avantageusement $84° \leq 2\alpha + \beta + \gamma + 3\alpha' + \beta' + \gamma' + \delta' \leq 112°$. Dans un mode de réalisation dans lequel Q>1, Q'=1, on a avantageusement $88° \leq 2\alpha + \beta + \gamma + 3\alpha' + \beta' + \gamma' + \delta' \leq 124°$. Dans un mode de réalisation dans lequel Q=1 et Q'>1, on a avantageusement $96° \leq 2\alpha + \beta + \gamma + 3\alpha' + \beta' + \gamma' + \delta' \leq 122°$. Dans un mode de réalisation dans lequel Q>1, Q'>1, on a avantageusement $99° \leq 2\alpha + \beta + \gamma + 3\alpha' + \beta' + \gamma' + \delta' \leq 136°$. Dans la variante particulière, $110° \leq 2\alpha + \beta + \gamma + 3\alpha' + \beta' + \delta' + \gamma' \leq 150°$.

Dans un mode de réalisation utilisant des torons internes à trois couches et des torons externes à deux couches, $64° \leq 3\alpha + \beta + \gamma + \delta + 2\alpha' + \beta' + \gamma' \leq 135°$. Dans un mode de réalisation dans lequel Q=1 et Q'=1, on a avantageusement $64° \leq 3\alpha + \beta + \gamma + \delta + 2\alpha' + \beta' + \gamma' \leq 117°$. Dans un mode de réalisation dans lequel Q>1, Q'=1, on a avantageusement $73° \leq 3\alpha + \beta + \gamma + \delta + 2\alpha' + \beta' + \gamma' \leq 131°$. Dans un mode de réalisation dans lequel Q=1 et Q'>1, on a avantageusement $68° \leq 3\alpha + \beta + \gamma + \delta + 2\alpha' + \beta' + \gamma' \leq 127°$. Dans un mode de réalisation dans lequel Q>1, Q'>1, on a avantageusement $80° \leq 3\alpha + \beta + \gamma + \delta + 2\alpha' + \beta' + \gamma' \leq 135°$. Dans la variante particulière, $110° \leq 3\alpha + \beta + \delta + \gamma + 2\alpha' + \beta' + \gamma' \leq 150°$.

Pour des diamètres de fils utilisés identiques ou proches, les angles ainsi définis permettent de définir structurellement la couche interne du câble et les torons internes de cette couche afin d'obtenir un câble conforme à l'invention facile à fabriquer industriellement en jouant uniquement sur les angles des fils des couches. De plus, les pas p1, p1', p2, p2' et p3, p3' dans ces plages préférentielles permettent d'obtenir un câble présentant des propriétés mécaniques compatibles avec un usage pneumatique, un coût et une masse linéique du câble relativement faible.

Les valeurs des angles d'hélice $\beta$, $\gamma$, $\delta$, $\beta'$, $\gamma'$, $\delta'$, ainsi que celles des pas p1, p2, p3, p1', p2', p3' permettant d'obtenir des câbles à moyen module sont identiques à celles déjà décrites ci-dessus.

Architecture des câbles selon l'invention

Avantageusement, J=2, 3 ou 4, de préférence J=3 ou 4.

Dans un mode de réalisation, L est égal à 7, 8, 9 ou 10, de préférence L=8, 9 ou 10 et plus préférentiellement L=8 ou 9.

Dans une première variante, J=2 et L=7 ou 8, de préférence J=2, L=7.

Dans une deuxième variante, J=3 et L=7, 8 ou 9, de préférence J=3, L=8 ou 9. Dans le cas où L=8, on favorise la désaturation de la couche externe du câble et donc la pénétrabilité du câble entre les torons externes. Dans le cas où L=9, on maximise le nombre de torons externes et donc la force à rupture du câble.

Dans une troisième variante, J=4 et L=7, 8, 9 ou 10, de préférence J=4, L=9.

Dans ces modes de réalisation, notamment ceux où J=3 ou 4, il existe un risque de voir une très forte propagation des agents corrosifs entre les J=3 ou 4 torons internes qui délimitent un capillaire central très favorable à leur propagation le long du câble, lorsque le câble est insuffisamment pénétré. Cet inconvénient peut être surmonté en rendant le câble pénétrable par la composition d'élastomère qui empêche alors les agents corrosifs d'accéder au capillaire central, et dans le meilleur des cas où le capillaire central est lui-même pénétré, la propagation de ces agents corrosifs le long du câble.

Avantageusement, la couche externe du câble est désaturée.

Par définition, une couche de torons désaturée est telle qu'il existe suffisamment d'espace entre les torons de façon à permettre le passage d'une composition d'élastomère. Une couche externe de torons est désaturée signifie que les torons externes ne se touchent pas et qu'il y a suffisamment d'espace entre deux torons externes adjacents permettant le passage d'une composition d'élastomère jusqu'aux torons internes. Par opposition, une couche de torons saturée est telle qu'il n'existe suffisamment pas d'espace entre les torons de la couche de façon à permettre le passage d'une composition d'élastomère, par exemple car les torons de la couche se touchent deux à deux.

Avantageusement, la distance inter-torons de la couche externe de torons externes définie, sur une section du câble perpendiculaire à l'axe principal du câble, comme la distance la plus courte qui sépare, en moyenne, les enveloppes circulaires dans lesquelles sont inscrits deux torons externes adjacents, est, pour une couche de torons désaturée, supérieure ou égale à 30 $\mu$m. De préférence, la distance inter-torons moyenne séparant deux torons externes adjacents est supérieure ou égale à 70 $\mu$m, plus préférentiellement à 100 $\mu$m, encore plus préférentiellement à 150 $\mu$m et très préférentiellement à 200 $\mu$m.

Comme déjà expliqué ci-dessus, les câbles selon l'invention présentent une architecture dans laquelle J>1, les efforts transversaux les plus sévères qui s'exercent dans le câble lorsque celui-ci est mis en tension sont les efforts transversaux s'exerçant entre les torons internes au contraire d'un câble dans lequel J=1 et dans lequel les efforts transversaux les plus sévères sont les efforts transversaux exercés par les torons externes sur les torons internes. Dans l'état de la technique, on connait des câbles présentant une architecture dans laquelle J>1 et comprenant un nombre de torons externes tels que la couche externe du câble soit saturée de façon à maximiser la force à rupture en ajoutant un nombre maximal de torons externes. Ici, grâce à la désaturation de la couche externe du câble, le câble présente, d'une part, des espaces entre les torons externes permettant le passage de la composition d'élastomère et donc de rendre le câble moins sensible à la corrosion. D'autre part, bien que l'on réduise le nombre de torons externes, la désaturation de la couche externe du câble permet à la composition d'élastomère de pénétrer d'une part, entre les torons externes et, d'autre part, entre les torons internes de façon à former un coussin de composition d'élastomère absorbant au moins partiellement les efforts transversaux s'exerçant entre les torons internes. Ainsi, par rapport un câble analogue présentant une couche externe du câble saturée, on obtient une force à rupture équivalente et une résistance à la corrosion largement améliorée.

Dans un mode de réalisation favorisant la pénétrabilité du câble, la couche externe du câble est complètement insaturée.

Par définition, une couche complètement insaturée de torons est, par opposition à une couche incomplètement insaturée, telle qu'il existe suffisamment de place dans cette couche pour y ajouter au moins un (X+1)ième toron du même diamètre que les X torons de la couche, plusieurs torons pouvant alors être ou non au contact les uns des autres. En l'espèce, il existe suffisamment de place dans la couche externe du câble pour y ajouter au moins un (L+1)ième toron du même diamètre que les L torons externes de la couche externe du câble.

Ainsi, avantageusement, la somme SIE des distances intertorons E de la couche externe du câble est telle que SIE ≥ DE. La somme SIE est la somme des distances intertorons E séparant chaque couple de torons adjacents de la couche. La distance intertorons d'une couche est définie, sur une section du câble perpendiculaire à l'axe principal du câble, comme la distance la plus courte qui sépare, en moyenne, deux torons adjacents de la couche. Ainsi, la distance intertorons E est calculée en divisant la somme SIE par le nombre d'espaces séparant les torons de la couche.

Dans un autre mode de réalisation favorisant le compromis entre pénétrabilité et force à rupture, la couche externe du câble est incomplètement insaturée.

Une couche incomplètement insaturée de torons est telle qu'il n'existe pas suffisamment de place dans cette couche pour y ajouter au moins un (X+1)ième toron du même diamètre que les X torons de la couche. En l'espèce, il n'existe pas suffisamment de place dans la couche externe pour y ajouter au moins un (L+1)ième toron externe du même diamètre que les L torons externes de la couche externe du câble.

Par définition, le diamètre de la couche interne DI est le diamètre du cercle le plus petit dans lequel sont circonscrits les torons internes. Le diamètre d'un toron externe DE est le diamètre du cercle le plus petit dans lequel est circonscrit le toron externe. Pour des valeurs relativement élevées de DI/DE, on favorise davantage le passage de la composition d'élastomère entre les torons externes, et, pour des valeurs relativement basses de DI/DE, on assure la stabilité architecturale du câble, on maximise la force à rupture tout en permettant le passage de la composition d'élastomère entre les torons externes, on limite le diamètre externe du câble, on réduit l'épaisseur de la nappe, donc l'échauffement, la résistance au roulement et la masse du pneumatique.

Torons internes des câbles selon l'invention

Torons internes à deux couches

Dans un mode de réalisation favorisant le compromis entre diamètre du câble et force à rupture, chaque toron interne est à deux couches et comprend :

• une couche interne constituée de Q≥1 fils internes, et
• une couche externe constituée de N>1 fils externes enroulés autour de la couche interne.

Chaque toron interne est à deux couches, c'est-à-dire qu'il comprend un assemblage constitué de deux couches de fils, ni plus ni moins, c'est-à-dire que l'assemblage a deux couches de fils, pas une, pas trois, mais uniquement deux. La couche externe de chaque toron est enroulée autour de la couche interne de ce toron au contact de la couche interne de ce toron.

Dans un mode de réalisation, D1 et D2 vont chacun de 0,15 mm à 0,60 mm, de préférence de 0,20 mm à 0,50 mm, plus préférentiellement de 0,23 mm à 0,45 mm et encore plus préférentiellement de 0,25 mm à 0,40 mm.

Dans des modes de réalisation préférés, Q=1, 2, 3 ou 4.

Dans un mode de réalisation, Q=1, N=5 ou 6, de préférence Q=1, N=6.

Dans des modes de réalisation préférés permettant d'augmenter la force à rupture du câble par rapport au mode de réalisation dans lequel Q=1, Q=2, 3 ou 4, de préférence Q=3 ou 4.

Dans ces modes de réalisation préférés dans lesquels Q>1, notamment ceux où Q=3 ou 4, il existe un risque, lorsque le toron est insuffisamment pénétré, de voir une très forte propagation des agents corrosifs entre les Q=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préféré dans lesquels Q>1, N=7, 8, 9 ou 10, de préférence N=8, 9 ou 10 et plus préférentiellement N=8 ou 9.

Dans une première variante, Q=2 et N=7 ou 8, de préférence Q=2, N=7.

Dans une deuxième variante, Q=3 et N=7, 8 ou 9, de préférence Q=3, N=8.

Dans une troisième variante, Q=4 et N=7, 8, 9 ou 10, de préférence Q=4, N=9.

De façon avantageuse, la couche externe de chaque toron interne est désaturée, de préférence complètement insaturée.

Par définition, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche externe de chaque toron interne est supérieure ou égale à 5 $\mu$m. De préférence, la distance interfils de la couche externe de chaque toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

La désaturation de la couche externe du toron interne permet avantageusement de faciliter le passage de la composition d'élastomère jusqu'au centre du toron interne et donc de rendre le toron interne moins sensible à la corrosion.

Par définition, une couche complètement insaturée de fils est telle qu'il existe suffisamment de place dans cette couche pour y ajouter au moins un (X+1)ième fil du même diamètre que les X fils de la couche, plusieurs fils pouvant alors être ou non au contact les uns des autres. En l'espèce, il existe suffisamment de place dans la couche externe de chaque toron interne pour y ajouter au moins un (N+1)ième fil externe du même diamètre que les N fils externe de la couche externe.

L'insaturation complète de la couche externe de chaque toron interne permet de maximiser la pénétration de la composition d'élastomère dans chaque toron interne et donc de rendre chaque toron interne encore moins sensible à la corrosion.

Ainsi, avantageusement, la somme SI2 des distances interfils de la couche externe de chaque toron interne est telle que SI2 $\geq$ D2. La somme SI2 est la somme des distances interfils séparant chaque couple de fils adjacents de la couche. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2 par le nombre d'espaces séparant les fils de la couche.

Par opposition, une couche incomplètement insaturée fils serait telle qu'il n'existerait pas suffisamment de place dans cette couche pour y ajouter au moins un (X+1)ième fil du même diamètre que les X' fils de la couche. En l'espèce, il n'existerait pas suffisamment de place dans la couche externe pour y ajouter au moins un (N+1)ième fil externe du même diamètre que les N fils externe de la couche externe.

Dans des modes de réalisation préférés, chaque fil interne de chaque toron interne présente un diamètre D1 supérieur ou égal au diamètre D2 de chaque fil externe de chaque toron interne. L'utilisation de diamètres tels que D1>D2 permet de favoriser la pénétrabilité de la composition d'élastomère au travers de la couche intermédiaire. L'utilisation de diamètres tels que D1=D2 permet de limiter le nombre de fils différents à gérer lors de la fabrication du câble.

Avantageusement, chaque toron interne est du type non gommé in situ. Par non gommé in situ, on entend qu'avant assemblage de la couche interne du câble et avant assemblage du câble, chaque toron interne est constitué des fils des différentes couches et dépourvu de composition de polymère, notamment de composition d'élastomère.

Avantageusement, la couche interne du câble est enroulée dans un sens de couche interne du câble et chaque couche interne (lorsque Q>1) et externe de chaque toron interne est enroulée dans le même sens d'enroulement que le sens de couche interne du câble.

Torons internes à trois couches

Dans un autre mode de réalisation particulièrement avantageux améliorant la force à rupture du câble, chaque toron interne est à trois couches et comprend :

- une couche interne constituée de Q≥1 fils internes,
- une couche intermédiaire constituée de P>1 fils intermédiaires enroulés autour de la couche interne, et
- une couche externe constituée de N>1 fils externes enroulés autour de la couche intermédiaire.

Chaque toron interne est à trois couches, c'est-à-dire qu'il comprend un assemblage constitué de trois couches de fils, ni plus ni moins, c'est-à-dire que l'assemblage a trois couches de fils, pas deux, pas quatre mais uniquement trois. La couche externe de chaque toron est enroulée en hélice autour de la couche intermédiaire de ce toron au contact de la couche intermédiaire de ce toron. La couche intermédiaire de chaque toron est enroulée en hélice autour de la couche interne de ce toron au contact de la couche interne de ce toron.

Dans un mode de réalisation, D1, D2 et D3 vont chacun de 0,15 mm à 0,60 mm, de préférence de 0,20 mm à 0,50 mm, plus préférentiellement de 0,23 mm à 0,45 mm et encore plus préférentiellement de 0,25 mm à 0,40 mm.

Dans des modes de réalisation préférés, Q=1, 2, 3 ou 4.

Dans un mode de réalisation, Q=1, P=5 ou 6 et N=10, 11 ou 12, de préférence Q=1, P=5 ou 6 et N=10 ou 11 et plus préférentiellement Q=1, P=6 et N=11.

Dans des modes de réalisation préférés permettant d'augmenter la force à rupture du câble par rapport au mode de réalisation dans lequel Q=1, Q=2, 3 ou 4, de préférence Q=3 ou 4.

Dans ces modes de réalisation préférés dans lesquels Q>1, notamment ceux où Q=3 ou 4, il existe un risque, lorsque le toron est insuffisamment pénétré, de voir une très forte propagation des agents corrosifs entre les Q=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préférés dans lesquels Q>1, Q=2, 3 ou 4, P=7, 8, 9 ou 10, N=13, 14 ou 15, de préférence Q=3 ou 4, P=8, 9 ou 10, N=14 ou 15, plus préférentiellement Q=3, P=8 ou 9 et N=14 ou 15 et encore plus préférentiellement Q=3, P=9 et N=15.

De façon avantageuse, la couche intermédiaire de chaque toron interne est désaturée.

Par définition, une couche de fils désaturée est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche intermédiaire de chaque toron interne est supérieure ou égale à 5 $\mu$m. De préférence, la distance interfils de la couche intermédiaire de chaque toron interne est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m..

La désaturation de la couche intermédiaire du toron interne permet avantageusement de faciliter le passage de la composition d'élastomère jusqu'au centre de chaque toron interne et donc de rendre chaque toron interne moins sensible à la corrosion.

Dans un mode de réalisation favorisant le compromis entre pénétrabilité de chaque toron interne et force à rupture, la couche intermédiaire de chaque toron interne est incomplètement insaturée.

Par définition, une couche incomplètement insaturée fils est telle qu'il n'existe pas suffisamment de place dans cette couche pour y ajouter au moins un (X+1)ième fil du même diamètre que les X fils de la couche. En l'espèce, il n'existe pas suffisamment de place dans la couche intermédiaire pour y ajouter au moins un (P+1)ième fil intermédiaire du même diamètre que les P fils intermédiaires de la couche intermédiaire.

L'insaturation incomplète de la couche intermédiaire du toron interne permet d'assurer une stabilité architecturale de la couche intermédiaire. En outre, l'insaturation incomplète de la couche intermédiaire du toron interne permet de s'assurer que le toron interne comprend un nombre relativement élevé de fils intermédiaires et donc présente une force à rupture relativement élevée.

Ainsi, avantageusement, la somme SI2 des distances interfils de la couche intermédiaire est telle que SI2 < D3 avec D3 étant le diamètre de chaque fil externe du toron interne, de préférence SI2 ≤ 0,8 x D3. La somme SI2 est la somme des distances interfils séparant chaque couple de fils adjacents de la couche intermédiaire. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2 par le nombre d'espaces séparant les fils de la couche intermédiaire. Le diamètre D3 des fils externes de la couche externe du toron interne étant préférentiellement supérieur à la somme SI2, on empêche les fils externes de pénétrer dans la couche intermédiaire. On assure ainsi une bonne stabilité architecturale, ce qui réduit de plus le risque de modification des fenêtres de passage radial de la composition d'élastomère et donc le risque de dégrader de la bonne pénétrabilité du toron interne.

Dans un autre mode de réalisation favorisant la pénétrabilité de chaque toron interne, la couche intermédiaire de chaque toron interne est complètement insaturée.

Par définition, une couche complètement insaturée de fils est telle qu'il existe suffisamment de place dans cette couche pour y ajouter au moins un (X+1)ième fil du même diamètre que les X fils de la couche, plusieurs fils pouvant alors être ou non au contact les uns des autres. En l'espèce, il existe suffisamment de place dans la couche intermédiaire de chaque toron interne pour y ajouter au moins un (P+1)ième fil intermédiaire du même diamètre que les P fils intermédiaires de la couche intermédiaire.

Un tel mode de réalisation est particulièrement avantageux dans le cas où Q=3 et P=8 ou Q=4 et P=9 et dans le cas où D1=D2. En effet, si on avait Q=3 et P=9 ou Q=4 et P=10, la couche intermédiaire, même en étant désaturée, pourrait, dans certains cas, présenter une distance interfils insuffisante pour une pénétrabilité satisfaisante du toron. De façon avantageuse, la couche externe de chaque toron interne est désaturée, de préférence complètement insaturée.

Comme déjà précisé, par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche externe de chaque toron interne est supérieure ou égale à 5 μm. De préférence, la distance interfils de la couche externe de chaque toron interne est supérieure ou égale à 15 μm, plus préférentiellement supérieure ou égale à 35 μm, encore plus préférentiellement supérieure ou égale à 50 μm et très préférentiellement supérieure ou égale à 60 μm.

La désaturation de la couche externe de chaque toron interne permet avantageusement de faciliter le passage de la composition d'élastomère jusqu'au centre de chaque toron interne et donc de rendre chaque toron interne moins sensible à la corrosion.

Par définition, une couche complètement insaturée de fils est telle qu'il existe suffisamment de place dans cette couche pour y ajouter au moins un (X+1)ième fil du même diamètre que les X fils de la couche, plusieurs fils pouvant alors être ou non au contact les uns des autres. En l'espèce, il existe suffisamment de place dans la couche externe de chaque toron interne pour y ajouter au moins un (N+1)ième fil externe du même diamètre que les N fils externes de la couche externe.

L'insaturation complète de la couche externe de chaque toron interne permet de maximiser la pénétration de la composition d'élastomère dans chaque toron interne et donc de rendre chaque toron interne encore moins sensible à la corrosion.

Ainsi, avantageusement, la somme SI3 des distances interfils de la couche externe de chaque toron interne est telle que SI3 ≥ D3. La somme SI3 est la somme des distances interfils séparant chaque couple de fils adjacents de la couche externe. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI3 par le nombre d'espaces séparant les fils de la couche externe.

Dans des modes de réalisation préférés, chaque fil interne de chaque toron interne présente un diamètre D1 supérieur ou égal au diamètre D2 de chaque fil intermédiaire de chaque toron interne. L'utilisation de diamètres tels que D1>D2 permet de favoriser la pénétrabilité de la composition d'élastomère au travers de la couche intermédiaire. L'utilisation de diamètres tels que D1=D2 permet de limiter le nombre de fils différents à gérer lors de la fabrication du câble.

Dans des modes de réalisation préférés, chaque fil interne de chaque toron interne présente un diamètre D1 supérieur ou égal au diamètre D3 de chaque fil externe de chaque toron interne. L'utilisation de diamètres tels que D1>D3 permet de favoriser la pénétrabilité de la composition d'élastomère au travers de la couche externe. L'utilisation de diamètres tels que D1=D3 permet de limiter le nombre de fils différents à gérer lors de la fabrication du câble.

Dans des modes de réalisation préférés, chaque fil intermédiaire de chaque toron interne présente un diamètre D2 égal au diamètre D3 de chaque fil externe de chaque toron interne. L'utilisation de diamètres tels que D2=D3 permet de limiter le nombre de fils différents à gérer lors de la fabrication du câble.

Avantageusement, chaque toron interne est du type non gommé in situ. Par non gommé in situ, on entend qu'avant assemblage de la couche interne du câble et avant assemblage du câble, chaque toron interne est constitué des fils des différentes couches et dépourvu de composition de polymère, notamment de composition d'élastomère.

Avantageusement, la couche interne du câble est enroulée dans un sens de couche interne du câble et chaque couche interne (lorsque Q>1), intermédiaire et externe de chaque toron interne est enroulée dans le même sens d'enroulement que le sens de couche interne du câble.

Torons externes des câbles selon l'invention

Torons externes à deux couches

Dans un mode de réalisation favorisant le compromis entre diamètre du câble et force à rupture, chaque toron externe est à deux couches et comprend :

- une couche interne constituée de Q'≥1 fils internes,
- une couche externe constituée de N'>1 fils externes enroulés autour de la couche interne.

Chaque toron externe est à deux couches, c'est-à-dire qu'il comprend un assemblage constitué de deux couches de fils, ni plus ni moins, c'est-à-dire que l'assemblage a deux couches de fils, pas une, pas trois, mais uniquement deux. La couche externe de chaque toron est enroulée autour de la couche interne de ce toron au contact de la couche interne de ce toron.

Dans un mode de réalisation, D1' et D2' vont chacun de 0,15 mm à 0,60 mm, de préférence de 0,20 mm à 0,50 mm, plus préférentiellement de 0,23 mm à 0,45 mm et encore plus préférentiellement de 0,25 mm à 0,40 mm.

Dans un mode de réalisation, Q'=1, Dans ce mode de réalisation, N'=5 ou 6, de préférence N=6.

Dans des modes de réalisation préférés permettant d'augmenter la force à rupture du câble par rapport au mode de réalisation dans lequel Q'=1, Q'=2, 3 ou 4, de préférence Q'=3 ou 4.

Dans ces modes de réalisation préférés dans lesquels Q'>1, notamment ceux où Q'=3 ou 4, il existe un risque, lorsque le toron est insuffisamment pénétré, de voir une très forte propagation des agents corrosifs entre les Q'=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préférés du mode dans lequel Q'>1, N'=7, 8, 9 ou 10, de préférence N'=8, 9 ou 10 et plus préférentiellement N'=8 ou 9.

Dans une première variante, Q'=2 et N'=7 ou 8, de préférence Q'=2, N'=7.

Dans une deuxième variante, Q'=3 et N'=7, 8 ou 9, de préférence Q'=3, N'=8.

Dans une troisième variante, Q'=4 et N'=7, 8, 9 ou 10, de préférence Q'=4, N'=9.

De façon avantageuse, la couche externe de chaque toron externe est désaturée, de préférence complètement insaturée.

Comme déjà précisé, par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche externe de chaque toron externe est supérieure ou égale à 5 $\mu$m. De préférence, la distance interfils de la couche externe de chaque toron externe est supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m.

La désaturation de la couche externe de chaque toron externe permet avantageusement de faciliter le passage de la composition d'élastomère jusqu'au centre de chaque toron externe et donc de rendre chaque toron externe moins sensible à la corrosion.

Par définition, une couche complètement insaturée de fils est telle qu'il existe suffisamment de place dans cette couche pour y ajouter au moins un (X'+1)ième fil du même diamètre que les X' fils de la couche, plusieurs fils pouvant alors être ou non au contact les uns des autres. En l'espèce, il existe suffisamment de place dans la couche externe de chaque toron externe pour y ajouter au moins un (N'+1)ième fil externe du même diamètre que les N' fils externe de la couche externe.

L'insaturation complète de la couche externe de chaque toron externe permet de maximiser la pénétration de la composition d'élastomère dans chaque toron externe et donc de rendre chaque toron externe encore moins sensible à la corrosion.

Ainsi, avantageusement, la somme SI2' des distances interfils de la couche externe de chaque toron interne est telle que SI2' ≥ D2'. La somme SI2' est la somme des distances interfils séparant chaque couple de fils adjacents de la couche. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2' par le nombre d'espaces séparant les fils de la couche.

Par opposition, une couche incomplètement insaturée serait telle qu'il n'existerait pas suffisamment de place dans cette couche pour y ajouter au moins un (X'+1)ième fil du même diamètre que les X' fils de la couche. En l'espèce, il n'existerait pas suffisamment de place dans la couche externe pour y ajouter au moins un (N'+1)ième fil externe du même diamètre que les N fils externe de la couche externe.

Dans des modes de réalisation préférés, chaque fil interne de chaque toron externe présente un diamètre D1' supérieur ou égal au diamètre D2' de chaque fil externe de chaque toron externe. L'utilisation de diamètres tels que D1'>D2' permet de favoriser la pénétrabilité de la composition d'élastomère au travers de la couche externe. L'utilisation de diamètres tels que D1'=D2' permet de limiter le nombre de fils différents à gérer lors de la fabrication du câble.

Avantageusement, chaque toron externe est du type non gommé in situ. Par non gommé in situ, on entend qu'avant assemblage de la couche externe du câble et avant assemblage du câble, chaque toron externe est constitué des fils des différentes couches et dépourvu de composition de polymère, notamment de composition d'élastomère.

Avantageusement, la couche externe est enroulée dans un sens de couche externe du câble et chaque couche interne (lorsque Q'>1) et externe de chaque toron externe est enroulée dans le même sens d'enroulement que le sens de couche externe du câble.

Torons externes à trois couches

Dans un autre mode de réalisation particulièrement avantageux améliorant la force à rupture du câble, chaque toron externe est à trois couches et comprend :

- une couche interne constituée de Q'≥1 fils internes,
- une couche intermédiaire constituée de P'>1 fils intermédiaires enroulés autour de la couche interne, et
- une couche externe constituée de N'>1 fils externes enroulés autour de la couche intermédiaire.

Chaque toron externe est à trois couches, c'est-à-dire qu'il comprend un assemblage constitué de trois couches de fils, ni plus ni moins, c'est-à-dire que l'assemblage a trois couches de fils, pas deux, pas quatre mais uniquement trois. La couche externe de chaque toron est enroulée en hélice autour de la couche intermédiaire de ce toron au contact de la couche intermédiaire de ce toron. La couche intermédiaire de chaque toron est enroulée en hélice autour de la couche interne de ce toron au contact de la couche interne de ce toron.

Dans un mode de réalisation, D1', D2' et D3' vont chacun de 0,15 mm à 0,60 mm, de préférence de 0,20 mm à 0,50 mm, plus préférentiellement de 0,23 mm à 0,45 mm et encore plus préférentiellement de 0,25 mm à 0,40 mm.

Dans des modes de réalisation préférés, Q'=1, 2, 3 ou 4.

Dans un mode de réalisation, Q'=1, P'=5 ou 6 et N'=10, 11 ou 12, de préférence Q'=1, P'=5 ou 6 et N'=10 ou 11 et plus préférentiellement Q'=1, P'=6 et N'=11.

Dans des modes de réalisation préférés permettant d'augmenter la force à rupture du câble par rapport au mode de réalisation dans lequel Q'=1, Q'=2, 3 ou 4, de préférence Q'=3 ou 4.

Dans ces modes de réalisation préférés dans lesquels Q'>1, notamment ceux où Q'=3 ou 4, il existe un risque, lorsque le toron est insuffisamment pénétré, de voir une très forte propagation des agents corrosifs entre les Q'=3 ou 4 fils internes qui délimitent un capillaire central très favorable à leur propagation le long de chaque toron. Cet inconvénient peut être surmonté en rendant le toron pénétrable par la composition d'élastomère qui empêche alors les agents corrosifs d'accéder au capillaire central, et dans le meilleur des cas où le capillaire central est lui-même pénétré, la propagation de ces agents corrosifs le long du toron.

Dans des modes de réalisation préférés dans lesquels Q'>1, Q'=2, 3 ou 4, P'=7, 8, 9 ou 10, N'=13, 14 ou 15, de préférence Q'=3 ou 4, P'=8, 9 ou 10, N'=14 ou 15, plus préférentiellement Q'=3, P'=8 ou 9 et N'=14 ou 15 et encore plus préférentiellement Q'=3, P'=9 et N'=15.

De façon avantageuse, la couche intermédiaire de chaque toron externe est désaturée.

Comme déjà précisé, par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche intermédiaire de chaque toron externe est supérieure ou égale à 5 μm. De préférence, la distance interfils de la couche intermédiaire de chaque toron externe est supérieure ou égale à 15 μm, plus préférentiellement supérieure ou égale à 35 μm, encore plus préférentiellement supérieure ou égale à 50 μm et très préférentiellement supérieure ou égale à 60 μm.

La désaturation de la couche intermédiaire de chaque toron externe permet avantageusement de faciliter le passage de la composition d'élastomère jusqu'au centre de chaque toron externe et donc de rendre le toron externe moins sensible à la corrosion.

Dans un mode de réalisation favorisant le compromis entre pénétrabilité de chaque toron externe et force à rupture, la couche intermédiaire de chaque toron externe est incomplètement insaturée.

Par définition, une couche incomplètement insaturée fils est telle qu'il n'existe pas suffisamment de place dans cette couche pour y ajouter au moins un (X+1)ième fil du même diamètre que les X fils de la couche. En l'espèce, il n'existe pas suffisamment de place dans la couche intermédiaire pour y ajouter au moins un (P'+1)ième fil intermédiaire du même diamètre que les P' fils intermédiaires de la couche intermédiaire.

L'insaturation incomplète de la couche intermédiaire de chaque toron externe permet d'assurer une stabilité architecturale de la couche intermédiaire. En outre, l'insaturation incomplète de la couche intermédiaire de chaque toron externe permet de s'assurer que chaque toron externe comprend un nombre relativement élevé de fils intermédiaires et donc présente une force à rupture relativement élevée.

Ainsi, avantageusement, la somme SI2' des distances interfils de la couche intermédiaire est telle que SI2' < D3' avec D'3 étant le diamètre de chaque fil externe de chaque toron externe, de préférence SI2' ≤ 0,8 x D3'. La somme SI'2 est la somme des distances interfils séparant chaque couple de fils adjacents de la couche intermédiaire. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI2' par le nombre d'espaces séparant les fils de la couche intermédiaire. Le diamètre D3' des fils externes de la couche externe de chaque toron externe étant préférentiellement supérieur à la somme SI2', on empêche les fils externes de pénétrer dans la couche intermédiaire. On assure ainsi une bonne stabilité architecturale, ce qui réduit de plus le risque de modification des fenêtres de passage radial de la composition d'élastomère et donc le risque de dégrader de la bonne pénétrabilité de chaque toron externe.

Dans un autre mode de réalisation favorisant la pénétrabilité de chaque toron externe, la couche intermédiaire de chaque toron externe est complètement insaturée.

Par définition, une couche complètement insaturée de fils est telle qu'il existe suffisamment de place dans cette couche pour y ajouter au moins un (X+1)ième fil du même diamètre que les X fils de la couche, plusieurs fils pouvant alors être ou non au contact les uns des autres. En l'espèce, il existe suffisamment de place dans la couche intermédiaire de chaque toron externe pour y ajouter au moins un (P'+1)ième fil intermédiaire du même diamètre que les P' fils intermédiaire de la couche intermédiaire.

Un tel mode de réalisation est particulièrement avantageux dans le cas où Q'=3 et P'=8 ou Q'=4 et P'=9 et dans le cas où D1'=D2'. En effet, si on avait Q'=3 et P'=9 ou Q'=4 et P'=10, la couche intermédiaire, même en étant désaturée, pourrait, dans certains cas, présenter une distance interfils insuffisante pour une pénétrabilité satisfaisante du toron.

De façon avantageuse, la couche externe de chaque toron externe est désaturée, de préférence complètement insaturée.

Comme déjà précisé, par définition, une couche de fils désaturée de fils est telle qu'il existe suffisamment d'espace entre les fils de façon à permettre le passage d'une composition d'élastomère. Ainsi, une couche désaturée signifie que les fils de cette couche ne se touchent pas et qu'il y a suffisamment d'espace entre deux fils adjacents de la couche permettant le passage d'une composition d'élastomère au travers de la couche. Par opposition, une couche de fils saturée est telle qu'il n'existe suffisamment pas d'espace entre les fils de la couche de façon à permettre le passage d'une composition d'élastomère, par exemple car les fils de la couche se touchent deux à deux.

Avantageusement, la distance interfils de la couche externe de chaque toron externe est supérieure ou égale à 5 μm. De préférence, la distance interfils de la couche externe de chaque toron externe est supérieure ou égale à 15 μm, plus préférentiellement supérieure ou égale à 35 μm, encore plus préférentiellement supérieure ou égale à 50 μm et très préférentiellement supérieure ou égale à 60 μm.

La désaturation de la couche externe de chaque toron externe permet avantageusement de faciliter le passage de la composition d'élastomère jusqu'au centre de chaque toron externe et donc de rendre chaque toron externe moins sensible à la corrosion.

Par définition, une couche complètement insaturée de fils est telle qu'il existe suffisamment de place dans cette couche pour y ajouter au moins un (X'+1)ième fil du même diamètre que les X' fils de la couche, plusieurs fils pouvant alors être ou non au contact les uns des autres. En l'espèce, il existe suffisamment de place dans la couche externe de chaque toron externe pour y ajouter au moins un (N'+1)ième fil externe du même diamètre que les N' fils externe de la couche externe.

L'insaturation complète de la couche externe de chaque toron externe permet de maximiser la pénétration de la composition d'élastomère dans chaque toron externe et donc de rendre chaque toron externe encore moins sensible à la corrosion.

Ainsi, avantageusement, la somme SI3' des distances interfils de la couche externe de chaque toron externe est telle que SI3' $\geq$ D3'. La somme SI3' est la somme des distances interfils séparant chaque couple de fils adjacents de la couche externe. La distance interfils d'une couche est définie, sur une section du câble perpendiculaire à l'axe principal du câble, comme la distance la plus courte qui sépare, en moyenne, deux fils adjacents de la couche. Ainsi, la distance interfils est calculée en divisant la somme SI3' par le nombre d'espaces séparant les fils de la couche externe.

Dans des modes de réalisation préférés, chaque fil interne de chaque toron externe présente un diamètre D1' supérieur ou égal au diamètre D2' de chaque fil intermédiaire de chaque toron externe. L'utilisation de diamètres tels que D1'>D2' permet de favoriser la pénétrabilité de la composition d'élastomère au travers de la couche intermédiaire. L'utilisation de diamètres tels que D1'=D2' permet de limiter le nombre de fils différents à gérer lors de la fabrication du câble.

Dans des modes de réalisation préférés, chaque fil interne de chaque toron externe présente un diamètre D1' supérieur ou égal au diamètre D3' de chaque fil externe de chaque toron externe. L'utilisation de diamètres tels que D1'>D3' permet de favoriser la pénétrabilité de la composition d'élastomère au travers de la couche externe. L'utilisation de diamètres tels que D1'=D3' permet de limiter le nombre de fils différents à gérer lors de la fabrication du câble.

Dans des modes de réalisation préférés, chaque fil intermédiaire de chaque toron externe présente un diamètre D2' égal au diamètre D3' de chaque fil externe de chaque toron externe. L'utilisation de diamètres tels que D2'=D3' permet de limiter le nombre de fils différents à gérer lors de la fabrication du câble.

Selon l'invention, chaque toron externe est du type non gommé in situ. Par non gommé in situ, on entend qu'avant assemblage de la couche externe du câble et avant assemblage du câble, chaque toron externe est constitué des fils des différentes couches et dépourvu de composition de polymère, notamment de composition d'élastomère.

Avantageusement, la couche externe du câble est enroulée dans un sens de couche externe du câble et chaque couche interne (lorsque Q'>1), intermédiaire et externe de chaque toron externe est enroulée dans le même sens d'enroulement que le sens de couche externe du câble.

Dans un mode de réalisation, le sens de couche interne du câble et le sens de couche externe du câble sont opposés. Dans ce mode de réalisation, on réduit le risque d'éventuels glissements non désirés des torons externes dans des gorges formées entre les torons internes du fait d'un croisement entre les torons internes et externes.

Dans un autre mode de réalisation, le sens de couche interne du câble et le sens de couche externe du câble sont les mêmes. Dans ce mode de réalisation, la fabrication est relativement aisée car il n'est pas nécessaire contrairement au mode de réalisation précédent de différencier les sens d'enroulement entre les couches interne et externe du câble. Néanmoins, les contacts entre les fils externes des couches externes des torons internes et externes sont relativement longs ce qui peut, dans certaines combinaisons de pas, diamètres et architectures de câbles, générer des défauts d'assemblage dus, par exemple, à un glissement non désiré des torons externes dans les gorges formées entre les torons internes.

## PNEUMATIQUE SELON L'INVENTION

Un autre objet de l'invention est un pneumatique comprenant un câble tel que défini ci-dessus.

Le câble est tout particulièrement destiné à des véhicules industriels choisis parmi des véhicules lourds tels que "Poids lourd" - i.e., métro, bus, engins de transport routier (camions, tracteurs, remorques), véhicules hors-la-route -, engins agricoles ou de génie civil, autres véhicules de transport ou de manutention.

De manière préférentielle, le pneumatique est pour véhicule de type génie civil. Le pneumatique présente une dimension de type W R U dans laquelle, de façon connue pour l'homme du métier, W, désigne :

- le rapport nominal d'aspect H/B tel que défini par l'ETRTO, lorsqu'il est sous la forme H/B, H étant la hauteur de la section du pneumatique et B étant la largeur de la section du pneumatique,
- H.00 ou B.00, lorsqu'il est sous la forme H.00 ou B.00, dans lequel H=B, H et B étant tels que définis ci-dessus,

U représente le diamètre, en pouces, du siège de la jante sur laquelle le pneumatique est destiné à être monté, R désigne le type d'armature de carcasse du pneumatique, ici radiale.

Des exemples de telles dimensions sont par exemple 40.00 R 57 ou encore 59/80 R 63.

On a de préférence U$\geq$35, plus préférentiellement U$\geq$49 et plus préférentiellement U$\geq$57.

Avantageusement, le pneumatique comprend une armature de carcasse ancrée dans deux bourrelets et surmontée radialement par une armature de sommet elle-même surmontée d'une bande de roulement, l'armature de sommet étant réunie auxdits bourrelets par deux flancs et comportant au moins un câble tel que défini ci-dessus.

De façon avantageuse, l'armature de carcasse comprend au moins une nappe de carcasse comprenant des éléments filaires de renfort métalliques de carcasse agencés les uns sensiblement parallèlement aux autres dans la nappe de carcasse, chaque élément filaire de renfort métallique de carcasse faisant un angle compris entre 80° et 90° avec la direction circonférentielle du pneumatique.

Avantageusement, l'armature de sommet comprend une armature de travail comprenant au moins un câble tel que défini ci-dessus.

Avantageusement, l'armature de travail comprend au moins une nappe de travail comprenant des éléments filaires de renfort métalliques de travail agencés les uns sensiblement parallèlement aux autres, chaque élément filaire de renfort métallique de travail faisant un angle au plus égal à 60°, de préférence allant de 15° à 40° avec la direction circonférentielle du pneumatique et étant formé par un câble tel que défini ci-dessus.

Dans un mode de réalisation avantageux, l'armature de travail comprend au moins des première et deuxième nappes de travail, chaque première et deuxième nappe de travail comprenant respectivement des premiers et deuxièmes éléments filaires de renfort métalliques de travail agencés les uns sensiblement parallèlement aux autres dans chaque première et deuxième nappe de travail, chaque premier et deuxième élément filaire de renfort métallique de travail faisant un angle au plus égal à 60°, de préférence allant de 15° à 40° avec la direction circonférentielle du pneumatique et étant formé par un câble tel que défini ci-dessus.

Avantageusement, l'armature de sommet comprend une armature de protection comprenant au moins une nappe de protection comprenant des éléments filaires de renfort métalliques de protection agencés les uns sensiblement parallèlement aux autres, chaque élément filaire de renfort métallique de protection faisant un angle au moins égal à 10°, de préférence allant de 10° à 35° et préférentiellement de 15° à 30° avec la direction circonférentielle du pneumatique.

Dans un mode de réalisation avantageux, l'armature de protection comprend des première et deuxième nappes de protection, chaque première et deuxième nappes de protection comprenant respectivement des premiers et deuxièmes éléments filaires de renfort métalliques de protection agencés les uns sensiblement parallèlement aux autres dans chaque première et deuxième nappe de protection, chaque premier et deuxième élément filaire de renfort métallique de protection faisant un angle au moins égal à 10°, de préférence allant de 10° à 35° et préférentiellement de 15° à 30° avec la direction circonférentielle du pneumatique.

Dans un mode de réalisation préférentiel, l'armature de protection est radialement intercalée entre la bande de roulement et l'armature de travail.

Avantageusement, l'armature de sommet comprend une armature additionnelle comprenant au moins une nappe additionnelle comprenant des éléments filaires de renfort métalliques additionnels agencés les uns sensiblement parallèlement aux autres dans la nappe additionnelle, chaque élément filaire de renfort métallique additionnel faisant un angle au plus égal à 10°, de préférence allant de 5° à 10° avec la direction circonférentielle du pneumatique.

Dans un mode de réalisation avantageux, l'armature additionnelle comprend des première et deuxième nappes additionnelles, chaque première et deuxième nappes additionnelle comprenant respectivement des premiers et deuxièmes éléments filaires de renfort métalliques additionnels agencés les uns sensiblement parallèlement aux autres dans chaque première et deuxième nappe additionnelle, chaque premier et deuxième élément filaire de renfort métallique additionnel faisant un angle au plus égal à 10°, de préférence allant de 5° à 10° avec la direction circonférentielle du pneumatique.

L'invention sera mieux comprise à la lecture de la description qui va suivre, donnée uniquement à titre d'exemple non limitatif et faite en se référant aux dessins dans lesquels :

- la figure 1 est une vue en coupe perpendiculaire à la direction circonférentielle d'un pneumatique selon l'invention ;
- la figure 2 est une vue de détails de la zone II de la figure 1 ;
- la figure 3 est une vue schématique en coupe perpendiculaire à l'axe du câble (supposé rectiligne et au repos) d'un câble selon un premier mode de réalisation de l'invention ;
- la figure 4 est un graphique illustrant la courbe force-allongement du câble de la figure 3 selon le premier mode de réalisation,
- la figure 5 est un graphique analogue à celui de la figure 4 d'un câble selon un deuxième mode de réalisation,
- la figure 6 est une vue analogue à celle de la figure 3 d'un câble selon un troisième mode de réalisation l'invention,
- la figure 7 est un graphique analogue à celui de la figure 4 du câble selon le troisième mode de réalisation, et
- les figures 8, 9 et 10 sont des vues analogues à celle de la figure 3 de câbles respectivement selon des huitième, quinzième et vingtdeuxième modes de réalisation.

## EXEMPLE DE PNEUMATIQUE SELON L'INVENTION

Dans les figures, on a représenté un repère X, Y, Z correspondant aux orientations habituelles respectivement axiale (X), radiale (Y) et circonférentielle (Z) d'un pneumatique.

Le « plan circonférentiel médian » M du pneumatique est le plan qui est normal à l'axe de rotation du pneumatique et qui se situe à équidistance des structures annulaires de renfort de chaque bourrelet et passe par le milieu de l'armature de sommet.

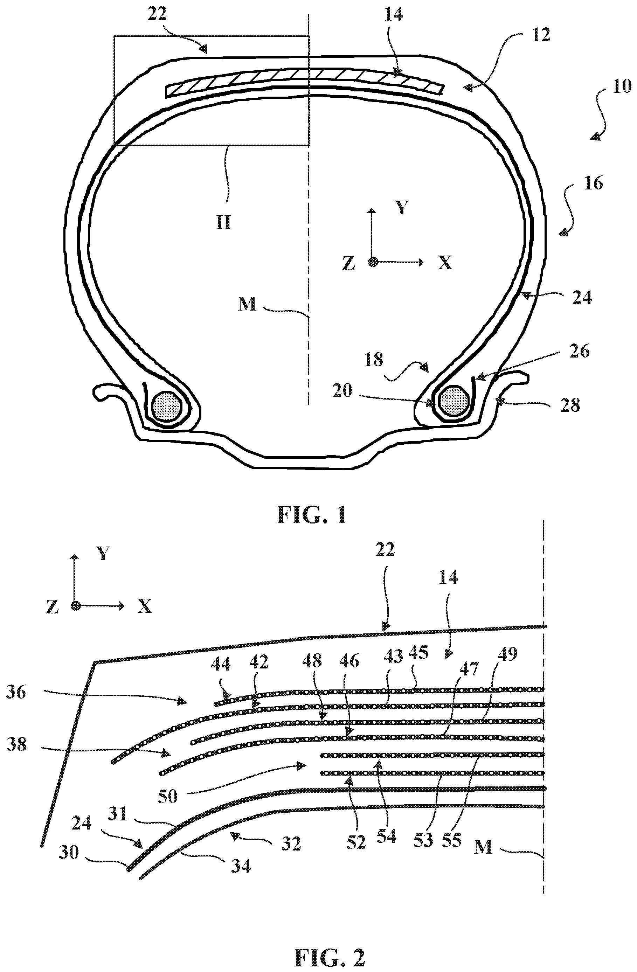

On a représenté sur les figures 1 et 2 un pneumatique selon l'invention et désigné par la référence générale 10.

Le pneumatique 10 est pour véhicule lourd de type génie civil, par exemple de type « dumper ». Ainsi, le pneumatique 10 présente une dimension de type 53/80R63.

Le pneumatique 10 comporte un sommet 12 renforcé par une armature de sommet 14, deux flancs 16 et deux bourrelets 18, chacun de ces bourrelets 18 étant renforcé avec une structure annulaire, ici une tringle 20. L'armature de sommet 14 est surmontée radialement d'une bande de roulement 22 et réunie aux bourrelets 18 par les flancs 16. Une armature de carcasse 24 est ancrée dans les deux bourrelets 18, et est ici enroulée autour des deux tringles 20 et comprend un retournement 26 disposé vers l'extérieur du pneumatique 20 qui est ici représenté monté sur une jante 28. L'armature de carcasse 24 est surmontée radialement par l'armature de sommet 14.

L'armature de carcasse 24 comprend au moins une nappe de carcasse 30 comprenant des éléments filaires de renfort métalliques de carcasse 31 agencés les uns sensiblement parallèlement aux autres dans la nappe de carcasse 30 et s'étendant d'un bourrelet 18 à l'autre de manière à faire un angle compris entre 80° et 90° avec la direction circonférentielle Z du pneumatique 10.

Le pneumatique 10 comprend également une nappe d'étanchéité 32 constituée d'un élastomère (communément appelée gomme intérieure) qui définit la face radialement interne 34 du pneumatique 10 et qui est destinée à protéger la nappe de carcasse 30 de la diffusion d'air provenant de l'espace intérieur au pneumatique 10.

L'armature de sommet 14 comprend, radialement de l'extérieur vers l'intérieur du pneumatique 10, une armature de protection 36 agencée radialement à l'intérieur de la bande de roulement 22, une armature de travail 38 agencée radialement à l'intérieur de l'armature de protection 36 et une armature additionnelle 50 agencée radialement à l'intérieur de l'armature de travail 38. L'armature de protection 36 est ainsi radialement intercalée entre la bande de roulement 22 et l'armature de travail 38. L'armature de travail 38 est radialement intercalée entre l'armature de protection 36 et l'armature additionnelle 50.

L'armature de protection 36 comprend des première et deuxième nappes de protection 42, 44, la première nappe 42 étant agencée radialement à l'intérieur de la deuxième nappe 44. Chaque première et deuxième nappes de protection 42, 44 comprend respectivement des premiers et deuxièmes éléments filaires de renfort métalliques de protection 43, 45 agencés les uns sensiblement parallèlement aux autres dans chaque première et deuxième nappe de protection 42, 44. Chaque premier et deuxième élément filaire de renfort métallique de protection 43, 45 fait un angle au moins égal à 10°, de préférence allant de 10° à 35° et préférentiellement de 15° à 30° avec la direction circonférentielle Z du pneumatique.

L'armature de travail 38 comprend des première et deuxième nappes de travail 46, 48, la première nappe 46 étant agencée radialement à l'intérieur de la deuxième nappe 48. Chaque nappe 46, 48 comprend au moins un câble 60. Chaque première et deuxième nappe de travail 46, 48 comprend respectivement des premiers et deuxièmes éléments filaires de renfort métalliques de travail 47, 49 agencés les uns sensiblement parallèlement aux autres dans chaque première et deuxième nappe de travail 46, 48. Chaque premier et deuxième élément filaire de renfort métallique de travail 47, 49 est ici formé par un câble 60 décrit ci-après. Chaque premier et deuxième élément filaire de renfort métallique de travail 47, 49 fait un angle au plus égal à 60°, de préférence allant de 15° à 40° avec la direction circonférentielle Z du pneumatique 10. De façon optionnelle, les premiers et deuxièmes éléments filaires de renfort métalliques de travail 47, 49 sont croisés d'une nappe de travail à l'autre.

L'armature additionnelle 50, également appelée bloc limiteur, dont la fonction est de reprendre en partie les sollicitations mécaniques de gonflage, comprend des première et deuxième nappes additionnelles 52, 54, chaque première et deuxième nappes additionnelle 52, 54 comprenant respectivement des premiers et deuxièmes éléments filaires de renfort métalliques additionnels 53, 55 agencés les uns sensiblement parallèlement aux autres dans chaque première et deuxième nappe additionnelle 52, 54. Chaque premier et deuxième élément filaire de renfort métallique additionnel 53, 55 fait un angle au plus égal à 10°, de préférence allant de 5° à 10° avec la direction circonférentielle Z du pneumatique 10. Les éléments filaire de renfort métalliques additionnels sont par exemple tels que décrits dans FR 2 419 181 ou FR 2 419 182.

## CABLE SELON UN PREMIER MODE DE REALISATION DE L'INVENTION

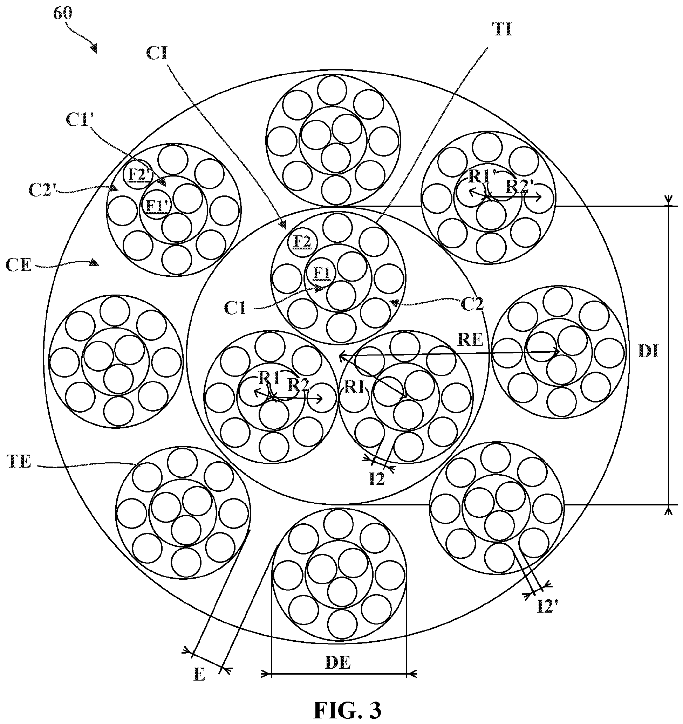

On a représenté sur la figure 3 le câble 60 selon un premier mode de réalisation de l'invention.

Le câble 60 est métallique et est du type multi-torons à deux couches cylindriques. Ainsi, on comprend que les couches de torons constituant le câble 60 sont au nombre de deux, ni plus, ni moins. Les couches de torons sont adjacentes et concentriques. Le câble 60 est dépourvu de composition polymérique et de composition d'élastomère lorsqu'il n'est pas intégré au pneumatique.

Le câble 60 comprend une couche interne CI du câble 60 ainsi qu'une couche externe CE du câble 60. La couche interne CI est constituée de J>1 torons internes TI, c'est-à-dire plusieurs torons internes TI, enroulés en hélice. La couche externe CE est constituée de L>1 torons externes, c'est-à-dire plusieurs torons externes TE enroulés en hélice autour de la couche interne CI. En l'espèce, J=2, 3 ou 4, de préférence J=3 ou 4. De plus, L=7, 8, 9 ou 10, de préférence L=8, 9 ou 10.

Avec J=3, L=7, 8 ou 9 et en l'espèce et ici J=3, L=8.

Le câble 60 comprend également une frette F constituée d'un unique fil de frette.

La couche interne CI est enroulée en hélice selon un sens d'enroulement de la couche interne du câble, ici le sens S. Les torons internes TI sont enroulés en hélice selon un pas PI tel que 10 mm ≤ PI ≤ 65 mm et de préférence 10 mm ≤ PI ≤ 45 mm. Ici PI=15 mm. L'angle d'hélice α de chaque toron interne TI dans la couche interne CI du câble 60 à très bas module va de 3° à 42° et en l'espèce α=19,8°.

La couche externe CE est enroulée en hélice autour de la couche interne CI selon un sens d'enroulement de la couche externe du câble opposé au sens d'enroulement de la couche interne du câble, ici le sens Z. Les torons externes TE sont enroulés en hélice autour du toron interne TI selon un pas PE tel que 30 mm ≤ PE ≤ 65 mm et de préférence 30 mm ≤ PE ≤ 60 mm. Ici PE=40 mm. L'angle d'hélice α' de chaque toron externe TE dans la couche externe CE du câble 60 va de 7° à 38°, et, dans le cas du câble 60 à très bas module, de 13° à 38° et en l'espèce α'=20,0°.

La frette F est enroulée autour de la couche externe CE selon un sens d'enroulement de la frette, ici opposé au sens d'enroulement de la couche externe CE, en l'espèce dans le sens S. Le fil de frette est enroulé en hélice autour des torons externes TE selon un pas PF tel que 2 mm ≤ PF ≤ 10 mm et de préférence 3 mm ≤ PF ≤ 8 mm. Ici pf=5,1 mm.

L'assemblage constitué par les couches interne CI et externe CE, c'est-à-dire le câble 60 sans la frette F, présente un diamètre D supérieur ou égal à 4 mm, de préférence supérieur ou égal à 4,5 mm et inférieur ou égal à 7 mm, de préférence inférieur ou égal à 6,5 mm. Ici, D=6,1 mm.

La couche interne CI de torons internes TI présente un diamètre DI. Chaque toron externe TE présente un diamètre DE. En l'espèce, DI=3,18 mm, DE=1,46 mm.

La couche externe CE du câble 60 est désaturée et complètement insaturée. La distance E inter-torons moyenne séparant deux torons externes TE adjacents est donc supérieure ou égale à 30 μm. De préférence, la distance E inter-torons moyenne séparant deux torons externes TE adjacents est supérieure ou égale à 70 μm, plus préférentiellement à 100 μm, encore plus préférentiellement à 150 μm et très préférentiellement à 200 μm. Ici, E=241 μm. La somme SIE des distances interfils E de la couche externe CE est supérieure au diamètre DE des torons externes de la couche externe CE. Ici, la somme SIE=8 x 0,241=1,93 mm, valeur strictement supérieure à DE=1,46 mm.

Torons internes TI du câble 60

Chaque toron interne TI est à deux couches. Chaque toron interne TI comprend, ici est constitué, de deux couches, pas plus, pas moins.

Chaque toron interne TI comprend une couche interne C1 constituée de Q≥1 fils internes F1 et une couche externe C2 constituée de N>1 fils externes F2 enroulés en hélice autour et au contact de la couche interne C1.

Q=2, 3 ou 4, de préférence Q=3 ou 4. N=7, 8, 9 ou 10, de préférence N=8, 9 ou 10. Avec Q=3, N=7, 8 ou 9 et en l'espèce Q=3, N=8.

La couche interne C1 de chaque toron interne TI est enroulée en hélice selon un sens d'enroulement de couche interne C1 du toron interne TI identique au sens d'enroulement de la couche interne CI du câble, ici selon le sens S. Les Q fils internes F1 sont assemblés au sein de chaque toron interne TI à un pas p1 tel que 2 mm ≤ p1 ≤ 20 mm. Ici p1=3 mm. L'angle d'hélice β de chaque fil interne F1 dans la couche interne C1 au sein de chaque toron interne TI va de 4° à 25°, ici β=23,4°.

La couche externe C2 de chaque toron interne TI est enroulée autour et au contact de la couche interne C1 selon un sens d'enroulement de couche externe C2 du toron interne TI identique au sens d'enroulement de la couche interne CI du câble, ici selon le sens S. Les N fils externes F2 sont enroulés en hélice autour des Q fils internes F1 et sont assemblés au sein de chaque toron interne TI à un pas p2 tel que 4 mm ≤ p2 ≤ 40 mm. Ici p2=6 mm. L'angle d'hélice γ de chaque fil externe F2 dans la couche externe C2 au sein de chaque toron interne TI va de 6° à 31°, ici γ=30,2°.

On a 11° ≤ 2α + β + γ ≤ 110° et comme Q>1, 16° ≤ 2α + β + γ ≤ 110°. Dans le mode de réalisation du câble 60 à très bas module avec Q>1, 23° ≤ 2α + β + γ ≤ 110°. En l'espèce, 2α + β + γ=93,2°.

Chaque fil interne F1 et externe F2 de chaque toron interne TI présente respectivement un diamètre D1, D2. Chaque diamètre des fils internes D1 et externes D2 de chaque toron interne TI va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque fil interne F1 de chaque toron interne TI présente un diamètre D1 supérieur ou égal, ici égal, au diamètre D2 de chaque fil externe F2 de chaque toron interne TI. En l'espèce, D1=D2=0,35 mm.

Du fait du pas p2 relativement court, la couche externe C2 de chaque toron interne TI est désaturée et incomplètement insaturée. La distance interfils I2 de la couche externe C2 séparant en moyenne les N fils externes est supérieure ou égale à 5 μm. La distance interfils I2 est de préférence supérieure ou égale à 15 μm et ici égale à 29 μm. La somme SI2 des distances interfils I2 de la couche externe C2 est supérieure au diamètre d2 des fils externes F2 de la couche externe C2. Ici, la somme SI2=8 x 0,029=0,23 mm, valeur strictement inférieure à D2=0,35 mm.

On a également 25 GPa ≤ EI ≤ 180 GPa, de préférence 36 GPa ≤ EI ≤ 180 GPa et dans le mode de réalisation du câble 60 à très bas module 25 GPa ≤ EI ≤ 180 GPa, de préférence 36 GPa ≤ EI ≤ 175 GPa. Ici, la couche interne présente un module relativement bas, on a 25 GPa ≤ EI ≤ 94 GPa, de préférence 36 GPa ≤ EI ≤ 94 GPa. En l'espèce, EI=53 GPa.

<u>Torons externes TE du câble 60</u>

Chaque toron externe TE est à deux couches. Ainsi, chaque toron externe TE comprend, ici est constitué, de deux couches, pas plus, pas moins.

Chaque toron externe TE comprend une couche interne C1' constituée de Q'≥1 fils internes F1' et une couche externe C2' constituée de N'>1 fils externes F2' enroulés en hélice autour et au contact de la couche interne C1'.

Q'=2, 3 ou 4, de préférence Q'=3 ou 4. N'=7, 8, 9 ou 10, de préférence N'=8, 9 ou 10. Avec Q'=3, N'=7, 8 ou 9 et en l'espèce Q'=3, N'=8.

La couche interne C1' de chaque toron externe TE est enroulée en hélice selon un sens d'enroulement de couche interne C1' du toron externe TE identique au sens d'enroulement de la couche externe CE du câble, ici selon le sens Z. Les Q' fils internes F1' sont assemblés au sein de chaque toron externe TE à un pas p1' tel que 2 mm ≤ p1' ≤ 20 mm, de préférence 5 mm ≤ p1' ≤ 20 mm. Ici p1'=10 mm. L'angle d'hélice $\beta$' de chaque fil interne F1' dans la couche interne C1' au sein de chaque toron externe TE va de 4° à 25°, de préférence de 4° à 17°, ici $\beta$'=7,3°.

La couche externe C2' d'e chaque toron externe TE est enroulée autour et au contact de la couche interne C1' selon un sens d'enroulement de couche externe C2' du toron externe TE identique au sens d'enroulement de la couche externes CE du câble, ici selon le sens Z. Les N' fils externes F2' sont enroulés en hélice autour des Q' fils internes F1' et sont assemblés au sein de chaque toron externe TE à un pas p2' tel que 4 mm ≤ p2' ≤ 40 mm. Ici p2'=20 mm. L'angle d'hélice $\gamma$' de chaque fil externe F2' dans la couche externe C2' au sein de chaque toron externe TE va de 5° à 31°, ici $\gamma$'=9,8°.

On a 23° ≤ 2$\alpha$' + $\beta$' + $\gamma$' ≤ 97° et comme Q'>1, 28° ≤ 2$\alpha$' + $\beta$' + $\gamma$' ≤ 97° et, dans le mode de réalisation du câble 60 à très bas module, 43° ≤ 2$\alpha$' + $\beta$' + $\gamma$' ≤ 97°. En l'espèce, 2$\alpha$' + $\beta$' + $\gamma$'=57,1°.

Chaque fil interne F1' et externe F2' de chaque toron externe TE présente respectivement un diamètre D1', D2'. Chaque diamètre des fils internes D1' et externes D2' de chaque toron externe TE va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque Q' fil interne F1' de chaque toron externe TI' présente un diamètre D1' supérieur ou égal, ici égal au diamètre D2' de chaque fil externe F2' de chaque toron externe TE. En l'espèce, D1'=D2'=0,35 mm.

La couche externe C2' de chaque toron externe TE est désaturée et complètement insaturée. La distance interfils I2' de la couche externe C2' séparant en moyenne les N' fils externes est supérieure ou égale à 5 $\mu$m. La distance interfils I2' est de préférence supérieure ou égale à 15 $\mu$m, plus préférentiellement supérieure ou égale à 35 $\mu$m, encore plus préférentiellement supérieure ou égale à 50 $\mu$m et très préférentiellement supérieure ou égale à 60 $\mu$m et ici égale à 69 $\mu$m. La somme SI2' des distances interfils I2' de la couche externe C2' est supérieure au diamètre D2 des fils externes F2' de la couche externe C2'. Ici, la somme SI2'=8 x 0,069=0,55 mm, valeur strictement supérieure à D2'=0,35 mm.

Chaque fil F1, F2, F1', F2' présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

On a 51° ≤ 2$\alpha$ + $\beta$ + $\gamma$ + 2$\alpha$' + $\beta$' + $\gamma$' ≤ 184° et comme Q>1 et Q'>1, 68° ≤ 2$\alpha$ + $\beta$ + $\gamma$ + 2$\alpha$' + $\beta$' + $\gamma$' ≤ 184°. Dans le mode de réalisation du câble 60 à très bas module, 85° ≤ 2$\alpha$ + $\beta$ + $\gamma$ + 2$\alpha$' + $\beta$' + $\gamma$' ≤ 184° et comme Q>1 et Q'>1, 110° ≤ 2$\alpha$ + $\beta$ + $\gamma$ + 2$\alpha$' + $\beta$' + $\gamma$' ≤ 184°. En l'espèce 2$\alpha$ + $\beta$ + $\gamma$ + 2$\alpha$' + $\beta$' + $\gamma$'=150,3°.

On a 1,21 ≤ EC/EI, de préférence 1,21 ≤ EC/EI ≤ 3,00 et ici EC/EI=1,62.

On a également 50 GPa ≤ EC ≤ 160 GPa et dans le mode de réalisation du câble 60 à très bas module, 50 GPa ≤ EC ≤ 89 GPa. Ici EC=86 GPa.

## PROCEDE DE FABRICATION DU CABLE SELON L'INVENTION

On fabrique le câble selon l'invention grâce à un procédé comprenant des étapes bien connues de l'homme du métier.

Dans une étape de fabrication des torons internes utilisant les étapes suivantes, opérées préférentiellement en ligne et en continu :

- tout d'abord, une première étape d'assemblage par retordage des Q fils internes F1 de la couche interne C1 au pas p1 et dans le sens S pour former la couche interne C1 en un premier point d'assemblage ;
- suivie d'une deuxième étape d'assemblage par retordage des N fils externes F2 autour des N fils internes F1 de la couche interne C1 au pas p2 et dans le sens S pour former la couche externe C2 et chaque toron interne TI en un deuxième point d'assemblage ;
- préférentiellement une étape d'équilibrage final des torsions.

Dans une étape de fabrication des torons externes utilisant les étapes suivantes opérées préférentiellement en ligne et en continu:

- tout d'abord, une première étape d'assemblage par retordage des Q' fils internes F1' de la couche interne C1' au pas p1' et dans le sens Z pour former la couche interne C1' en un premier point d'assemblage ;
- suivie d'une deuxième étape d'assemblage par retordage des N' fils externes F2' autour des N' fils internes F1' de la couche interne C1' au pas p2' et dans le sens Z pour former la couche externe C2' et chaque toron externe TE en un deuxième point d'assemblage ;
- préférentiellement une étape d'équilibrage final des torsions.

Par « équilibrage de torsion », on entend ici de manière bien connue de l'homme du métier l'annulation des couples de torsion résiduels (ou du retour élastique de de torsion) s'exerçant sur chaque fil du toron, dans la couche intermédiaire comme dans la couche externe.

Apres cette étape ultime d'équilibrage de la torsion, la fabrication de chaque toron est terminée. Chaque toron est enroulé sur une ou plusieurs bobines de réception, pour stockage, avant l'opération ultérieure d'assemblage des torons élémentaires pour l'obtention du câble multi-torons.

Pour la fabrication du câble multi-torons de l'invention, on procède de manière bien connue de l'homme du métier, par câblage des torons précédemment obtenus, à l'aide de machines de câblage dimensionnées pour assembler des torons.

Dans une étape de fabrication de la couche interne CI, on assemble par câblage les Q torons internes TI au pas PI et dans le sens S pour former la couche interne CI en un premier point d'assemblage. Dans les modes de réalisation dans lesquels le pas PI est relativement court et donc dans lesquels $\alpha$ est relativement élevé, on assemble les Q torons internes TI par retordage afin de limiter le risque d'instabilité de la couche interne CI des torons TI.

Puis, dans une étape de fabrication ultérieure, on assemble par câblage les L torons externes TE autour de la couche interne CI au pas PE et dans le sens Z pour former l'assemblage des couches CI et CE. Dans les modes de réalisation dans lesquels le pas PE est relativement court et donc dans lesquels $\alpha'$ est relativement élevé, on assemble les L torons externes TE par retordage afin de limiter le risque d'instabilité de la couche externe CE des torons TE.

Dans une dernière étape de fabrication, on enroule la frette F au pas PF dans le sens S autour de l'assemblage précédemment obtenu.

Le câble est ensuite incorporé par calandrage à des tissus composites formés d'une composition connue à base de caoutchouc naturel et de noir de carbone à titre de charge renforçante, utilisée conventionnellement pour la fabrication des armatures de sommet de pneumatiques radiaux. Cette composition comporte essentiellement, en plus de l'élastomère et de la charge renforçante (noir de carbone), un antioxydant, de l'acide stéarique, une huile d'extension, du naphténate de cobalt en tant que promoteur d'adhésion, enfin un système de vulcanisation (soufre, accélérateur, ZnO).

Les tissus composites renforcés par ces câbles comportent une matrice de composition élastomérique formée de deux couches fines de composition élastomérique qui sont superposées de part et d'autre des câbles et qui présentent respectivement une épaisseur comprise entre 1 et 4 mm bornes incluses. Le pas de calandrage (pas de pose des câbles dans le tissu de composition élastomérique) va de 4 mm à 8 mm.

Ces tissus composites sont ensuite utilisés en tant que nappe de travail dans l'armature de sommet lors du procédé de fabrication du pneumatique, dont les étapes sont par ailleurs connues de l'homme du métier.

## CABLE SELON UN 2ème MODE DE REALISATION DE L'INVENTION

On va décrire un câble 61 à bas module selon un deuxième mode de réalisation de l'invention. Les éléments analogues au premier mode de réalisation sont désignés par des références identiques.

Parmi les différences entre les câbles 60 et 61, on notera que câble 61 à bas module est tel que l'angle d'hélice $\alpha$ va de 3° à 36° et en l'espèce $\alpha$=10° et que l'angle d'hélice $\alpha'$ va de 9° à 27° et en l'espèce $\alpha'$=16,1°.

On notera également, dans le cas du câble 61 à bas module, $13° \leq 2\alpha + \beta + y \leq 110°$ et comme Q>1, $16° \leq 2\alpha + \beta + y \leq 110°$. En l'espèce, $2\alpha + \beta + y$=46,2°.

On notera également que, dans le mode de réalisation du câble 61 à bas module, 25 GPa $\leq$ EI $\leq$ 180 GPa, de préférence 64 GPa $\leq$ EI $\leq$ 180 GPa. La couche interne présentant un module relativement élevé, on a 95 GPa $\leq$ EI $\leq$ 180 GPa. En l'espèce, EI=148 GPa.

On notera également que, dans le cas du câble 61 à bas module, $31° \leq 2\alpha' + \beta' + \gamma' \leq 71°$ et comme Q'>1, $39° \leq 2\alpha' + \beta' + \gamma' \leq 71°$. En l'espèce, $2\alpha' + \beta' + \gamma'$=54,3°.

On notera également que, dans le cas du câble 61 à bas module, $65° \leq 2\alpha + \beta + 2\alpha' + \beta' + \gamma' \leq 153°$ et comme Q>1 et Q'>1, $79° \leq 2\alpha + \beta + \gamma + 2\alpha' + \beta' + \gamma' \leq 153°$. En l'espèce $2\alpha + \beta + \gamma + 2\alpha' + \beta' + \gamma'$=100,5°.

On notera que $0,60 \leq$ EC/EI $\leq 1,20$ et ici EC/EI=0,86.

On notera que, dans le mode de réalisation du câble 61 à bas module, 90 GPa $\leq$ EC $\leq$ 130 GPa. Ici EC=127 GPa.

## CABLE SELON UN 3ème MODE DE REALISATION DE L'INVENTION

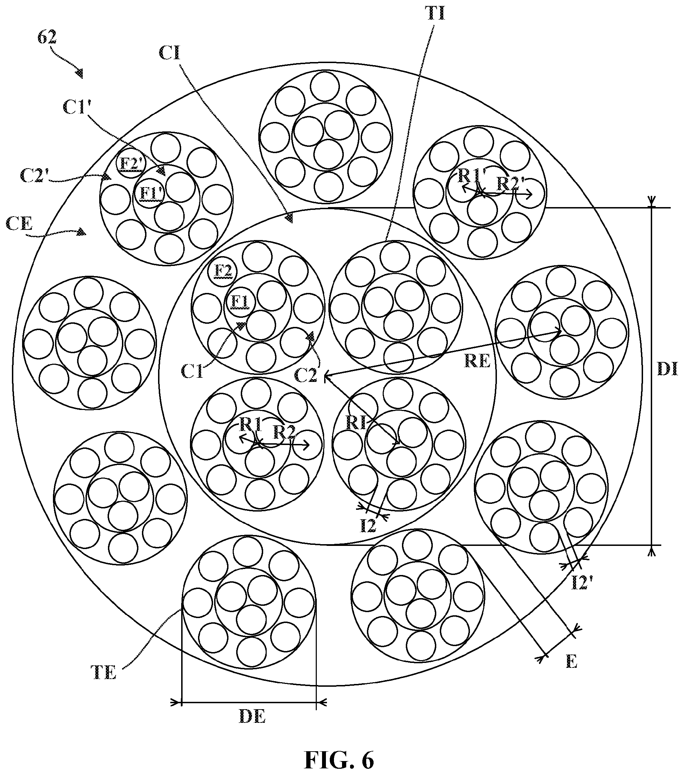

On a représenté sur la figure 6 un câble 62 à moyen module selon un troisième mode de réalisation de l'invention. Les éléments analogues à ceux des câbles précédemment décrits sont désignés par des références identiques.

Parmi les différences entre les câbles 60 et 62, on notera que l'angle d'hélice $\alpha$ de chaque toron interne TI dans la couche interne CI du câble 62 à moyen module va de 3° à 24° et en l'espèce $\alpha=9,1°$. On notera également que l'angle d'hélice $\alpha$' de chaque toron externe TE dans la couche externe CE du câble 62 à moyen module va de 7° à 22° et en l'espèce $\alpha'=16,2°$.

On notera également que, dans le cas du câble 62 à moyen module, $11° \leq 2\alpha + \beta + \gamma \leq 64°$ et comme Q>1, $16° \leq 2\alpha + \beta + y \leq 63°$ et en l'espèce, $2\alpha + \beta + y=29,6°$.

On notera également que, dans le mode de réalisation du câble 62 à moyen module, $78\,GPa \leq EI \leq 180\,GPa$, de préférence $100\,GPa \leq EI \leq 180\,GPa$. Ici, la couche interne présente un module relativement élevé, on a $95\,GPa \leq EI \leq 180\,GPa$ et en l'espèce, EI=173 GPa.

On notera également que, dans le mode de réalisation du câble 62 à moyen module, $23° \leq 2\alpha' + \beta' + \gamma' \leq 58°$ et comme Q'>1, $27° \leq 2\alpha' + \beta' + \gamma' \leq 58°$. En l'espèce, $2\alpha' + \beta' + \gamma'=49,5°$.

On notera également que, dans le mode de réalisation du câble 62 à moyen module, $45° \leq 2\alpha + \beta + \gamma + 2\alpha' + \beta' + \gamma' \leq 108°$ et comme Q>1 et Q'>1, $60° \leq 2\alpha + \beta + \gamma + 2\alpha' + \beta' + \gamma' \leq 108°$. En l'espèce $2\alpha + \beta + \gamma + 2\alpha' + \beta' + \gamma'=79,1°$.

On notera également que $0,60 \leq EC/EI \leq 1,20$, de préférence $0,80 \leq EC/EI \leq 1,15$ et ici, EC/EI=0,86.

On notera que, dans le mode de réalisation du câble 62 à moyen module, $131\,GPa \leq EC \leq 160\,GPa$. Ici EC=149 GPa.

## CABLE SELON UN 4ème MODE DE REALISATION DE L'INVENTION

On va maintenant décrire un câble 63 à très bas module selon un quatrième mode de réalisation de l'invention. Les éléments analogues à ceux des câbles précédemment décrits sont désignés par des références identiques.

Parmi les différences entre les câbles 60 et 63, on notera que, la couche interne présentant un module relativement élevée, on a $95\,GPa \leq EI \leq 180\,GPa$, de préférence $95\,GPa \leq EI \leq 175\,GPa$. En l'espèce, EI=158 GPa.

On notera également que $EC/EI \leq 0,59$, de préférence $0,40 \leq EC/EI \leq 0,59$ et ici EC/EI=0,50.

## CABLE SELON UN 5ème MODE DE REALISATION DE L'INVENTION

On va maintenant décrire un câble 64 à très bas module selon un cinquième mode de réalisation de l'invention. Les éléments analogues à ceux des câbles précédemment décrits sont désignés par des références identiques.

Parmi les différences entre les câbles 62 et 64, on notera que le câble 64 est tel que J=4 et L=9 et que chaque fil F1, F1', F2, F2' est tel que D1=D1'=D2=D2'=0,40 mm.

## CABLE SELON UN 6ème MODE DE REALISATION DE L'INVENTION

On va maintenant décrire un câble 65 à bas module selon un sixième mode de réalisation de l'invention. Les éléments analogues à ceux des câbles précédemment décrits sont désignés par des références identiques.

Parmi les différences entre les câbles 61 et 65, on notera que, la couche interne présentant un module relativement faible, on a $25\,GPa \leq EI \leq 94\,GPa$ et en l'espèce, EI=59 GPa.

On notera également que, dans le mode de réalisation du câble 65, $1,21 \leq EC/EI$, de préférence $1,21 \leq EC/EI \leq 3,00$ et ici EC/EI=1,63.

## CABLE SELON UN 7ème MODE DE REALISATION DE L'INVENTION

On va maintenant décrire un câble 66 à moyen module selon un septième mode de réalisation de l'invention. Les éléments analogues à ceux des câbles précédemment décrits sont désignés par des références identiques.

Parmi les différences entre les câbles 62 et 66, on notera que le câble 66 est tel que J=4 et L=10 et que chaque fil F1, F1', F2, F2' est tel que son diamètre D1, D1', D2, D2' va de 0,25 mm à 0,40 mm et ici D1=D1'=D2=D2'=0,35 mm.

## CABLE SELON UN 8ème MODE DE REALISATION DE L'INVENTION

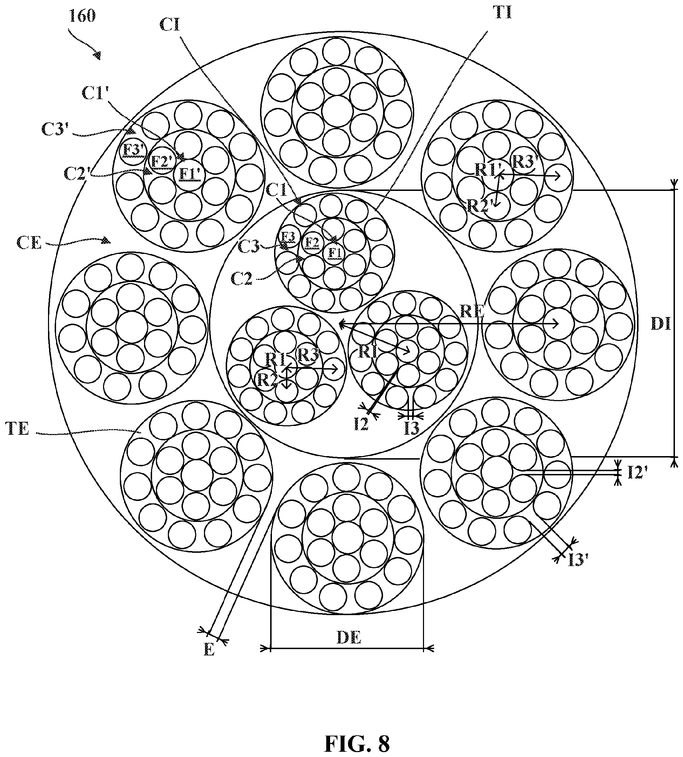

On a représenté sur la figure 8 le câble 160 selon un huitième mode de réalisation de l'invention.

Le câble 160 est métallique et est du type multi-torons à deux couches cylindriques. Ainsi, on comprend que les couches de torons constituant le câble 160 sont au nombre de deux, ni plus, ni moins. Les couches de torons sont adjacentes et concentriques. Le câble 160 est dépourvu de composition polymérique et de composition d'élastomère lorsqu'il n'est pas intégré au pneumatique.

Le câble 160 comprend une couche interne CI du câble 160 ainsi qu'une couche externe CE du câble 160. La couche interne CI est constituée de J>1 torons internes TI, c'est-à-dire plusieurs torons internes TI, enroulés en hélice. La couche externe CE est constituée de L>1 torons externes, c'est-à-dire plusieurs torons externes TE enroulés en hélice autour de la couche interne CI. En l'espèce, J=2, 3 ou 4, de préférence J=3 ou 4. De plus, L=7, 8, 9 ou 10, de préférence L=8, 9 ou 10. Avec J=3, L=7, 8 ou 9 et en l'espèce et ici J=3, L=8.

Le câble 160 comprend également une frette F constituée d'un unique fil de frette.

La couche interne CI est enroulée en hélice selon un sens d'enroulement de la couche interne du câble, ici le sens S. Les torons internes TI sont enroulés en hélice selon un pas PI tel que $10\,mm \leq PI \leq 65\,mm$ et de préférence $10\,mm \leq PI \leq 45\,mm$. Ici PI=20 mm. L'angle d'hélice $\alpha$ de chaque toron interne TI dans la couche interne CI du câble 160 va de 4° à 41° et dans le mode de réalisation du câble 160 à bas module de 4° à 31°, en l'espèce $\alpha$=13,4°.

La couche externe CE est enroulée en hélice autour de la couche interne CI selon un sens d'enroulement de la couche externe du câble opposé au sens d'enroulement de la couche interne du câble, ici le sens Z. Les torons externes TE sont enroulés en hélice autour du toron interne TI selon un pas PE tel que $30\,mm \leq PE \leq 65\,mm$ et de préférence $30\,mm \leq PE \leq 60\,mm$. Ici PE=40 mm. L'angle d'hélice $\alpha'$ de chaque toron externe TE dans la couche externe CE du câble 160 va de 13° à 36° et dans le mode de réalisation du câble 160 à bas module de 13° à 32°, en l'espèce $\alpha'$=19,1°.

La frette F est enroulée autour de la couche externe CE selon un sens d'enroulement de la frette, ici opposé au sens d'enroulement de la couche externe CE, en l'espèce dans le sens S. Le fil de frette est enroulé en hélice autour des torons externes TE selon un pas PF tel que $2\,mm \leq PF \leq 10\,mm$ et de préférence $3\,mm \leq PF \leq 8\,mm$. Ici pf=5,1 mm.

L'assemblage constitué par les couches interne CI et externe CE, c'est-à-dire le câble 160 sans la frette F, présente un diamètre D supérieur ou égal à 4 mm, de préférence supérieur ou égal à 4,5 mm et inférieur ou égal à 7 mm, de préférence inférieur ou égal à 6,5 mm. Ici, D=6 mm.

La couche interne CI de torons internes TI présente un diamètre DI. Chaque toron externe TE présente un diamètre DE. En l'espèce, DI=2,83 mm, DE=1,58 mm.

La couche externe CE du câble 160 est désaturée et incomplètement insaturée. Ici, la distance E inter-torons moyenne séparant deux torons externes TE adjacents est telle que E=29 $\mu$m. La somme SIE des distances interfils E de la couche externe CE est inférieure au diamètre DE des torons externes de la couche externe CE. Ici, la somme SIE=8 x 0,029=0,23 mm, valeur strictement inférieure à DE=1,58 mm.

Torons internes TI du câble 160

Chaque toron interne TI est à trois couches. Chaque toron interne TI comprend, ici est constitué, de trois couches, pas plus, pas moins.

Chaque toron interne TI comprend une couche interne C1 constituée de Q≥1 fils internes F1, une couche intermédiaire C2 constituée de P>1 fils intermédiaires F2 enroulés en hélice autour et au contact de la couche interne C1 et une couche externe C3 constituée de N>1 fils externes F3 enroulés en hélice autour et au contact de la couche intermédiaire C2.

Q=1, P=5 ou 6 et N=10, 11 ou 12, de préférence Q=1, P=5 ou 6, N=10 ou 11 et plus préférentiellement ici Q=1, P=6 et N=11.

Dans le cas où Q>1, la couche interne C1 de chaque toron interne TI est enroulée en hélice selon un sens d'enroulement de couche interne C1 du toron interne TI identique au sens d'enroulement de la couche interne CI du câble, ici selon le sens S. Ici, Le Q=1 fil interne F1 est assemblé au sein de chaque toron interne TI selon un pas infini de sorte que $\beta$=0.

La couche intermédiaire C2 de chaque toron interne TI est enroulée autour et au contact de la couche interne C1 selon un sens d'enroulement de couche intermédiaire C2 du toron interne TI identique au sens d'enroulement de la couche interne CI du câble, ici selon le sens S. Les P fils intermédiaires F2 sont enroulés en hélice autour du Q=1 fil interne F1 et sont assemblés au sein de chaque toron interne TI à un pas p2 tel que $5\,mm \leq p2 \leq 20\,mm$. Ici p2=7,7 mm. L'angle d'hélice $\delta$ de chaque fil intermédiaire F2 dans la couche intermédiaire C2 au sein de chaque toron interne TI va de 6° à 30°, ici $\delta$=12,2°.

La couche externe C3 de chaque toron interne TI est enroulée autour et au contact de la couche intermédiaire C2 selon un sens d'enroulement de couche externe C3 du toron interne TI identique au sens d'enroulement de la couche interne CI du câble, ici selon le sens S. Les N fils externes F3 sont enroulés en hélice autour des P fils intermédiaires F2 et sont assemblés au sein de chaque toron interne TI à un pas p3 tel que $10\,mm \leq p3 \leq 40\,mm$. Ici p3=15,4 mm. L'angle d'hélice $\gamma$ de chaque fil externe F3 dans la couche externe C3 au sein de chaque toron interne TI va de 7° à 30°, ici $\gamma$=12,1 °.

On a $25° \leq 3\alpha + \beta + \delta + \gamma \leq 158°$ et ici comme Q=1, $25° \leq 3\alpha + \beta + \delta + \gamma \leq 140°$. En l'espèce, dans ce premier mode de réalisation du câble 160 à bas module, $25° \leq 3\alpha + \beta + \delta + \gamma \leq 125°$ et ici comme Q=1, $25° \leq 3\alpha + \beta + \delta + \gamma \leq 120°$. Dans le cas du câble 160, $3\alpha + \beta + \delta + \gamma$=64,5°.

Chaque fil interne F1, intermédiaire F2 et externe F3 de chaque toron interne TI présente respectivement un diamètre D1, D2, D3. Chaque diamètre des fils internes D1, intermédiaire D2 et externes D3 de chaque toron interne TI va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque fil interne F1 de chaque toron interne TI présente un diamètre D1 supérieur ou égal, ici égal au diamètre D2 de chaque fil intermédiaire F2 de chaque toron interne TI. Chaque fil interne F1 de chaque toron interne TI présente un diamètre D1 supérieur ou égal, ici égal, au diamètre D3 de chaque fil externe F3 de chaque toron interne TI. Chaque fil intermédiaire F2 de chaque toron interne TI présente un diamètre D2 égal au diamètre D3 de chaque fil externe F3 de chaque toron interne TI. En l'espèce, D1=D2=D3=0,26 mm.

La couche intermédiaire C2 de chaque toron interne TI est saturée. Ici la distance I2 est environ égale à 0.

La couche externe C3 de chaque toron interne TI est désaturée et complètement insaturée. La distance interfils I3 de la couche externe C3 séparant en moyenne les N fils externes est supérieure ou égale à 5 $\mu$m. La distance interfils I3 est de préférence supérieure ou égale à 15 $\mu$m et ici égale à 30 $\mu$m. La somme SI3 des distances interfils I3 de la couche externe C3 est supérieure au diamètre D3 des fils externes F3 de la couche externe C3. Ici, la somme SI3=11 x 0,030=0,33 mm, valeur strictement supérieure à D2=0,26 mm.

On a également 25 GPa ≤ EI ≤ 180 GPa, de préférence 36 GPa ≤ EI ≤ 180 GPa et dans le mode de réalisation du câble 160 à bas module 25 GPa ≤ EI ≤ 180 GPa, de préférence 64 GPa ≤ EI ≤ 180 GPa. Ici, la couche interne présente un module relativement élevé, on a 95 GPa ≤ EI ≤ 180 GPa. En l'espèce, EI=147 GPa.

Torons externes TE du câble 160

Chaque toron externe TE est à trois couches. Ainsi, chaque toron externe TE comprend, ici est constitué, de trois couches, pas plus, pas moins.

Chaque toron externe TE comprend une couche interne C1' constituée de Q'≥1 fils internes F1', une couche intermédiaire C2' constituée de P'>1 fils intermédiaires F2' enroulée en hélice autour et au contact de la couche interne C1' et une couche externe C3' constituée de N'>1 fils externes F3' enroulés en hélice autour et au contact de la couche intermédiaire C2'.

Q'=1, P'=5 ou 6 et N'=10, 11 ou 12, de préférence Q'=1, P'=5 ou 6, N'=10 ou 11 et plus préférentiellement ici Q'=1, P'=6 et N'=11.

Dans le cas où Q'>1, la couche interne C1' de chaque toron externe TE est enroulée en hélice selon un sens d'enroulement de couche interne C1' du toron externe TE identique au sens d'enroulement de la couche externe CE du câble, ici selon le sens Z. Ici, le Q'=1 fil interne F1' est assemblé au sein de chaque toron externe TE à un pas p1' infini de sorte que β'=0.

La couche intermédiaire C2' d'e chaque toron externe TE est enroulée autour et au contact de la couche interne C1' selon un sens d'enroulement de couche intermédiaire C2' du toron externe TE identique au sens d'enroulement de la couche externe CE du câble, ici selon le sens Z. Les P' fils intermédiaires F2' sont enroulés en hélice autour du Q'=1 fil interne F1' et sont assemblés au sein de chaque toron externe TE à un pas p2' tel que 5 mm ≤ p2' ≤ 20 mm. Ici p2'=7,7 mm. L'angle d'hélice δ' de chaque fil intermédiaires F2' dans la couche intermédiaire C2' au sein de chaque toron externe TE va de 6° à 22°, ici δ'=15,5°.

La couche externe C3' d'e chaque toron externe TE est enroulée autour et au contact de la couche intermédiaire C2' selon un sens d'enroulement de couche externe C3' du toron externe TE identique au sens d'enroulement de la couche externe CE du câble, ici selon le sens Z. Les N' fils externes F3' sont enroulés en hélice autour des P' fils intermédiaires F2' et sont assemblés au sein de chaque toron externe TE à un pas p3' tel que 10 mm ≤ p3' ≤ 40 mm. Ici p3'=15,4 mm. L'angle d'hélice γ' de chaque fil externe F3' dans la couche externe C3' au sein de chaque toron externe TE va de 7° à 22°, ici γ'=14,6°.

On a 48° ≤ 3α' + β' + δ' + γ' ≤ 154° et ici comme Q'=1, 48° ≤ 3α' + β' + δ' + γ' ≤ 145°. En l'espèce, dans ce premier mode de réalisation du câble 160 à bas module, 54° ≤ 3α' + β' + δ' + γ' ≤ 123° et ici comme Q'=1, 54° ≤ 3α' + β' + δ' + γ' ≤ 118°. Dans le cas du câble 160, 3α' + β' + δ' + y'=87,4°.

Chaque fil interne F1', intermédiaire F2' et externe F3' de chaque toron externe TE présente respectivement un diamètre D1', D2', D3'. Chaque diamètre des fils internes D1', intermédiaires D2' et externes D3' de chaque toron externe TE va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque Q' fil interne F1' de chaque toron externe TI' présente un diamètre D1' supérieur ou égal au diamètre D2' de chaque fil intermédiaire F2' de chaque toron externe TE. Chaque Q' fil interne F1' de chaque toron externe TE présente un diamètre D1' supérieur ou égal au diamètre D3' de chaque fil externe F3' de chaque toron externe TE. Chaque N' fil intermédiaire F2' de chaque toron externe TE présente un diamètre D2' égal au diamètre D3' de chaque fil externe F3' de chaque toron externe TE. En l'espèce, D1'=0.38 mm > D2'=D3'=0,30 mm.

La couche intermédiaire C2' de chaque toron externe TE est désaturée et incomplètement insaturée. La distance interfils I2' de la couche intermédiaire C2' séparant en moyenne les P' fils intermédiaires est supérieure ou égale à 5 $\mu$m. La distance interfils I2' est de préférence supérieure ou égale à 15 $\mu$m et ici égale à 32 $\mu$m. La somme SI2' des distances interfils I2' de la couche intermédiaire C2' est supérieure au diamètre D2 des fils intermédiaires F2' de la couche intermédiaire C2'. Ici, la somme SI2'=6 x 0,032=0,19 mm, valeur strictement inférieure à D2'=0,30 mm. De plus, la somme SI2' des distances interfils I2' est telle que SI2' < D3' et même SI2' < 0.8 x D3'.

La couche externe C3' de chaque toron externe TE est désaturée et complètement insaturée. La distance interfils I3' de la couche externe C3' séparant en moyenne les N' fils externes est supérieure ou égale à 5 μm. La distance interfils I3' est de préférence supérieure ou égale à 15 μm, plus préférentiellement supérieure ou égale à 35 μm, encore plus préférentiellement supérieure ou égale à 50 μm et ici égale à 52 μm. La somme SI3' des distances interfils I3' de la couche externe C3' est supérieure au diamètre D3' des fils externes F3' de la couche externe C3'. Ici, la somme SI3'=11 x 0,052=0,57 mm, valeur strictement supérieure à D3'=0,30 mm.

Chaque fil F1, F2, F3, F1', F2', F3' présente une résistance à la rupture, notée Rm, telle que 2500 ≤ Rm ≤ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

On a $84° \leq 3\alpha + \beta + \delta + \gamma + 3\alpha' + \beta' + \delta' + \gamma' \leq 280°$. En l'espèce, comme Q=1 et Q'=1, $84° \leq 3\alpha + \beta + \delta + \gamma + 3\alpha' + \beta' + \delta' + \gamma' \leq 246°$. Dans le mode de réalisation du câble 160 à bas module, $107° \leq 3\alpha + \beta + \delta + \gamma + 3\alpha' + \beta' + \delta' + \gamma' \leq 211°$ et comme Q=1 et Q'=1, $107° \leq 3\alpha + \beta + \delta + \gamma + 3\alpha' + \beta' + \delta' + \gamma' \leq 197°$ et ici $3\alpha + \beta + \delta + \gamma + 3\alpha' + \beta' + \delta' + \gamma'$=151,9°.

On a 0,60 ≤ EC/EI ≤ 1,20 et ici EC/EI=0,70.

On a également 50 GPa ≤ EC ≤ 160 GPa et dans ce mode de réalisation du câble 160 à bas module, 90 GPa ≤ EC ≤ 130 GPa. Ici EC=103 GPa.

## CABLE SELON UN 9ème MODE DE REALISATION DE L'INVENTION

On va maintenant décrire un câble 161 à bas module selon un deuxième mode de réalisation de l'invention. Les éléments analogues à ceux du câble 160 sont désignés par des références identiques.

Parmi les différences entre les câbles 160 et 161, on notera particulièrement que le câble 161 est tel que J=4 et L=10 et que chaque fil F1, F1', F2, F2', F3, F3' est tel que son diamètre D1, D1', D2, D2', D3, D3' est tel que D1=D2=D3=0,40 mm et D1'=D2'=D3'=0,30 mm.

## CABLE SELON UN 10ème MODE DE REALISATION DE L'INVENTION

On va maintenant décrire un câble 162 à bas module selon un troisième mode de réalisation de l'invention. Les éléments analogues à ceux des câbles précédemment décrits sont désignés par des références identiques.

Parmi les différences entre les câbles 160 et 162, Q>1, Q=2, 3 ou 4, P=7, 8, 9 ou 10, N=13, 14 ou 15 et ici Q=3, P=8 et N=13. Les Q fils internes F1 sont enroulés en hélice au sein de chaque toron interne TI à un pas p1 tel que 5 mm ≤ p1 ≤ 15 mm. Ici, p1=8 mm. L'angle d'hélice β de chaque fil interne F1 de la couche interne au sein de chaque toron interne TI va de 4° à 17°, ici β=6,7°. Les P fils intermédiaires F2 sont enroulés en hélice autour des Q fils internes F1 et sont assemblés au sein de chaque toron interne TI à un pas p2 tel que 10 mm ≤ p2 ≤ 20 mm. Ici p2=15 mm. L'angle d'hélice δ de chaque fil intermédiaire F2 dans la couche intermédiaire C2 au sein de chaque toron interne TI va de 8° à 22°, ici δ=9,8°. Les N fils externes F3 sont enroulés en hélice autour des P fils intermédiaires F2 et sont assemblés au sein de chaque toron interne TI à un pas p3 tel que 10 mm ≤ p3 ≤ 40 mm. Ici p3=20 mm. L'angle d'hélice γ de chaque fil externe F3 dans la couche externe C3 au sein de chaque toron interne TI va de 9° à 25°, ici γ=11,9°.

On notera également que, comme Q>1, on a $36° \leq 3\alpha + \beta + \delta + \gamma \leq 158°$ et dans le mode de réalisation du câble 162 à bas module, $36° \leq 3\alpha + \beta + \delta + \gamma \leq 125°$ et ici $3\alpha + \beta + \delta + \gamma$=108,5°.

On notera également que, la couche interne du câble 162 présentant un module relativement faible, 25 GPa ≤ EI ≤ 94 GPa, de préférence 64 GPa ≤ EI ≤ 94 GPa et ici EI=82 GPa.

On notera également que Q'>1, Q'=2, 3 ou 4, P'=7, 8, 9 ou 10, N'=13, 14 ou 15 et ici Q'=3, P'=8 et N'=13. Les Q' fils internes F1' sont enroulés en hélice au sein de chaque toron externe TE à un pas p1' tel que 5 mm ≤ p1' ≤ 15 mm. Ici, p1'=12 mm. L'angle d'hélice β' de chaque fil interne F1' de la couche interne au sein de chaque toron externe TE va de 4° à 20°, ici β'=4,5°. Les P' fils intermédiaires F2' sont assemblés au sein de chaque toron externe TE à un pas p2' tel que 10 mm ≤ p2' ≤ 20 mm. Ici p2'=18 mm. L'angle d'hélice δ' de chaque fil intermédiaires F2' dans la couche intermédiaire C2' au sein de chaque toron externe TE va de 8° à 22°, ici δ'=8,1°. Les N' fils externes F3' sont assemblés au sein de chaque toron externe TE à un pas p3' tel que 10 mm ≤ p3' ≤ 40 mm. Ici p3'=25 mm. L'angle d'hélice γ' de chaque fil externe F3' dans la couche externe C3' au sein de chaque toron externe TE va de 9° à 25°, ici γ'=9,6°.

On notera également que, comme Q'>1, on a $61° \leq 3\alpha' + \beta' + \delta' + \gamma' \leq 154°$ et dans le cas du câble 162 à bas module, $65° \leq 3\alpha' + \beta' + \delta' + \gamma' \leq 123°$ et ici $3\alpha' + \beta' + \delta' + \gamma'$=71,4°.

On notera également que, comme Q>1 et Q'>1, on a $101° \leq 3\alpha + \beta + \delta + \gamma + 3\alpha' + \beta' + \delta' + \gamma' \leq 280°$ et dans le mode de réalisation du câble 162 à bas module, $120° \leq 3\alpha + \beta + \delta + \gamma + 3\alpha' + \beta' + \delta' + \gamma' \leq 211°$ et ici $3\alpha + \beta + \delta + \gamma + 3\alpha' + \beta' + \delta' + \gamma'$=179,9°.

. On a également 1,21 ≤ EC/EI et de préférence 1,21 ≤ EC/EI ≤ 3,00 et dans le mode de réalisation du câble 162 à bas module, $1{,}21 \leq EC/EI \leq 3{,}00$ et ici $EC/EI{=}1{,}29$.

**CABLE SELON UN 11ème MODE DE REALISATION DE L'INVENTION**

On va maintenant décrire un câble 163 à très bas module selon un quatrième mode de réalisation de l'invention. Les éléments analogues à ceux des câbles précédemment décrits sont désignés par des références identiques.

Parmi les différences entre les câbles 160 et 163, on notera que l'angle d'hélice $\alpha$ de chaque toron interne TI dans la couche interne CI du câble 163 à très bas module va de 6° à 41°, en l'espèce $\alpha{=}24{,}6°$.

On notera également que l'angle d'hélice $\alpha'$ de chaque toron externe TE dans la couche externe CE du câble 163 à très bas module de 14° à 36°, en l'espèce $\alpha'{=}16{,}3°$.

On notera également que Q>1, Q=2, 3 ou 4, P=7, 8, 9 ou 10, N=13, 14 ou 15 et ici Q=3, P=8 et N=13. Les Q fils internes F1 sont enroulés en hélice au sein de chaque toron interne TI à un pas p1 tel que $5\ mm \leq p1 \leq 15\ mm$. Ici, p1=5 mm. L'angle d'hélice $\beta$ de chaque fil interne F1 de la couche interne au sein de chaque toron interne TI va de 4° à 17°, ici $\beta{=}12{,}4°$. Les P fils intermédiaires F2 sont enroulés en hélice autour des Q fils internes F1 et sont assemblés au sein de chaque toron interne TI à un pas p2 tel que $10\ mm \leq p2 \leq 20\ mm$. Ici p2=10 mm. L'angle d'hélice $\delta$ de chaque fil intermédiaire F2 dans la couche intermédiaire C2 au sein de chaque toron interne TI va de 8° à 22°, ici $\delta{=}16{,}6°$. Les N fils externes F3 sont enroulés en hélice autour des P fils intermédiaires F2 et sont assemblés au sein de chaque toron interne TI à un pas p3 tel que $10\ mm \leq p3 \leq 40\ mm$. Ici p3=15 mm. L'angle d'hélice $\gamma$ de chaque fil externe F3 dans la couche externe C3 au sein de chaque toron interne TI va de 9° à 25°, ici $\gamma{=}18°$.

On notera également que, dans ce mode de réalisation du câble 163 à très bas module, $29° \leq 3\alpha + \beta + \delta + \gamma \leq 158°$ et ici comme Q>1, $42° \leq 3\alpha + \beta + \delta + \gamma \leq 158°$. Dans le cas du câble 163, $3\alpha + \beta + \delta + \gamma{=}120{,}8°$.

On notera également que, dans le as du câble 163 à très bas module présentant une couche interne présentant un module relativement faible, $25\ GPa \leq EI \leq 94\ GPa$, de préférence $36\ GPa \leq EI \leq 94\ GPa$ et en l'espèce, EI=74 GPa.

On notera également que, dans le mode de réalisation du câble 163 à très bas module, $65° \leq 3\alpha' + \beta' + \delta' + \gamma' \leq 153°$ et ici comme Q'=1, $65° \leq 3\alpha' + \beta' + \delta' + \gamma' \leq 143°$ et en l'espèce, $3\alpha' + \beta' + \delta' + \gamma'{=}91{,}8°$.

On notera également que, comme Q>1 et Q'=1, $96° \leq 3\alpha + \beta + \delta + \gamma + 3\alpha' + \beta' + \delta' + \gamma' \leq 261°$. Dans le mode de réalisation du câble 163 à très bas module, $138° \leq 3\alpha + \beta + \delta + \gamma + 3\alpha' + \beta' + \delta' + \gamma' \leq 280°$ et comme Q>1 et Q'=1, $144° \leq 3\alpha + \beta + \delta + \gamma + 3\alpha' + \beta' + \delta' + \gamma' \leq 261°$ et ici $3\alpha + \beta + \delta + \gamma + 3\alpha' + \beta' + \delta' + \gamma'{=}212{,}6°$.

On notera que dans le mode de réalisation du câble 163 à très bas module $0{,}60 \leq EC/EI \leq 1{,}20$ et ici $EC/EI{=}1{,}08$.

On a également $50\ GPa \leq EC \leq 160\ GPa$ et dans ce mode de réalisation du câble 163 à très bas module $50\ GPa \leq EC \leq 89\ GPa$. Ici EC=80 GPa.

**CABLE SELON UN 12ème MODE DE REALISATION DE L'INVENTION**

On va maintenant décrire un câble 164 à très bas module selon un cinquième mode de réalisation de l'invention. Les éléments analogues à ceux des câbles précédemment décrits sont désignés par des références identiques.

Parmi les différences entre les câbles 163 et 164, on notera que la couche interne présente un module relativement élevé et est telle que $95\ GPa \leq EI \leq 180\ GPa$, de préférence $95\ GPa \leq EI \leq 175\ GPa$. En l'espèce, EI=157 GPa.

On notera également que Q'>1, Q'=2, 3 ou 4, P'=7, 8, 9 ou 10, N'=13, 14 ou 15 et ici Q'=3, P'=8 et N'=13. Les Q' fils internes F1' sont enroulés en hélice au sein de chaque toron externe TE à un pas p1' tel que $5\ mm \leq p1' \leq 15\ mm$. Ici, p1'=8 mm. L'angle d'hélice $\beta'$ de chaque fil interne F1' de la couche interne au sein de chaque toron externe TE va de 4° à 20°, ici $\beta'{=}7{,}8°$. Les P' fils intermédiaires F2' sont assemblés au sein de chaque toron externe TE à un pas p2' tel que $10\ mm \leq p2' \leq 20\ mm$. Ici p2'=15 mm. L'angle d'hélice $\delta'$ de chaque fil intermédiaires F2' dans la couche intermédiaire C2' au sein de chaque toron externe TE va de 8° à 22°, ici $\delta'{=}11{,}2°$. Les N' fils externes F3' sont assemblés au sein de chaque toron externe TE à un pas p3' tel que $10\ mm \leq p3' \leq 40\ mm$. Ici p3'=20 mm. L'angle d'hélice $\gamma'$ de chaque fil externe F3' dans la couche externe C3' au sein de chaque toron externe TE va de 9° à 25°, ici $\gamma'{=}13{,}7°$.

On notera que a $48° \leq 3\alpha' + \beta' + \delta' + \gamma' \leq 154°$ et ici comme Q'>1, $61° \leq 3\alpha' + \beta' + \delta' + \gamma' \leq 154°$. En l'espèce, dans ce mode de réalisation du câble 164 à très bas module, $65° \leq 3\alpha' + \beta' + \delta' + \gamma' \leq 153°$ et ici comme Q'>1, $78° \leq 3\alpha' + \beta' + \delta' + \gamma' \leq 153°$. Dans le cas du câble 164, $3\alpha' + \beta' + \delta' + y'{=}130{,}8°$.

On notera que $84° \leq 3\alpha + \beta + \delta + \gamma + 3\alpha' + \beta' + \delta' + \gamma' \leq 280°$. En l'espèce, comme Q> 1 et Q'> 1, $101° \leq 3\alpha + \beta + \delta + \gamma + 3\alpha' + \beta' + \delta' + \gamma' \leq 280°$. Dans le mode de réalisation du câble 164 à très bas module, $138° \leq 3\alpha + \beta + \delta + y + 3\alpha' + \beta' + \delta' + \gamma' \leq 280°$ et comme Q>1 et Q'>1, $144° \leq 3\alpha + \beta + \delta + \gamma + 3\ a' + \beta' + \delta' + \gamma' \leq 280°$ et ici $3\alpha + \beta + \delta + \gamma + 3\alpha' + \beta' + \delta' + \gamma'{=}190{,}1°$.

On notera également que $EC/EI \leq 0{,}59$, de préférence $0{,}40 \leq EC/EI \leq 0{,}59$ et ici $EC/EI{=}0{,}49$.

**CABLE SELON UN 13ème MODE DE REALISATION DE L'INVENTION**

On va maintenant décrire un câble 165 à très bas module selon un sixième mode de réalisation de l'invention. Les éléments analogues à ceux des câbles précédemment décrits sont désignés par des références identiques.

Parmi les différences entre les câbles 163 et 165, on notera que Q=1, P=5 ou 6 et N=10, 11 ou 12, de préférence Q=1, P=5 ou 6, N=10 ou 11 et plus préférentiellement ici Q=1, P=6 et N=11et que le Q=1 fil interne F1 est assemblé au sein de chaque toron interne TI selon un pas infini de sorte que $\beta$=0. Les P fils intermédiaires F2 sont enroulés en hélice autour du Q=1 fil interne F1 et sont assemblés au sein de chaque toron interne TI à un pas p2 tel que 5 mm $\leq$ p2 $\leq$ 20 mm. Ici p2=15 mm. L'angle d'hélice $\delta$ de chaque fil intermédiaire F2 dans la couche intermédiaire C2 au sein de chaque toron interne TI va de 6° à 30°, ici $\delta$=9,6°. Les N fils externes F3 sont enroulés en hélice autour des P fils intermédiaires F2 et sont assemblés au sein de chaque toron interne TI à un pas p3 tel que 10 mm $\leq$ p3 $\leq$ 40 mm. Ici p3=25 mm. L'angle d'hélice $\gamma$ de chaque fil externe F3 dans la couche externe C3 au sein de chaque toron interne TI va de 7° à 30°, ici $\gamma$=11,4°.

On notera également que 25° $\leq$ 3$\alpha$ + $\beta$ + $\delta$ + $\gamma$ $\leq$ 158° et ici comme Q=1, 25° $\leq$ 3$\alpha$ + $\beta$ + $\delta$ + $\gamma$ $\leq$ 140°. En l'espèce, dans ce mode de réalisation du câble 165 à très bas module, 29° $\leq$ 3$\alpha$ + $\beta$ + $\delta$ + $\gamma$ < 158° et ici comme Q=1, 29° $\leq$ 3$\alpha$ + $\beta$ + $\delta$ + $\gamma$ < 140°. Dans le cas du câble 165, 3$\alpha$ + $\beta$ + $\delta$ + $\gamma$=120,9°.

On notera également que Q'>1, Q'=2, 3 ou 4, P'=7, 8, 9 ou 10, N'=13, 14 ou 15 et ici Q'=3, P'=8 et N'=13. Les Q' fils internes F1' sont enroulés en hélice au sein de chaque toron externe TE à un pas p1' tel que 5 mm $\leq$ p1' $\leq$ 15 mm. Ici, p1'=12 mm. L'angle d'hélice $\beta$' de chaque fil interne F1' de la couche interne au sein de chaque toron externe TE va de 4° à 20°, ici $\beta$'=5,2°. Les P' fils intermédiaires F2' sont assemblés au sein de chaque toron externe TE à un pas p2' tel que 10 mm $\leq$ p2' $\leq$ 20 mm. Ici p2'=18 mm. L'angle d'hélice $\delta$' de chaque fil intermédiaires F2' dans la couche intermédiaire C2' au sein de chaque toron externe TE va de 8° à 22°, ici $\delta$'=9,4°. Les N' fils externes F3' sont assemblés au sein de chaque toron externe TE à un pas p3' tel que 10 mm $\leq$ p3' $\leq$ 40 mm. Ici p3'=25 mm. L'angle d'hélice $\gamma$' de chaque fil externe F3' dans la couche externe C3' au sein de chaque toron externe TE va de 9° à 25°, ici $\gamma$'=11°.

On notera que 48° $\leq$ 3$\alpha$' + $\beta$' + $\delta$' + $\gamma$' $\leq$ 154° et ici comme Q'>1, 61° $\leq$ 3$\alpha$' + $\beta$' + $\delta$' + $\gamma$' $\leq$ 154°. En l'espèce, dans ce mode de réalisation du câble 165 à très bas module, 65° $\leq$ 3$\alpha$' + $\beta$' + $\delta$' + $\gamma$' $\leq$ 153° et ici comme Q'>1, 78° $\leq$ 3$\alpha$' + $\beta$' + $\delta$' + $\gamma$' $\leq$ 153°. Dans le cas du câble 165, 3$\alpha$' + $\beta$' + $\delta$' + $\gamma$'=85,9°.

On notera que 84° $\leq$ 3$\alpha$ + $\beta$ + $\delta$ + $\gamma$ + 3$\alpha$' + $\beta$' + $\delta$' + $\gamma$' $\leq$ 280°. En l'espèce, comme Q=1 et Q'>1, 88° $\leq$ 3$\alpha$ + $\beta$ + $\delta$ + $\gamma$ + 3$\alpha$' + $\beta$' + $\delta$' + $\gamma$' $\leq$ 254°. Dans le mode de réalisation du câble 165 à très bas module, 138° $\leq$ 3$\alpha$ + $\beta$ + $\delta$ + $\gamma$ + 3$\alpha$' + $\beta$' + $\delta$' + $\gamma$' $\leq$ 280° et comme Q=1 et Q'>1, 148° $\leq$ 3$\alpha$ + $\beta$ + $\delta$ + $\gamma$ + 3$\alpha$' + $\beta$' + $\delta$' + $\gamma$' $\leq$ 254° et ici 3$\alpha$ + $\beta$ + $\delta$ + $\gamma$ + 3$\alpha$' + $\beta$' + $\delta$' + $\gamma$' =206,8°.

On notera également que 1,21 $\leq$ EC/EI, de préférence 1,21 $\leq$ EC/EI $\leq$ 3,00 et ici EC/EI=1,44.

## CABLE SELON UN 14$^{ème}$ MODE DE REALISATION DE L'INVENTION

On va maintenant décrire un câble 166 à moyen module selon un septième mode de réalisation de l'invention. Les éléments analogues à ceux des câbles précédemment décrits sont désignés par des références identiques.

Parmi les différences entre les câbles 160 et 166, on notera que l'angle d'hélice $\alpha$ de chaque toron interne TI dans la couche interne CI du câble 166 va, dans le mode de réalisation du câble 166 à moyen module, de 4° à 22°, en l'espèce $\alpha$=17,9°. L'angle d'hélice $\alpha$' de chaque toron externe TE dans la couche externe CE du câble 166 va, dans le mode de réalisation du câble 166 à moyen module de 11° à 21°, en l'espèce $\alpha$'=13,2°.

On notera également que, dans le premier mode de réalisation du câble 166 à moyen module, 25° $\leq$ 3$\alpha$ + $\beta$ + $\delta$ + $\gamma$ $\leq$ 97°. Dans le cas du câble 166, 3$\alpha$ + $\beta$ + $\delta$ + $\gamma$-91°.

On a également dans le cas du câble 166 à moyen module 78 GPa $\leq$ EI $\leq$ 180 GPa, de préférence, 100 GPa $\leq$ EI $\leq$ 180 GPa. La couche interne du câble 166 présentant un module relativement élevé, 95 GPa $\leq$ EI $\leq$ 180 GPa et ici EI=96 GPa.

On notera également que Q'>1, Q'=2, 3 ou 4, P'=7, 8, 9 ou 10, N'=13, 14 ou 15 et ici Q'=3, P'=8 et N'=13. Les Q' fils internes F1' sont enroulés en hélice au sein de chaque toron externe TE à un pas p1' tel que 5 mm $\leq$ p1' $\leq$ 15 mm. Ici, p1'=12 mm. L'angle d'hélice $\beta$' de chaque fil interne F1' de la couche interne au sein de chaque toron externe TE va de 4° à 20°, ici $\beta$'=4,5°. Les P' fils intermédiaires F2' sont assemblés au sein de chaque toron externe TE à un pas p2' tel que 10 mm $\leq$ p2' $\leq$ 20 mm. Ici p2'=18 mm. L'angle d'hélice $\delta$' de chaque fil intermédiaires F2' dans la couche intermédiaire C2' au sein de chaque toron externe TE va de 8° à 22°, ici $\delta$'=8,1°. Les N' fils externes F3' sont assemblés au sein de chaque toron externe TE à un pas p3' tel que 10 mm $\leq$ p3' $\leq$ 40 mm. Ici p3'=25 mm. L'angle d'hélice $\gamma$' de chaque fil externe F3' dans la couche externe C3' au sein de chaque toron externe TE va de 9° à 25°, ici $\gamma$'=9,6°.

On notera également que, dans le cas du câble 166 à moyen module, 48° $\leq$ 3$\alpha$' + $\beta$' + $\delta$' + $\gamma$' $\leq$ 89° et ici comme Q'>1, 61° $\leq$ 3$\alpha$' + $\beta$' + $\delta$' + $\gamma$' $\leq$ 89° et ici 3$\alpha$' + $\beta$' + $\delta$' + $\gamma$'=61,8°.

On note que, dans le mode de réalisation du câble 166 à moyen module, 84° $\leq$ 3$\alpha$ + $\beta$ + $\delta$ + $\gamma$ + 3$\alpha$' + $\beta$' + $\delta$' + $\gamma$' $\leq$ 161° et comme Q=1 et Q'>1, 88° $\leq$ 3$\alpha$ + $\beta$ + $\delta$ + $\gamma$ + 3$\alpha$' + $\beta$' + $\delta$' + $\gamma$' $\leq$ 153° et ici 3$\alpha$ + $\beta$ + $\delta$ + $\gamma$ + 3$\alpha$' + $\beta$' + $\delta$' + $\gamma$' =152,8°.

On a également 1,21 $\leq$ EC/EI, de préférence 1,21 $\leq$ EC/EI $\leq$ 3,00 et ici EC/EI=1,48.

On a également dans ce mode de réalisation du câble 166 à moyen module 131 GPa $\leq$ EC $\leq$ 160 GPa. Ici EC=141 GPa.

## CABLE SELON UN 15ème MODE DE REALISATION DE L'INVENTION

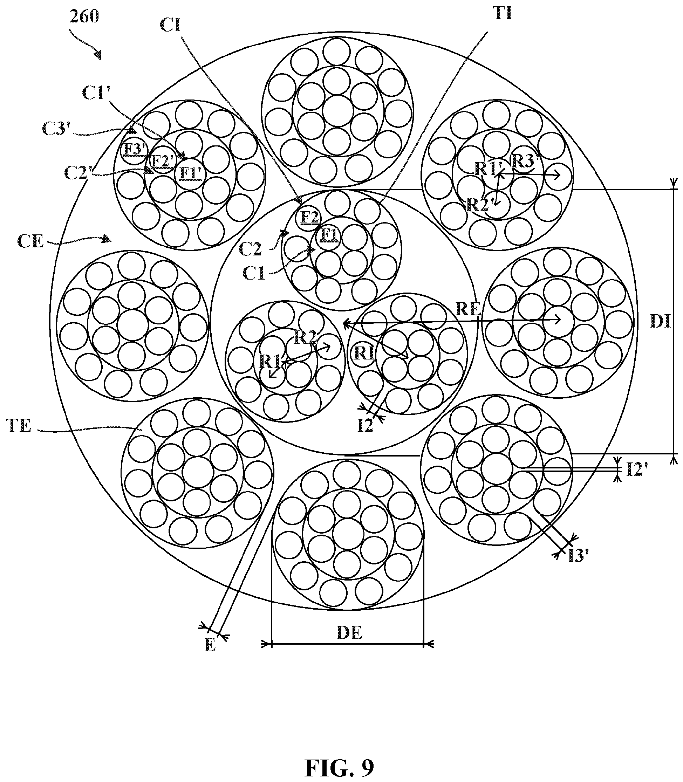

On a représenté sur la figure 9 le câble 260 à bas module selon un quinzième mode de réalisation de l'invention.

Le câble 260 est métallique et est du type multi-torons à deux couches cylindriques. Ainsi, on comprend que les couches de torons constituant le câble 260 sont au nombre de deux, ni plus, ni moins. Les couches de torons sont adjacentes et concentriques. Le câble 260 est dépourvu de composition polymérique et de composition d'élastomère lorsqu'il n'est pas intégré au pneumatique.

Le câble 260 comprend une couche interne CI du câble 260 ainsi qu'une couche externe CE du câble 260. La couche interne CI est constituée de J>1 torons internes TI, c'est-à-dire plusieurs torons internes TI, enroulés en hélice. La couche externe CE est constituée de L>1 torons externes, c'est-à-dire plusieurs torons externes TE enroulé en hélice autour de la couche interne CI. En l'espèce, J=2, 3 ou 4, de préférence J=3 ou 4. De plus, L=7, 8, 9 ou 10, de préférence L=8, 9 ou 10. Avec J=3, L=7, 8 ou 9 et en l'espèce et ici J=3, L=8.

Le câble 260 comprend également une frette F constituée d'un unique fil de frette.

La couche interne CI est enroulée en hélice selon un sens d'enroulement de la couche interne du câble, ici le sens S. Les torons internes TI sont enroulés en hélice selon un pas PI tel que 10 mm ≤ PI ≤ 65 mm et de préférence 10 mm ≤ PI ≤ 45 mm. Ici PI=20 mm. L'angle d'hélice $\alpha$ de chaque toron interne TI dans la couche interne CI du câble 260 va de 3° à 36° et, dans le cas du câble 260 à bas module, de 3° à 31° et en l'espèce $\alpha$=13,6°.

La couche externe CE est enroulée en hélice autour de la couche interne CI selon un sens d'enroulement de la couche externe du câble opposé au sens d'enroulement de la couche interne du câble, ici le sens Z. Les torons externes TE sont enroulés en hélice autour du toron interne TI selon un pas PE tel que 30 mm ≤ PE ≤ 65 mm et de préférence 30 mm ≤ PE ≤ 60 mm. Ici PE=40 mm. L'angle d'hélice $\alpha$' de chaque toron externe TE dans la couche externe CE du câble 260 va de 10° à 34°, et, dans le cas du câble 260 à bas module, de 10° à 31° et en l'espèce $\alpha$'=19,1°.

La frette F est enroulée autour de la couche externe CE selon un sens d'enroulement de la frette, ici opposé au sens d'enroulement de la couche externe CE, en l'espèce dans le sens S. Le fil de frette est enroulé en hélice autour des torons externes TE selon un pas PF tel que 2 mm ≤ PF ≤ 10 mm et de préférence 3 mm ≤ PF ≤ 8 mm. Ici pf=5,1 mm.

L'assemblage constitué par les couches interne CI et externe CE, c'est-à-dire le câble 260 sans la frette F, présente un diamètre D supérieur ou égal à 4 mm, de préférence supérieur ou égal à 4,5 mm et inférieur ou égal à 7 mm, de préférence inférieur ou égal à 6,5 mm. Ici, D=6,03 mm.

La couche interne CI de torons internes TI présente un diamètre DI. Chaque toron externe TE présente un diamètre DE. En l'espèce, DI=2,87 mm, DE=1,58 mm.

La couche externe CE du câble 260 est désaturée et incomplètement insaturée. La distance E inter-torons moyenne séparant deux torons externes TE adjacents est supérieure ou égale à 30 μm. Ici, la distance E inter-torons moyenne séparant deux torons externes TE adjacents est telle que E=43 μm. La somme SIE des distances interfils E de la couche externe CE est inférieure au diamètre DE des torons externes de la couche externe CE. Ici, la somme SIE=8 x 0,043= 0,34 mm, valeur strictement inférieure à DE=1,58 mm.

Torons internes TI du câble 260

Chaque toron interne TI est à deux couches. Chaque toron interne TI comprend, ici est constitué, de deux couches, pas plus, pas moins.

Chaque toron interne TI comprend une couche interne C1 constituée de Q ≥ 1 fils internes F1 et une couche externe C2 constituée de N>1 fils externes F2 enroulés en hélice autour et au contact de la couche interne C1.

Q=2, 3 ou 4, de préférence Q=3 ou 4. N=7, 8, 9 ou 10, de préférence N=8, 9 ou 10. Avec Q=4, N=7, 8 ou 9 et en l'espèce Q=4, N=9.

La couche interne C1 de chaque toron interne TI est enroulée en hélice selon un sens d'enroulement de couche interne C1 du toron interne TI identique au sens d'enroulement de la couche interne CI du câble, ici selon le sens S. Les Q fils internes F1 sont assemblés au sein de chaque toron interne TI à un pas p1 tel que 5 mm ≤ p1 ≤ 20 mm. Ici p1=7,7 mm. L'angle d'hélice $\beta$ de chaque fil interne F1 dans la couche interne C1 au sein de chaque toron interne TI va de 4° à 17°, ici $\beta$=9,9°.

La couche externe C2 de chaque toron interne TI est enroulée autour et au contact de la couche interne C1 selon un sens d'enroulement de couche externe C2 du toron interne TI identique au sens d'enroulement de la couche interne CI du câble, ici selon le sens S. Les N fils externes F2 sont enroulés en hélice autour des Q fils internes F1 et sont assemblés au sein de chaque toron interne TI à un pas p2 tel que 5 mm ≤ p2 ≤ 40 mm. Ici p2=15,4 mm. L'angle d'hélice $\gamma$ de chaque fil externe F2 dans la couche externe C2 au sein de chaque toron interne TI va de 7° à 20°, ici $\gamma$=11,8°.

On a 16° ≤ 2$\alpha$ + $\beta$ + $\gamma$ ≤ 105° et comme Q>1, 20° ≤ 2$\alpha$ + $\beta$ + $\gamma$ ≤ 105°. En l'espèce, dans le cas du câble 260 à bas module, 16° ≤ 2$\alpha$ + $\beta$ + $\gamma$ ≤ 86° et comme Q>1, 19° ≤ 2$\alpha$ + $\beta$ + $\gamma$ ≤ 85° et ici 2$\alpha$ + $\beta$ + $\gamma$ =48,9°.

Chaque fil interne F1 et externe F2 de chaque toron interne TI présente respectivement un diamètre D1, D2. Chaque diamètre des fils internes D1 et externes D2 de chaque toron interne TI va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque fil interne F1 de chaque toron interne TI présente un diamètre D1 supérieur ou égal, ici égal, au diamètre D2 de chaque fil externe F2 de chaque toron interne TI. En l'espèce, D1=D2=0,30 mm.

Du fait du pas p2 relativement court, la couche externe C2 de chaque toron interne TI est désaturée et complètement insaturée. La distance interfils I2 de la couche externe C2 séparant en moyenne les N fils externes est supérieure ou égale à 5 $\mu$m. La distance interfils I2 est de préférence supérieure ou égale à 15 $\mu$m, plus préférentiellement supérieure ou égale à 35 $\mu$m et ici égale à 46 $\mu$m. La somme SI2 des distances interfils I2 de la couche externe C2 est supérieure au diamètre d2 des fils externes F2 de la couche externe C2. Ici, la somme SI2=9 x 0,046=0,41 mm, valeur strictement supérieure à D2=0,30 mm.

On a également 25 GPa $\leq$ EI $\leq$ 180 GPa, de préférence 36 GPa $\leq$ EI $\leq$ 180 GPa et dans le cas du câble 260 à bas module qui présente une couche interne présentant un module relativement élevé, 95 GPa $\leq$ EI $\leq$ 180 GPa. En l'espèce, EI=148 GPa.

Torons externes TE du câble 260

Chaque toron externe TE est à trois couches. Ainsi, chaque toron externe TE comprend, ici est constitué, de trois couches, pas plus, pas moins.

Chaque toron externe TE comprend une couche interne C1' constituée de Q'$\geq$1 fils internes F1', une couche intermédiaire C2' constituée de P'>1 fils intermédiaires F2' enroulée en hélice autour et au contact de la couche interne C1' et une couche externe C3' constituée de N'>1 fils externes F3' enroulés en hélice autour et au contact de la couche intermédiaire C2'.

Q'=1, P'=5 ou 6 et N'=10, 11 ou 12, de préférence Q'=1, P'=5 ou 6, N'=10 ou 11 et plus préférentiellement ici Q'=1, P'=6 et N'=11.

Dans le cas où Q'>1, la couche interne C1' de chaque toron externe TE est enroulée en hélice selon un sens d'enroulement de couche interne C1' du toron externe TE, le sens d'enroulement de couche interne C1' du toron externe TE est identique au sens d'enroulement de la couche externe CE du câble, ici selon le sens Z. Ici, le Q'=1 fil interne F1' est assemblé au sein de chaque toron externe TE à un pas p1' infini de sorte que $\beta$'=0.

La couche intermédiaire C2' d'e chaque toron externe TE est enroulée autour et au contact de la couche interne C1' selon un sens d'enroulement de couche intermédiaire C2' du toron externe TE identique au sens d'enroulement de la couche externe CE du câble, ici selon le sens Z. Les P' fils intermédiaires F2' sont enroulés en hélice autour du Q'=1 fil interne F1' et sont assemblés au sein de chaque toron externe TE à un pas p2' tel que 5 mm $\leq$ p2' $\leq$ 20 mm. Ici p2'=7,7 mm. L'angle d'hélice $\delta$' de chaque fil intermédiaires F2' dans la couche intermédiaire C2' au sein de chaque toron externe TE va de 6° à 22°, ici $\delta$'=15,5°.

La couche externe C3' d'e chaque toron externe TE est enroulée autour et au contact de la couche intermédiaire C2' selon un sens d'enroulement de couche externe C3' du toron externe TE identique au sens d'enroulement de la couche externe CE du câble, ici selon le sens Z. Les N' fils externes F3' sont enroulés en hélice autour des P' fils intermédiaires F2' et sont assemblés au sein de chaque toron externe TE à un pas p3' tel que 10 mm $\leq$ p3' $\leq$ 40 mm. Ici p3'=15,4 mm. L'angle d'hélice $\gamma$' de chaque fil externe F3' dans la couche externe C3' au sein de chaque toron externe TE va de 7° à 22°, ici $\gamma$'=14,6°.

On a 47° $\leq$ 3$\alpha$' + $\beta$' + $\delta$' + $\gamma$' $\leq$ 147° et dans le cas du câble 260 à bas module 54° $\leq$ 3$\alpha$' + $\beta$' + $\delta$' + $\gamma$' $\leq$ 125° et comme Q'=1, 54° $\leq$ 3$\alpha$' + $\beta$' + $\delta$' + $\gamma$' $\leq$ 120°. En l'espèce, 3$\alpha$' + $\beta$' + $\delta$' + $\gamma$'=87,4°.

Chaque fil interne F1', intermédiaire F2' et externe F3' de chaque toron externe TE présente respectivement un diamètre D1', D2', D3'. Chaque diamètre des fils internes D1', intermédiaires D2' et externes D3' de chaque toron externe TE va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque Q' fil interne F1' de chaque toron externe TI' présente un diamètre D1' supérieur ou égal au diamètre D2' de chaque fil intermédiaire F2' de chaque toron externe TE. Chaque Q' fil interne F1' de chaque toron externe TE présente un diamètre D1' supérieur ou égal au diamètre D3' de chaque fil externe F3' de chaque toron externe TE. Chaque N' fil intermédiaire F2' de chaque toron externe TE présente un diamètre D2' égal au diamètre D3' de chaque fil externe F3' de chaque toron externe TE. En l'espèce, D1'=0.38 mm > D2'=D3'=0,30 mm.

La couche intermédiaire C2' de chaque toron externe TE est désaturée et incomplètement insaturée. La distance interfils I2' de la couche intermédiaire C2' séparant en moyenne les P' fils intermédiaires est supérieure ou égale à 5 $\mu$m. La distance interfils I2' est de préférence supérieure ou égale à 15 $\mu$m et ici égale à 32 $\mu$m. La somme SI2' des distances interfils I2' de la couche intermédiaire C2' est supérieure au diamètre D2 des fils intermédiaires F2' de la couche intermédiaire C2'. Ici, la somme SI2'=6 x 0,032=0,19 mm, valeur strictement inférieure à D2'=0,30 mm. De plus, la somme SI2' des distances interfils I2' est telle que SI2' < D3' et même SI2' < 0.8 x D3'.

La couche externe C3' de chaque toron externe TE est désaturée et complètement insaturée. La distance interfils I3' de la couche externe C3' séparant en moyenne les N' fils externes est supérieure ou égale à 5 $\mu$m. La distance interfils I3' est de préférence supérieure ou égale à 15 $\mu$m, plus préférentiellement supérieure ou égale à 35 $\mu$m, encore

plus préférentiellement supérieure ou égale à 50 $\mu$m et ici égale à 52 $\mu$m. La somme SI3' des distances interfils I3' de la couche externe C3' est supérieure au diamètre D3' des fils externes F3' de la couche externe C3'. Ici, la somme SI3'=11 x 0,052=0,57 mm, valeur strictement supérieure à D3'=0,30 mm.

Chaque fil F1, F2, F1', F2', F3' présente une résistance à la rupture, notée Rm, telle que 2500 $\leq$ Rm $\leq$ 3100 MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

On a 84° $\leq 2\alpha + \beta + \gamma + 3\alpha' + \beta' + \delta' + \gamma' \leq 226°$ et comme Q>1 et Q'=1, 88° $\leq 2\alpha + \beta + \gamma + 3\alpha' + \beta' + \delta' + \gamma' \leq 206°$. Dans le cas du câble 260 à bas module, on a 87° $\leq 2\alpha + \beta + \gamma + 3\alpha' + \beta' + \delta' + \gamma' \leq 172°$ et comme Q>1 et Q'=1, 90° $\leq 2\alpha + \beta + \gamma + 3\alpha' + \beta' + \delta' + \gamma' \leq 165°$ En l'espèce 2 $\alpha + \beta + \gamma + 3\alpha' + \beta' + \delta' + \gamma'$ =136,3°.

On a 0,60 $\leq$ EC/EI $\leq$ 1,20 et ici EC/EI=0,69.

On a également 50 GPa $\leq$ EC $\leq$ 160 GPa et dans ce mode de réalisation 90 GPa $\leq$ EC $\leq$ 130 GPa. Ici EC=102 GPa.

## CABLE SELON UN 16<sup>ème</sup> MODE DE REALISATION DE L'INVENTION

On va maintenant décrire un câble 261 à bas module selon un deuxième mode de réalisation de l'invention. Les éléments analogues à ceux du câble 260 sont désignés par des références identiques.

Parmi les différences entre les câbles 260 et 261, on notera que Q=1, N=5 ou 6 et ici Q=1, N=6.

On notera également que les N fils externes F2 sont enroulés en hélice autour du Q=1 fil interne F1 et sont assemblés au sein de chaque toron interne TI à un pas p2 tel que 5 mm $\leq$ p2 $\leq$ 30 mm. Ici p2=7,7 mm. L'angle d'hélice $\gamma$ de chaque fil externe F2 dans la couche externe C2 au sein de chaque toron interne TI va de 5° à 26°, ici $\gamma$=12,9°.

On notera également que 16° $\leq 2\alpha + \beta + \gamma \leq 105°$ et comme Q=1, 16° $\leq 2\alpha + \beta + \gamma \leq 86°$ et ici $2\alpha + \beta + \gamma$=26,5°.

On notera que, comme Q=1 et Q'=1, 84° $\leq 2\alpha + \beta + 3\alpha' + \beta' + \delta' + \gamma' \leq 199°$. Dans le cas du câble 261 à bas module, avec Q=1 et Q'=1, on a 87° $\leq 2\alpha + \beta + \gamma + 3\alpha' + \beta' + \delta' + \gamma' \leq 160°$ En l'espèce 2 $\alpha + \beta + \gamma + 3\alpha' + \beta' + \delta' + \gamma'$=136,3°.

On notera que EC/EI $\leq$ 0,59 et de préférence 0,40 $\leq$ EC/EI $\leq$ 0,59 et ici EC/EI=0,56.

## CABLE SELON UN 17<sup>ème</sup> MODE DE REALISATION DE L'INVENTION

On va maintenant décrire un câble 262 à bas module selon un troisième mode de réalisation de l'invention. Les éléments analogues à ceux des câbles précédemment décrits sont désignés par des références identiques.

Parmi les différences entre les câbles 260 et 262, on notera que, la couche interne du câble 262 à bas module présentant un module relativement faible, 25 GPa $\leq$ EI $\leq$ 94 GPa, de préférence 64 GPa $\leq$ EI $\leq$ 94 GPa. En l'espèce, EI=71 GPa.

On notera que 1,21 $\leq$ EC/EI et de préférence 1,21 $\leq$ EC/EI $\leq$ 3,00 et dans le cas du câble 262 à bas module 1,21 $\leq$ EC/EI $\leq$ 2,82 et ici EC/EI=1,33.

## CABLE SELON UN 18<sup>ème</sup> MODE DE REALISATION DE L'INVENTION

On va maintenant décrire un câble 263 à très bas module selon un quatrième mode de réalisation de l'invention. Les éléments analogues à ceux des câbles précédemment décrits sont désignés par des références identiques.

Parmi les différences entre les câbles 260 et 263, on notera que l'angle d'hélice $\alpha$ de chaque toron interne TI dans la couche interne CI du câble 263 va, dans le cas du câble 263 à très bas module, de 5° à 36° et en l'espèce $\alpha$=10°. On notera également que l'angle d'hélice $\alpha'$ de chaque toron externe TE dans la couche externe CE du câble 263 va, dans le cas du câble 263 à très bas module, de 14° à 34° et en l'espèce $\alpha'$=14,5°.

On notera également, dans le cas du câble 263 à très bas module, 20° $\leq 2\alpha + \beta + \gamma \leq 105°$ et comme Q>1, 27° $\leq 2\alpha + \beta + \gamma \leq 105°$ et ici $2\alpha + \beta + \gamma$=53,6°.

On notera que, dans le cas du câble 263 à très bas module, 25 GPa $\leq$ EI $\leq$ 180 GPa, de préférence 36 GPa $\leq$ EI $\leq$ 175 GPa Dans le cas du câble 263 présentant une couche interne présentant un module relativement élevé, 95 GPa $\leq$ EI $\leq$ 180 GPa, de préférence 95 GPa $\leq$ EI $\leq$ 175 GPa. En l'espèce, EI=130 GPa.

On notera que, dans le cas du câble 263 à très bas module et comme Q'=1, 66° $\leq 3\alpha' + \beta' + \delta' + \gamma' \leq 147°$. En l'espèce, $3\alpha' + \beta' + \delta' + \gamma'$=93,5°.

On notera également que dans le cas du câble 263 à très bas module, 146° $\leq 2\alpha + \beta + \gamma + 3\alpha' + \beta' + \delta' + \gamma' \leq 226°$ et comme Q>1 et Q'=1, 130° $\leq 2\alpha + \beta + \gamma + 3\alpha' + \beta' + \delta' + \gamma' \leq 206°$ En l'espèce $2\alpha + \beta + \gamma + 3\alpha' + \beta' + \delta' + \gamma'$=147,1°.

On a, dans le cas du câble 263 à très bas module, 0,60 $\leq$ EC/EI $\leq$ 1,20 et ici EC/EI=0,64.

On notera également que, dans ce mode de réalisation du câble 263 à très bas module, 50 GPa $\leq$ EC $\leq$ 89 GPa. Ici EC=84 GPa.

## CABLE SELON UN 19ème MODE DE REALISATION DE L'INVENTION

On va maintenant décrire un câble 264 à très bas module selon un cinquième mode de réalisation de l'invention. Les éléments analogues à ceux des câbles précédemment décrits sont désignés par des références identiques.

Parmi les différences entre les câbles 263 et 264, on notera que, dans le cas du câble 264 à très bas module présentant une couche interne présentant un module relativement faible, $25\,GPa \leq EI \leq 94\,GPa$, de préférence $36\,GPa \leq EI \leq 94\,GPa$. En l'espèce, EI=42 GPa.

On notera que Q'>1, et ici Q'=2, 3 ou 4, P'=7, 8, 9 ou 10, N'=13, 14 ou 15 et ici Q'=3, P'=8 et N'=13.

On notera que les Q' fils internes F1' sont enroulés en hélice au sein de chaque toron externe TE à un pas p1' tel que $5\,mm \leq p1' \leq 15\,mm$. Ici, p1'=12 mm. L'angle d'hélice $\beta'$ de chaque fil interne F1' de la couche interne au sein de chaque toron externe TE va de 4° à 20°, ici $\beta'$=6°. Les P' fils intermédiaires F2' sont assemblés au sein de chaque toron externe TE à un pas p2' tel que $10\,mm \leq p2' \leq 20\,mm$. Ici p2'=18 mm. L'angle d'hélice $\delta'$ de chaque fil intermédiaires F2' dans la couche intermédiaire C2' au sein de chaque toron externe TE va de 8° à 22°, ici $\delta'$=10,9°. Les N' fils externes F3' sont assemblés au sein de chaque toron externe TE à un pas p3' tel que $10\,mm \leq p3' \leq 40\,mm$. Ici p3'=25 mm. L'angle d'hélice $\gamma'$ de chaque fil externe F3' dans la couche externe C3' au sein de chaque toron externe TE va de 9° à 25°, ici $\gamma'$=12,8°.

On notera également que, dans le cas du câble 264 à très bas module et comme Q'>1, $75° \leq 3\alpha' + \beta' + \delta' + \gamma' \leq 140°$. En l'espèce, $3\alpha' + \beta' + \delta' + \gamma'$=95,7°.

On notera que, dans le cas du câble 264 à très bas module et comme Q>1 et Q'>1, on a $146° \leq 2\alpha + \beta + \gamma + 3\alpha' + \beta' + \delta' + \gamma' \leq 226°$. En l'espèce $2\alpha + \beta + \gamma + 3\alpha' + \beta' + \delta' + \gamma'$=188,9°.

On notera que, dans le cas du câble 264 à très bas module, $1,21 \leq EC/EI$ et de préférence $1,21 \leq EC/EI \leq 3,00$ et ici EC/EI=1,72.

## CABLE SELON UN 20ème MODE DE REALISATION DE L'INVENTION

On va maintenant décrire un câble 265 à moyen module selon un sixième mode de réalisation de l'invention. Les éléments analogues à ceux des câbles précédemment décrits sont désignés par des références identiques.

Parmi les différences entre les câbles 260 et 265, on notera que l'angle d'hélice $\alpha$ de chaque toron interne TI dans la couche interne CI du câble 265 à moyen module va de 3° à 20° et en l'espèce $\alpha$=6,8°. On notera également que l'angle d'hélice $\alpha'$ de chaque toron externe TE dans la couche externe CE du câble 265 à moyen module va de 10° à 22° et en l'espèce $\alpha'$=15,3°.

On notera également que Q=1, N=5 ou 6 et ici Q=1, N=6. Les N fils externes F2 sont enroulés en hélice autour du Q=1 fil internes F1 et sont assemblés au sein de chaque toron interne TI à un pas p2 tel que $5\,mm \leq p2 \leq 30\,mm$. Ici p2=5 mm. L'angle d'hélice $\gamma$ de chaque fil externe F2 dans la couche externe C2 au sein de chaque toron interne TI va de 5° à 26°, ici $\gamma$=19,4°.

On notera que, dans le cas du câble 265 à moyen module, on a $16° \leq 2\alpha + \beta + \gamma \leq 68°$ et comme Q=1, $16° \leq 2\alpha + \beta + \gamma \leq 56°$ et ici $2\alpha + \beta + \gamma$=33°.

On notera également que, dans le cas du câble 265 à moyen module, $78\,GPa \leq EI \leq 180\,GPa$, de préférence $100\,GPa \leq EI \leq 180\,GPa$ et dans le cas du câble 265 comprenant une couche interne présentant un module relativement élevé $95\,GPa \leq EI \leq 180\,GPa$ et, en l'espèce, EI=165 GPa.

On notera que, dans le cas du câble 265 à moyen module, $47° \leq 3\alpha' + \beta' + \delta' + \gamma' \leq 89°$ et comme Q'=1, $47° \leq 3\alpha' + \beta' + \delta' + \gamma' \leq 86°$. En l'espèce, $3\alpha' + \beta' + \delta' + \gamma'$=71,4°.

On notera que, dans le cas du câble 265 à moyen module, $84° \leq 2\alpha + \beta + \gamma + 3\alpha' + \beta' + \delta' + \gamma' \leq 136°$ et comme Q=1 et Q'=1, $84° \leq 2\alpha + \beta + \gamma + 3\alpha' + \beta' + \delta' + \gamma' \leq 112°$. En l'espèce $2\alpha + \beta + \gamma + 3\alpha' + \beta' + \delta' + \gamma'$=104,2°.

On notera également que, dans le cas du câble 265 à moyen module, dans le cas du câble 265 à moyen module, $0,60 \leq EC/EI \leq 1,20$, de préférence $0,80 \leq EC/EI \leq 1,15$ et ici EC/EI=0,90.

On a également $50\,GPa \leq EC \leq 160\,GPa$ et dans le mode de réalisation du câble 265 à moyen module, $131\,GPa \leq EC \leq 160\,GPa$. Ici EC=148 GPa.

CABLE SELON UN 21ème MODE DE REALISATION DE L'INVENTION

On va maintenant décrire un câble 266 à moyen module selon un septième mode de réalisation de l'invention. Les éléments analogues à ceux des câbles précédemment décrits sont désignés par des références identiques.

Parmi les différences entre les câbles 265 et 266, on notera que Q=2, 3 ou 4, de préférence Q=3 ou 4. N=7, 8, 9 ou 10. Avec Q=3 et N=7, 8 ou 9 et ici Q=3, N=8.

On notera que les Q fils internes F1 sont assemblés au sein de chaque toron interne TI à un pas p1 tel que $5\,mm \leq p1 \leq 20\,mm$. Ici p1=12 mm. L'angle d'hélice $\beta$ de chaque fil interne F1 dans la couche interne C1 au sein de chaque toron interne TI va de 4° à 17°, ici $\beta$=6°. Les N fils externes F2 sont enroulés en hélice autour des Q fils internes F1 et sont assemblés au sein de chaque toron interne TI à un pas p2 tel que $5\,mm \leq p2 \leq 40\,mm$. Ici p2=18 mm. L'angle d'hélice $\gamma$ de

chaque fil externe F2 dans la couche externe C2 au sein de chaque toron interne TI va de 7° à 20°, ici $\gamma$=10,9°.

On notera que, dans le cas du câble 266 à moyen module, comme Q>1, 20° $\leq$ 2$\alpha$ + $\beta$ + $\gamma$ $\leq$ 68° et ici 2$\alpha$ + $\beta$ + $\gamma$=26,9°.

On notera également que Q'>1, et ici Q'=2, 3 ou 4, P'=7, 8, 9 ou 10, N'=13, 14 ou 15 et ici Q'=3, P'=8 et N'=13.

On notera que les Q' fils internes F1' sont enroulés en hélice au sein de chaque toron externe TE à un pas p1' tel que 5 mm $\leq$ p1' $\leq$ 15 mm. Ici, p1'=12 mm. L'angle d'hélice $\beta$' de chaque fil interne F1' de la couche interne au sein de chaque toron externe TE va de 4° à 20°, ici $\beta$'=4,5°. Les P' fils intermédiaires F2' sont assemblés au sein de chaque toron externe TE à un pas p2' tel que 10 mm $\leq$ p2' $\leq$ 20 mm. Ici p2'=18 mm. L'angle d'hélice $\delta$' de chaque fil intermédiaires F2' dans la couche intermédiaire C2' au sein de chaque toron externe TE va de 8° à 22°, ici $\delta$'=8,1°. Les N' fils externes F3' sont assemblés au sein de chaque toron externe TE à un pas p3' tel que 10 mm $\leq$ p3' $\leq$ 40 mm. Ici p3'=25 mm. L'angle d'hélice $\gamma$' de chaque fil externe F3' dans la couche externe C3' au sein de chaque toron externe TE va de 9° à 25°, ici $\gamma$'=9,6°.

On notera que, dans le cas du câble 266 à moyen module et comme Q'>1, 62° $\leq$ 3$\alpha$' + $\beta$' + $\delta$' + $\gamma$' $\leq$ 89° et ici 3$\alpha$' + $\beta$' + $\delta$' + $\gamma$'=77,1°.

## CABLE SELON UN 22<sup>ème</sup> MODE DE REALISATION DE L'INVENTION

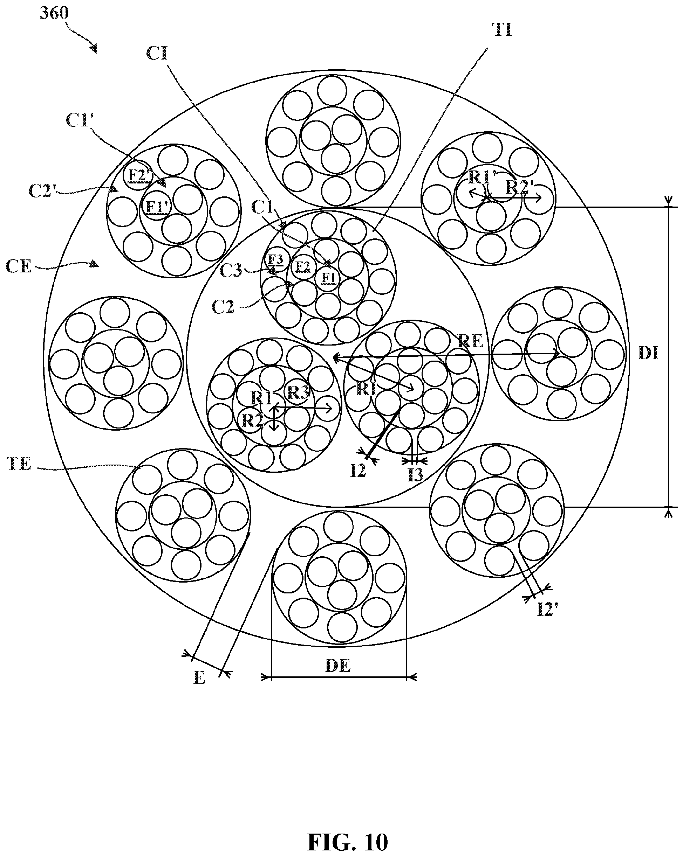

On a représenté sur la figure 10 le câble 360 selon un sixième mode de réalisation de l'invention.

Le câble 360 est métallique et est du type multi-torons à deux couches cylindriques. Ainsi, on comprend que les couches de torons constituant le câble 360 sont au nombre de deux, ni plus, ni moins. Les couches de torons sont adjacentes et concentriques. Le câble 360 est dépourvu de composition polymérique et de composition d'élastomère lorsqu'il n'est pas intégré au pneumatique.

Le câble 360 comprend une couche interne CI du câble 360 ainsi qu'une couche externe CE du câble 360. La couche interne CI est constituée de J>1 torons internes TI, c'est-à-dire plusieurs torons internes TI, enroulés en hélice. La couche externe CE est constituée de L>1 torons externes, c'est-à-dire plusieurs torons externes TE enroulés en hélice autour de la couche interne CI. En l'espèce, J=2, 3 ou 4, de préférence J=3 ou 4. De plus, L=7, 8, 9 ou 10, de préférence L=8, 9 ou 10. Avec J=3, L=7, 8 ou 9 et en l'espèce et ici J=3, L=8.

Le câble 360 comprend également une frette F constituée d'un unique fil de frette.

La couche interne CI est enroulée en hélice selon un sens d'enroulement de la couche interne du câble, ici le sens S. Les torons internes TI sont enroulés en hélice selon un pas PI tel que 10 mm $\leq$ PI $\leq$ 65 mm et de préférence 10 mm $\leq$ PI $\leq$ 45 mm. Ici PI=20 mm. L'angle d'hélice $\alpha$ de chaque toron interne TI dans la couche interne CI du câble 360 va de 4° à 36° et dans le mode de réalisation du câble 360 à bas module de 4° à 27° et en l'espèce $\alpha$=13,4°.

La couche externe CE est enroulée en hélice autour de la couche interne CI selon un sens d'enroulement de la couche externe du câble opposé au sens d'enroulement de la couche interne du câble, ici le sens Z. Les torons externes TE sont enroulés en hélice autour du toron interne TI selon un pas PE tel que 30 mm $\leq$ PE $\leq$ 65 mm et de préférence 30 mm $\leq$ PE $\leq$ 60 mm. Ici PE=40 mm. L'angle d'hélice $\alpha$' de chaque toron externe TE dans la couche externe CE du câble 360 va de 10° à 32° et dans le mode de réalisation du câble 360 à bas module de de 11° à 31° et en l'espèce $\alpha$'=18,6°.

La frette F est enroulée autour de la couche externe CE selon un sens d'enroulement de la frette, ici opposé au sens d'enroulement de la couche externe CE, en l'espèce dans le sens S. Le fil de frette est enroulé en hélice autour des torons externes TE selon un pas PF tel que 2 mm $\leq$ PF $\leq$ 10 mm et de préférence 3 mm $\leq$ PF $\leq$ 8 mm. Ici pf=5,1 mm.

L'assemblage constitué par les couches interne CI et externe CE, c'est-à-dire le câble 360 sans la frette F, présente un diamètre D supérieur ou égal à 4 mm, de préférence supérieur ou égal à 4,5 mm et inférieur ou égal à 7 mm, de préférence inférieur ou égal à 6,5 mm. Ici, D=5,7 mm.

La couche interne CI de torons internes TI présente un diamètre DI. Chaque toron externe TE présente un diamètre DE. En l'espèce, DI=2,83 mm, DE=1,46 mm.

La couche externe CE du câble 360 est désaturée et incomplètement insaturée. La distance E inter-torons moyenne séparant deux torons externes TE adjacents est supérieure ou égale à 30 $\mu$m, de préférence supérieure ou égale à 70 $\mu$m et plus préférentiellement supérieure ou égale à 100 $\mu$m. Ici, la distance E inter-torons moyenne séparant deux torons externes TE adjacents est telle que E=117 $\mu$m. La somme SIE des distances interfils E de la couche externe CE est inférieure au diamètre DE des torons externes de la couche externe CE. Ici, la somme SIE=8 x 0,117= 0,94 mm, valeur strictement inférieure à DE=1,46 mm.

Torons internes TI du câble 360

Chaque toron interne TI est à trois couches. Chaque toron interne TI comprend, ici est constitué, de trois couches, pas plus, pas moins.

Chaque toron interne TI comprend une couche interne C1 constituée de Q$\geq$1 fils internes F1, une couche intermédiaire C2 constituée de P>1 fils intermédiaires F2 enroulés en hélice autour et au contact de la couche interne C1 et une couche externe C3 constituée de N>1 fils externes F3 enroulés en hélice autour et au contact de la couche intermédiaire C2.

Q=1, P=5 ou 6 et N=10, 11 ou 12, de préférence Q=1, P=5 ou 6, N=10 ou 11 et plus préférentiellement ici Q=1, P=6 et N=11.

Dans le cas où Q>1, la couche interne C1 de chaque toron interne TI est enroulée en hélice selon un sens d'enroulement de couche interne C1 du toron interne TI identique au sens d'enroulement de la couche interne CI du câble, ici selon le sens S. Ici, Le Q=1 fil interne F1 est assemblé au sein de chaque toron interne TI selon un pas infini de sorte que $\beta$=0.

La couche intermédiaire C2 de chaque toron interne TI est enroulée autour et au contact de la couche interne C1 selon un sens d'enroulement de couche intermédiaire C2 du toron interne TI identique au sens d'enroulement de la couche interne CI du câble, ici selon le sens S. Les P fils intermédiaires F2 sont enroulés en hélice autour du Q=1 fil interne F1 et sont assemblés au sein de chaque toron interne TI à un pas p2 tel que 5 mm $\leq$ p2 $\leq$ 20 mm. Ici p2=7,7 mm. L'angle d'hélice $\delta$ de chaque fil intermédiaire F2 dans la couche intermédiaire C2 au sein de chaque toron interne TI va de 6° à 30°, ici $\delta$=12,2°.

La couche externe C3 de chaque toron interne TI est enroulée autour et au contact de la couche intermédiaire C2 selon un sens d'enroulement de couche externe C3 du toron interne TI identique au sens d'enroulement de la couche interne CI du câble, ici selon le sens S. Les N fils externes F3 sont enroulés en hélice autour des P fils intermédiaires F2 et sont assemblés au sein de chaque toron interne TI à un pas p3 tel que 10 mm $\leq$ p3 $\leq$ 40 mm. Ici p3=15,4 mm. L'angle d'hélice $\gamma$ de chaque fil externe F3 dans la couche externe C3 au sein de chaque toron interne TI va de 7° à 30°, ici $\gamma$=12,1°.

On a 26° $\leq$ 3$\alpha$ + $\beta$ + $\delta$ + $\gamma$ $\leq$ 162° et ici comme Q=1, 26° $\leq$ 3$\alpha$ + $\beta$ + $\delta$ + $\gamma$ $\leq$ 140°. En l'espèce, dans ce premier mode de réalisation du câble 360 à bas module, 26° $\leq$ 3$\alpha$ + $\beta$ + $\delta$ + $\gamma$ $\leq$ 128° et ici comme Q=1, 26° $\leq$ 3$\alpha$ + $\beta$ + $\delta$ + $\gamma$ $\leq$ 113°. Dans le cas du câble 360, 3$\alpha$ + $\beta$ + $\delta$ + $\gamma$=64,5°.

Chaque fil interne F1, intermédiaire F2 et externe F3 de chaque toron interne TI présente respectivement un diamètre D1, D2, D3. Chaque diamètre des fils internes D1, intermédiaire D2 et externes D3 de chaque toron interne TI va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque fil interne F1 de chaque toron interne TI présente un diamètre D1 supérieur ou égal, ici égal au diamètre D2 de chaque fil intermédiaire F2 de chaque toron interne TI. Chaque fil interne F1 de chaque toron interne TI présente un diamètre D1 supérieur ou égal, ici égal, au diamètre D3 de chaque fil externe F3 de chaque toron interne TI. Chaque fil intermédiaire F2 de chaque toron interne TI présente un diamètre D2 égal au diamètre D3 de chaque fil externe F3 de chaque toron interne TI. En l'espèce, D1=D2=D3=0,26 mm.

La couche intermédiaire C2 de chaque toron interne TI est saturée. Ici la distance I2 est environ égale à 0.

La couche externe C3 de chaque toron interne TI est désaturée et complètement insaturée. La distance interfils I3 de la couche externe C3 séparant en moyenne les N fils externes est supérieure ou égale à 5 $\mu$m. La distance interfils I3 est de préférence supérieure ou égale à 15 $\mu$m et ici égale à 30 $\mu$m. La somme SI3 des distances interfils I3 de la couche externe C3 est supérieure au diamètre D3 des fils externes F3 de la couche externe C3. Ici, la somme SI3=11 x 0,030=0,33 mm, valeur strictement supérieure à D2=0,26 mm.

On a également 25 GPa $\leq$ EI $\leq$ 180 GPa, de préférence 36 GPa $\leq$ EI $\leq$ 180 GPa. Dans le cas du câble 360 à bas module, 25 GPa $\leq$ EI $\leq$ 180 GPa, de préférence 36 GPa $\leq$ EI $\leq$ 175 GPa. Ici, la couche interne présente un module relativement élevé, on a 95 GPa $\leq$ EI $\leq$ 180 GPa. En l'espèce, EI=147 GPa.

Torons externes TE du câble 360

Chaque toron externe TE est à deux couches. Ainsi, chaque toron externe TE comprend, ici est constitué, de deux couches, pas plus, pas moins.

Chaque toron externe TE comprend une couche interne C1' constituée de Q'$\geq$1 fils internes F1' et une couche externe C2' constituée de N'>1 fils externes F2' enroulés en hélice autour et au contact de la couche interne C1'.

Q'=2, 3 ou 4, de préférence Q'=3 ou 4. N'=7, 8, 9 ou 10, de préférence N'=8, 9 ou 10. Avec Q'=3, N'=7, 8 ou 9 et en l'espèce Q'=3, N'=8.

La couche interne C1' de chaque toron externe TE est enroulée en hélice selon un sens d'enroulement de couche interne C1' du toron externe TE identique au sens d'enroulement de la couche externe CE du câble, ici selon le sens Z. Les Q' fils internes F1' sont assemblés au sein de chaque toron externe TE à un pas p1' tel que 5 mm $\leq$ p1' $\leq$ 20 mm. Ici p1'=7,7 mm. L'angle d'hélice $\beta$' de chaque fil interne F1' dans la couche interne C1' au sein de chaque toron externe TE va de 4° à 17°, ici $\beta$'=9,4°.

La couche externe C2' de chaque toron externe TE est enroulée autour et au contact de la couche interne C1' selon un sens d'enroulement de couche externe C2' du toron externe TE identique au sens d'enroulement de la couche externes CE du câble, ici selon le sens Z. Les N' fils externes F2' sont enroulés en hélice autour des Q' fils internes F1' et sont assemblés au sein de chaque toron externe TE à un pas p2' tel que 5 mm $\leq$ p2' $\leq$ 40 mm. Ici p2'=15,4 mm. L'angle d'hélice $\gamma$' de chaque fil externe F2' dans la couche externe C2' au sein de chaque toron externe TE va de 7° à 20°, ici $\gamma$'=12,7°.

On a $28° \leq 2\alpha' + \beta' + \gamma' \leq 96°$ et ici comme Q'>1, $34° \leq 2\alpha' + \beta' + \gamma' \leq 96°$. En l'espèce, dans ce premier mode de réalisation du câble 360 à bas module, $28° \leq 2\alpha' + \beta' + \gamma' \leq 89°$ et ici comme Q'=1, $36° \leq 2\alpha' + \beta' + \gamma' \leq 89°$. Dans le cas du câble 360, $2\alpha' + \beta' + \gamma'$=59,3°.

Chaque fil interne F1' et externe F2' de chaque toron externe TE présente respectivement un diamètre D1', D2'. Chaque diamètre des fils internes D1' et externes D2' de chaque toron externe TE va de 0,15 mm à 0,60 mm, de préférence de 0,20 mm à 0,50 mm, plus préférentiellement de 0,23 mm à 0,45 mm et encore plus préférentiellement de 0,25 mm à 0,40 mm. Chaque Q' fil interne F1' de chaque toron externe TI' présente un diamètre D1' supérieur ou égal, ici égal au diamètre D2' de chaque fil externe F2' de chaque toron externe TE. En l'espèce, D1'=D2'=0,35 mm.

La couche externe C2' de chaque toron externe TE est désaturée et complètement insaturée. La distance interfils I2' de la couche externe C2' séparant en moyenne les N' fils externes est supérieure ou égale à 5 μm. La distance interfils I2' est de préférence supérieure ou égale à 15 μm, plus préférentiellement supérieure ou égale à 35 μm, encore plus préférentiellement supérieure ou égale à 50 μm et très préférentiellement supérieure ou égale à 60 μm et ici égale à 66 μm. La somme SI2' des distances interfils I2' de la couche externe C2' est supérieure au diamètre D2 des fils externes F2' de la couche externe C2'. Ici, la somme SI2'=8 x 0,066=0,53 mm, valeur strictement supérieure à D2'=0,35 mm.

Chaque fil F1, F2, F3, F1', F2' présente une résistance à la rupture, notée Rm, telle que $2500 \leq Rm \leq 3100$ MPa. On dit de l'acier de ces fils qu'il est de grade SHT (« Super High Tensile »). D'autres fils peuvent être utilisés, par exemple des fils de grade inférieur, par exemple de grade NT (« Normal Tensile ») ou HT (« High Tensile »), comme des fils de grade supérieur, par exemple de grade UT (« Ultra Tensile ») ou MT (« Mega Tensile »).

On a $64° \leq 3\alpha + \beta + \delta + \gamma + 2\alpha' + \beta' + \gamma' \leq 224°$. En l'espèce, comme Q=1 et Q'>1, $68° \leq 3\alpha + \beta + \delta + \gamma + 2\alpha' + \beta' + \gamma' \leq 220°$. Dans le mode de réalisation du câble 360 à bas module, $74° \leq 3\alpha + \beta + \delta + \gamma + 2\alpha' + \beta' + \gamma' \leq 183°$ et, comme Q=1 et Q'>1, $84° \leq 3\alpha + \beta + \delta + \gamma + 2\alpha' + \beta' + \gamma' \leq 168°$ et ici $3\alpha + \beta + \delta + \gamma + 2\alpha' + \beta' + \gamma'$=123,8°.

On a $0,60 \leq EC/EI \leq 1,20$ et ici EC/EI=0,75.

On a également $50$ GPa $\leq EC \leq 160$ GPa et dans ce mode de réalisation du câble 360 à bas module, $90$ GPa $\leq EC \leq 130$ GPa. Ici EC=111 GPa.

## CABLE SELON UN 23<sup>ème</sup> MODE DE REALISATION DE L'INVENTION

On va maintenant décrire un câble 361 à bas module selon un deuxième mode de réalisation de l'invention. Les éléments analogues à ceux du câble 360 sont désignés par des références identiques.

Parmi les différences entre les câbles 360 et 361, on notera particulièrement Q>1, Q=2, 3 ou 4, P=7, 8, 9 ou 10, N=13, 14 ou 15 et ici Q=3, P=8 et N=13.

On notera que les Q fils internes F1 sont enroulés en hélice au sein de chaque toron interne TI à un pas p1 tel que $5$ mm $\leq p1 \leq 15$ mm. Ici, p1=12 mm. L'angle d'hélice β de chaque fil interne F1 de la couche interne au sein de chaque toron interne TI va de 4° à 17°, ici β=6°. Les P fils intermédiaires F2 sont enroulés en hélice autour des Q fils internes F1 et sont assemblés au sein de chaque toron interne TI à un pas p2 tel que $10$ mm $\leq p2 \leq 20$ mm. Ici p2=18 mm. L'angle d'hélice δ de chaque fil intermédiaire F2 dans la couche intermédiaire C2 au sein de chaque toron interne TI va de 8° à 22°, ici δ=10,9°. Les N fils externes F3 sont enroulés en hélice autour des P fils intermédiaires F2 et sont assemblés au sein de chaque toron interne TI à un pas p3 tel que $10$ mm $\leq p3 \leq 40$ mm. Ici p3=25 mm. L'angle d'hélice γ de chaque fil externe F3 dans la couche externe C3 au sein de chaque toron interne TI va de 9° à 25°, ici γ=12,8°.

On notera également que comme Q>1, $36° \leq 3\alpha + \beta + \delta + \gamma \leq 162°$. En l'espèce, dans ce mode de réalisation du câble 361 à bas module et comme Q>1, $36° \leq 3\alpha + \beta + \delta + \gamma \leq 128°$ et ici $3\alpha + \beta + \delta + \gamma$=51,9°.

On notera que Q'=1 et ici, N'=5 ou 6, de préférence N'=6.

On notera que les N' fils externes F2' sont enroulés en hélice autour des Q' fils internes F1' et sont assemblés au sein de chaque toron externe TE à un pas p2' tel que $5$ mm $\leq p2' \leq 30$ mm. Ici p2'=15 mm. L'angle d'hélice γ' de chaque fil externe F2' dans la couche externe C2' au sein de chaque toron externe TE va de 5° à 26°, ici y'=8,8°.

On notera que comme Q'>1, $28° \leq 2\alpha' + \beta' + \gamma' \leq 86°$. En l'espèce, dans ce mode de réalisation du câble 361 à bas module, $28° \leq 2\alpha' + \beta' + \gamma' \leq 85°$. Dans le cas du câble 361, $2\alpha' + \beta' + \gamma'$=63,4°.

On notera que, comme Q>1 et Q'=1, $73° \leq 3\alpha + \beta + \delta + \gamma + 2\alpha' + \beta' + \gamma' \leq 212°$. Dans le mode de réalisation du câble 361 à bas module, $86° \leq 3\alpha + \beta + \delta + \gamma + 2\alpha' + \beta' + \gamma' \leq 168°$ et ici $3\alpha + \beta + \delta + \gamma + 2\alpha' + \beta' + \gamma'$=115,3°.

## CABLE SELON UN 24<sup>ème</sup> MODE DE REALISATION DE L'INVENTION

On va maintenant décrire un câble 362 à bas module selon un troisième mode de réalisation de l'invention. Les éléments analogues à ceux des câbles précédemment décrits sont désignés par des références identiques.

Parmi les différences entre les câbles 360 et 362, on notera que $28$ GPa $\leq EI \leq 94$ GPa et, dans le cas du câble 362 à bas module comprenant une couche interne présentant un module relativement faible, $25$ GPa $\leq EI \leq 94$ GPa, de préférence $64$ GPa $\leq EI \leq 94$ GPa. En l'espèce, EI=65 GPa.

On notera également que Q'=1, N'=5 ou 6 et ici de préférence N'=6. Les N' fils externes F2' sont enroulés en hélice autour du Q'=1 fil interne F1' et sont assemblés au sein de chaque toron externe TE à un pas p2' tel que 5 mm $\leq$ p2' $\leq$ 30 mm. Ici p2'=15 mm. L'angle d'hélice $\gamma$' de chaque fil externe F2' dans la couche externe C2' au sein de chaque toron externe TE va de 5° à 26°, ici $\gamma$'=8,8°.

On notera que comme Q'=1, 28° $\leq$ 2$\alpha$' + $\beta$' + $\gamma$' $\leq$ 86° et, dans ce mode de réalisation du câble 362 à bas module, 28° $\leq$ 2$\alpha$' + $\beta$' + $\gamma$' $\leq$ 85°. Dans le cas du câble 362, 2$\alpha$' + $\beta$' + $\gamma$'=36,4°.

On notera également que, comme Q=1 et Q'=1, 64° $\leq$ 3$\alpha$ + $\beta$ + $\delta$ + $\gamma$ + 2$\alpha$' + $\beta$' + $\gamma$' $\leq$ 200° et dans le mode de réalisation du câble 362 à bas module, 74° $\leq$ 3$\alpha$ + $\beta$ + $\delta$ + $\gamma$ + 2$\alpha$' + $\beta$' + $\gamma$' $\leq$ 158° et ici 3$\alpha$ + $\beta$ + $\delta$ + $\gamma$ + 2$\alpha$' + $\beta$' + $\gamma$'=148,5°.

On a également 1,21 $\leq$ EC/EI et de préférence 1,21 $\leq$ EC/EI $\leq$ 3,00 et dans le mode de réalisation du câble 362 à bas module, 1,21 $\leq$ EC/EI $\leq$ 2,82 et ici EC/EI=1,54.

## CABLE SELON UN 25<sup>ème</sup> MODE DE REALISATION DE L'INVENTION

On va maintenant décrire un câble 363 à très bas module selon un quatrième mode de réalisation de l'invention. Les éléments analogues à ceux des câbles précédemment décrits sont désignés par des références identiques.

Parmi les différences entre les câbles 360 et 363, on notera que l'angle d'hélice $\alpha$ de chaque toron interne TI dans la couche interne CI du câble 363 à très bas module va de 4° à 36° et en l'espèce $\alpha$=26,7°. On notera que l'angle d'hélice $\alpha$' de chaque toron externe TE dans la couche externe CE du câble 363 à très bas module va de 13° à 32° et en l'espèce $\alpha$'=16°.

On notera que Q>1, Q=2, 3 ou 4, P=7, 8, 9 ou 10, N=13, 14 ou 15 et ici Q=3, P=8 et N=13. Les Q fils internes F1 sont enroulés en hélice au sein de chaque toron interne TI à un pas p1 tel que 5 mm $\leq$ p1 $\leq$ 15 mm. Ici, p1=5 mm. L'angle d'hélice $\beta$ de chaque fil interne F1 de la couche interne au sein de chaque toron interne TI va de 4° à 17°, ici $\beta$=10,7°. Les P fils intermédiaires F2 sont enroulés en hélice autour des Q fils internes F1 et sont assemblés au sein de chaque toron interne TI à un pas p2 tel que 10 mm $\leq$ p2 $\leq$ 20 mm. Ici p2=10 mm. L'angle d'hélice $\delta$ de chaque fil intermédiaire F2 dans la couche intermédiaire C2 au sein de chaque toron interne TI va de 8° à 22°, ici $\delta$=14,5°. Les N fils externes F3 sont enroulés en hélice autour des P fils intermédiaires F2 et sont assemblés au sein de chaque toron interne TI à un pas p3 tel que 10 mm $\leq$ p3 $\leq$ 40 mm. Ici p3=15 mm. L'angle d'hélice $\gamma$ de chaque fil externe F3 dans la couche externe C3 au sein de chaque toron interne TI va de 9° à 25°, ici $\gamma$=15,7°.

On notera que, dans ce mode de réalisation du câble 363 à très bas module, 35° $\leq$ 3$\alpha$ + $\beta$ + $\delta$ + $\gamma$ $\leq$ 162° et ici comme Q>1, 36° $\leq$ 3$\alpha$ + $\beta$ + $\delta$ + $\gamma$ $\leq$ 162°. Dans le cas du câble 363, 3$\alpha$ + $\beta$ + $\delta$ + $\gamma$=121°.

On notera également que, dans le cas du câble 363 à très bas module, 25 GPa $\leq$ EI $\leq$ 180 GPa, de préférence 36 GPa $\leq$ EI $\leq$ 175 GPa et, la couche interne présentant un module relativement faible, on a 25 GPa $\leq$ EI $\leq$ 94 GPa, de préférence 36 GPa $\leq$ EI $\leq$ 94 GPa. En l'espèce, EI=73 GPa.

On notera que, dans le cas du câble 363 à très bas module, 34° $\leq$ 2$\alpha$' + $\beta$' + $\gamma$' $\leq$ 96° et ici comme Q'>1, 42° $\leq$ 2$\alpha$' + $\beta$' + $\gamma$' $\leq$ 96° et ici, 2$\alpha$' + $\beta$' + $\gamma$'=65,6°.

On notera également que, dans le cas du câble 363 à très bas module, 100° $\leq$ 3$\alpha$ + $\beta$ + $\delta$ + $\gamma$ + 2$\alpha$' + $\beta$' + $\gamma$' $\leq$ 224° et comme Q>1 et Q'=1, 121° $\leq$ 3$\alpha$ + $\beta$ + $\delta$ + $\gamma$ + 2$\alpha$' + $\beta$' + $\gamma$' $\leq$ 224° et ici 3$\alpha$ + $\beta$ + $\delta$ + $\gamma$ + 2$\alpha$' + $\beta$' + y'=186,6°.

On notera que, dans le cas du câble 363 à très bas module, 0,60 $\leq$ EC/EI $\leq$ 1,20 et ici EC/EI=1,14.

On a également 50 GPa $\leq$ EC $\leq$ 160 GPa et dans ce mode de réalisation du câble 363 à très bas module, 50 GPa $\leq$ EC $\leq$ 89 GPa. Ici EC=83 GPa.

## CABLE SELON UN 26<sup>ème</sup> MODE DE REALISATION DE L'INVENTION

On va maintenant décrire un câble 364 à très bas module selon un cinquième mode de réalisation de l'invention. Les éléments analogues à ceux des câbles précédemment décrits sont désignés par des références identiques.

Parmi les différences entre les câbles 363 et 364, on notera que Q=1, P=5 ou 6 et N=10, 11 ou 12, de préférence Q=1, P=5 ou 6 et N=10 ou 11 et ici, plus préférentiellement Q=1, P=6 et N=11. Les P fils intermédiaires F2 sont enroulés en hélice autour du Q=1 fil interne F1 et sont assemblés au sein de chaque toron interne TI à un pas p2 tel que 5 mm $\leq$ p2 $\leq$ 20 mm. Ici p2=5 mm. L'angle d'hélice $\delta$ de chaque fil intermédiaire F2 dans la couche intermédiaire C2 au sein de chaque toron interne TI va de 6° à 30°, ici $\delta$=19,4°. Les N fils externes F3 sont enroulés en hélice autour des P fils intermédiaires F2 et sont assemblés au sein de chaque toron interne TI à un pas p3 tel que 10 mm $\leq$ p3 $\leq$ 40 mm. Ici p3=10 mm. L'angle d'hélice $\gamma$ de chaque fil externe F3 dans la couche externe C3 au sein de chaque toron interne TI va de 7° à 30°, ici $\gamma$=18,7°.

On notera que, comme Q=1, dans le mode de réalisation du câble 364 à très bas module, 35° $\leq$ 3$\alpha$ + $\beta$ + $\delta$ + $\gamma$ $\leq$ 140° et ici, 3$\alpha$ + $\beta$ + $\delta$ + $\gamma$=51,9°.

On notera que, le câble 364 à très bas module présentant une couche interne du câble de module relativement élevé, 95 GPa $\leq$ EI $\leq$ 180 GPa, de préférence 95 GPa $\leq$ EI $\leq$ 175 GPa, En l'espèce, EI=146 GPa.

On notera également que Q'=1 et ici, N'=5 ou 6, de préférence N'=6. Les N' fils externes F2' sont enroulés en hélice autour du Q'=1 fil interne F1' et sont assemblés au sein de chaque toron externe TE à un pas p2' tel que 5 mm $\leq$ p2' $\leq$ 30 mm. Ici p2'=5 mm. L'angle d'hélice $\gamma$' de chaque fil externe F2' dans la couche externe C2' au sein de chaque toron externe TE va de 5° à 26°, ici y'=25,4°.

On notera que, comme Q'=1, 28° $\leq 2\alpha'$ + $\beta'$ + $\gamma' \leq 86°$ et dans ce mode de réalisation du câble 364 à très bas module, 34° $\leq 2\alpha'$ + $\beta'$ + $\gamma' \leq 86°$ et ici $2\alpha'$ + $\beta'$ + $\gamma'$=64,8°.

On notera également que, comme Q=1 et Q'=1, 64° $\leq 3\alpha + \beta + \delta + \gamma + 2\alpha'$ + $\beta'$ + $\gamma' \leq 200°$ et dans le mode de réalisation du câble 364 à très bas module, 100° $\leq 3\alpha + \beta + \delta + \gamma + 2\alpha'$ + $\beta'$ + $\gamma' \leq 200°$ et ici $3\alpha + \beta + \delta + \gamma + 2\alpha'$ + $\beta'$ + $\gamma'$=116,7°.

On notera également que EC/EI $\leq$ 0,59 et ici EC/EI=0,58.

## CABLE SELON UN 27<sup>ène</sup> MODE DE REALISATION DE L'INVENTION

On va maintenant décrire un câble 365 à moyen module selon un sixième mode de réalisation de l'invention. Les éléments analogues à ceux des câbles précédemment décrits sont désignés par des références identiques.

Parmi les différences entre les câbles 360 et 365, on notera que l'angle d'hélice $\alpha$ de chaque toron interne TI dans la couche interne CI va, dans le cas du câble à moyen module 65, de 4° à 23° et en l'espèce $\alpha$=11°.L'angle d'hélice $\alpha'$ de chaque toron externe TE dans la couche externe CE va, dans le cas du câble à moyen module 65, de 10° à 27° et, en l'espèce, $\alpha'$=17°.

On notera également que Q>1, Q=2, 3 ou 4, P=7, 8, 9 ou 10, N=13, 14 ou 15 et ici Q=3, P=8 et N=13. Les Q fils internes F1 sont enroulés en hélice au sein de chaque toron interne TI à un pas p1 tel que 5 mm $\leq$ p1 $\leq$ 15 mm. Ici, p1=8 mm. L'angle d'hélice $\beta$ de chaque fil interne F1 de la couche interne au sein de chaque toron interne TI va de 4° à 17°, ici $\beta$=6,7°. Les P fils intermédiaires F2 sont enroulés en hélice autour des Q fils internes F1 et sont assemblés au sein de chaque toron interne TI à un pas p2 tel que 10 mm $\leq$ p2 $\leq$ 20 mm. Ici p2=15 mm. L'angle d'hélice $\delta$ de chaque fil intermédiaire F2 dans la couche intermédiaire C2 au sein de chaque toron interne TI va de 8° à 22°, ici $\delta$=9,8°. Les N fils externes F3 sont enroulés en hélice autour des P fils intermédiaires F2 et sont assemblés au sein de chaque toron interne TI à un pas p3 tel que 10 mm $\leq$ p3 $\leq$ 40 mm. Ici p3=20 mm. L'angle d'hélice $\gamma$ de chaque fil externe F3 dans la couche externe C3 au sein de chaque toron interne TI va de 9° à 25°, ici $\gamma$=11,9°.

On notera également que, dans le cas du câble 365 à moyen module et comme Q>1, 26° $\leq 3\alpha + \beta + \delta + \gamma \leq 97°$ et ici, $3\alpha + \beta + \delta + \gamma$=61,4°.

On a également, dans le cas du câble 365 à moyen module, 78 GPa $\leq$ EI $\leq$ 180 GPa, de préférence 100 GPa $\leq$ EI $\leq$ 180 GPa. Dans le cas du câble 365 à moyen module comprenant une couche interne présentant un module relativement élevé, 95 GPa $\leq$ EI $\leq$ 180 GPa et ici EI=157 GPa.

On notera également que Q'=1, N'=5 ou 6 et ici de préférence N'=6. Les N' fils externes F2' sont enroulés en hélice autour du Q'=1 fil interne F1' et sont assemblés au sein de chaque toron externe TE à un pas p2' tel que 5 mm $\leq$ p2' $\leq$ 30 mm. Ici p2'=15 mm. L'angle d'hélice $\gamma'$ de chaque fil externe F2' dans la couche externe C2' au sein de chaque toron externe TE va de 5° à 26°, ici $\gamma'$=8,8°.

On notera que, dans le cas du câble 365 à moyen module, 30° $\leq 2\alpha'$ + $\beta'$ + $\gamma' \leq 64°$ et ici comme Q'=1, 30° $\leq 2\alpha'$ + $\beta'$ + $\gamma'$ < 62° et en l'espèce, $2\alpha'$ + $\beta'$ + y'=44°.

On notera que, dans le cas du câble 365 à moyen module, 64° $\leq 3\alpha + \beta + \delta + \gamma + 2\alpha'$ + $\beta'$ + $\gamma' \leq 135°$ et, comme Q>1 et Q'=1, 73° $\leq 3\alpha + \beta + \delta + \gamma + 2\alpha'$ + $\beta'$ + $\gamma' \leq 131°$, et ici, $3\alpha + \beta + \delta + \gamma + 2\alpha'$ + $\beta'$ + $\gamma'$=105,4°.

On a également 0,60 $\leq$ EC/EI $\leq$ 1,20, de préférence 0,80 $\leq$ EC/EI $\leq$ 1,15 et ici EC/EI=0,91.

On a également 50 GPa $\leq$ EC $\leq$ 160 GPa et dans ce mode de réalisation du câble 365 à moyen module, 131 GPa $\leq$ EC $\leq$ 160 GPa. Ici EC=143 GPa.

## CABLE SELON UN 28<sup>ème</sup> MODE DE REALISATION DE L'INVENTION

On va maintenant décrire un câble 366 à moyen module selon un septième mode de réalisation de l'invention. Les éléments analogues à ceux des câbles précédemment décrits sont désignés par des références identiques.

Parmi les différences entre les câbles 365 et 366, on notera que Q=1, P=5 ou 6 et N=10, 11 ou 12, de préférence Q=1, P=5 ou 6 et N=10 ou 11 et ici, plus préférentiellement Q=1, P=6 et N=11. Les P fils intermédiaires F2 sont enroulés en hélice autour du Q=1 fil interne F1 et sont assemblés au sein de chaque toron interne TI à un pas p2 tel que 5 mm $\leq$ p2 $\leq$ 20 mm. Ici p2=15 mm. L'angle d'hélice $\delta$ de chaque fil intermédiaire F2 dans la couche intermédiaire C2 au sein de chaque toron interne TI va de 6° à 30°, ici $\delta$=8,8°. Les N fils externes F3 sont enroulés en hélice autour des P fils intermédiaires F2 et sont assemblés au sein de chaque toron interne TI à un pas p3 tel que 10 mm $\leq$ p3 $\leq$ 40 mm. Ici p3=25 mm. L'angle d'hélice $\gamma$ de chaque fil externe F3 dans la couche externe C3 au sein de chaque toron interne TI va de 7° à 30°, ici $\gamma$=10,3°.

On notera également que Q'=2, 3 ou 4, de préférence Q'=3 ou 4. N'=7, 8, 9 ou 10, de préférence N'=8, 9 ou 10. Avec Q'=3, N'=7, 8 ou 9 et en l'espèce Q'=3, N'=8.

On notera également que, les Q' fils internes F1' sont assemblés au sein de chaque toron externe TE à un pas p1' tel que 5 mm $\leq$ p1' $\leq$ 20 mm. Ici p1'=8 mm. L'angle d'hélice $\beta'$ de chaque fil interne F1' dans la couche interne C1' au sein de chaque toron externe TE va de 4° à 17°, ici $\beta'$=6,7°. Les N' fils externes F2' sont enroulés en hélice autour des Q' fils internes F1' et sont assemblés au sein de chaque toron externe TE à un pas p2' tel que 5 mm $\leq$ p2' $\leq$ 40 mm. Ici p2'=15 mm.

L'angle d'hélice $\gamma$' de chaque fil externe F2' dans la couche externe C2' au sein de chaque toron externe TE va de 7° à 20°, ici y'=9,8°.

On notera que, dans le cas du câble 366 à moyen module et comme Q'>1, $37° \leq 2\alpha' + \beta' + \gamma' \leq 64°$ et en l'espèce, $2\alpha' + \beta' + \gamma'$=45,5°.

On notera également que, dans le cas du câble 366 à moyen module et comme Q=1 et Q'>1, $68° \leq 3\alpha + \beta + \delta + \gamma + 2\alpha' + \beta' + \gamma' \leq 127°$ et ici $3\alpha + \beta + \delta + \gamma + 2\alpha' + \beta' + \gamma'$=101,5°.

On notera que chaque câble décrit ci-dessus est métallique et est du type multi-torons à deux couches cylindriques. Ainsi, on comprend que les couches de torons constituant le câble sont au nombre de deux, ni plus, ni moins. Les couches de torons sont adjacentes et concentriques. On notera également que le câble est dépourvu de composition polymérique et de composition d'élastomère lorsqu'il n'est pas intégré au pneumatique.

On a résumé dans les tableaux 1à 5 ci-dessous les caractéristiques des câbles décrits ci-dessus ainsi que celles des exemples 2-1, 2-2 et 2-4 de WO2008026271 identifiés respectivement par les lettres T2-1, T2-2 et T2-4 dans les tableaux 1 à 5.

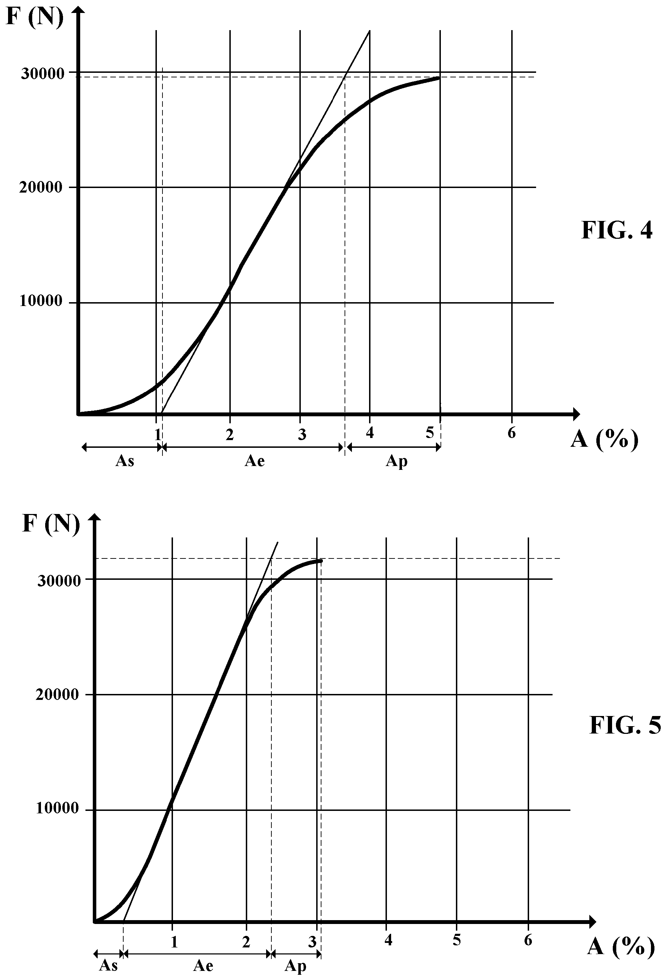

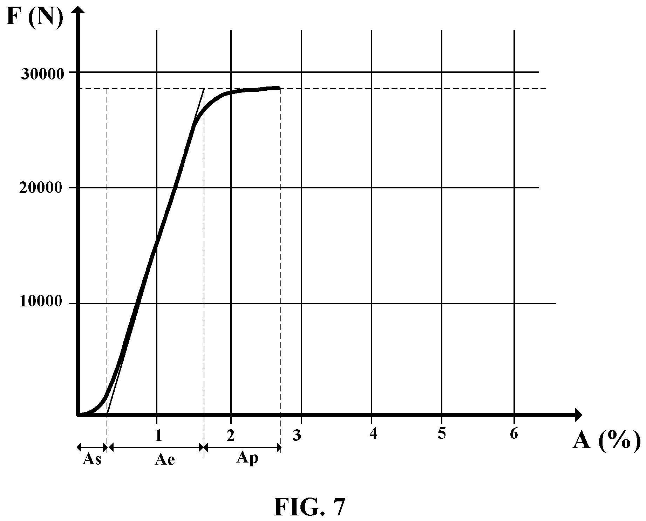

Dans ces tableaux 1 à 5, on a reporté les modules EC mesurés des câbles. On a illustré les courbes force-allongement mesurée selon la norme ASTM D2969-04 de 2014 des câbles 60, 61 et 62 selon l'invention respectivement sur les figures 4, 5 et 7. Sur chacune de ces figures, on a tracé en trait plein la tangente à la partie élastique de la courbe force-allongement permettant de calculer les modules EC. On a également identifié les allongements structuraux As, élastiques Ae et plastique Ap. L'allongement structural As est mesuré entre l'origine et l'intersection de la tangente à la partie élastique avec l'axe des abscisses. L'allongement élastique Ae est mesuré entre l'intersection de la tangente à la partie élastique avec l'axe des abscisses et l'intersection de la tangente à la partie élastique avec l'ordonnée correspondant à l'allongement à rupture. L'allongement plastique Ap est mesuré entre l'intersection de la tangente à la partie élastique avec l'ordonnée correspondant à l'allongement à rupture et l'allongement à rupture.

Bien entendu, l'invention n'est pas limitée aux exemples de réalisation précédemment décrits.

Pour des raisons de faisabilité industrielle, de coût et de performance globale, on préfère mettre en oeuvre l'invention avec des fils linéaires, c'est-à-dire droits. En d'autres termes, les fils utilisés ne sont pas préformés avant leur assemblage.

On pourra également combiner les caractéristiques des différents modes de réalisation décrits ou envisagés ci-dessus sous réserve que celles-ci soient compatibles entre elles.

| Câble | | T2-2 | 60 | 61 | 62 | 63 | 64 | 65 | 66 |
|---|---|---|---|---|---|---|---|---|---|
| TI | Q/N | 3/9 | 3/8 | 3/8 | 3/8 | 3/8 | 3/8 | 3/8 | 3/8 |
| | D1/D2 | 0,255/0,255 | 0,35/0,35 | 0,35/0,35 | 0,26/0,26 | 0,35/0,35 | 0,40/0,40 | 0,26/0,26 | 0,35/0,35 |
| | PI/p1/p2 (mm) | 55/8/16 | 15/3/6 | 30/7,4/11,8 | 30/11,2/22,2 | 30/10/20 | 40/3,4/6,9 | 15/2,2/4,5 | 30/15/30 |
| | $\alpha/\beta/\gamma$ | 4/6,6/9 | 19,8/23,4/30,2 | 10/9,8/16,4 | 9,1/4,8/6,6 | 12,3/7,3/9,8 | 10,6/23,6/30,1 | 18,3/23,7/30 | 12,3/4,8/6,6 |
| | $2\alpha + \beta + \gamma$ | 23,6 | 93,2 | 46,2 | 29,6 | 41,7 | 74,9 | 90,3 | 36 |
| | EI (GPa) | >170 | 53 | 148 | 173 | 158 | 76 | 59 | 164 |
| TE | Q'/N' | 3/9 | 3/8 | 3/8 | 3/8 | 3/8 | 3/8 | 3/8 | 3/8 |
| | D1'/D2' | 0,255/0,255 | 0,35/0,35 | 0,35/0,35 | 0,26/0,26 | 0,35/0,35 | 0,40/0,40 | 0,26/0,26 | 0,35/0,35 |
| | PE/p1'/p2' (mm) | 60/8/16 | 40/10/20 | 50/7,7/15,4 | 40/10/20 | 60/3/6 | 40/10/20 | 40/10/20 | 50/10/20 |
| | $\alpha'/\beta'/\gamma'$ | 9,9/6,6/9 | 20/7,3/9,8 | 16,1/9,4/12,7 | 16,2/7,3/9,8 | 14,7/23,4/30,2 | 24,2/7,3/9,8 | 16,4/7,3/9,8 | 17,4/7,3/9,8 |
| | $2\alpha' + \beta' + \gamma'$ | 35,4 | 57,1 | 54,3 | 49,5 | 83 | 65,5 | 49,9 | 51,9 |
| J/L | | 3/9 | 3/8 | 3/8 | 4/9 | 4/9 | 4/9 | 4/10 | 4/10 |
| $2\alpha + \beta + \gamma + 2\alpha' + \beta' + \gamma'$ | | 59 | 150,3 | 100,5 | 79,1 | 124,7 | 140,4 | 140,2 | 87,9 |
| EC (GPa) | | >160 | 86 | 127 | 149 | 79 | 82 | 96 | 143 |
| EC/EI | | / | 1,62 | 0,86 | 0,86 | 0,50 | 1,08 | 1,63 | 0,87 |

**Tableau 1**

| Câble | | T2-1 | 160 | 161 | 162 | 163 | 164 | 165 | 166 |
|---|---|---|---|---|---|---|---|---|---|
| TI | Q/P/N | 3/9/15 | 1/6/11 | 1/6/11 | 3/8/13 | 3/8/13 | 3/8/13 | 1/6/11 | 1/6/11 |
| | D1/D2/D3 | 0,175/0,175/0,175 | 0,26/0,26/0,26 | 0,40/0,40/0,40 | 0,26/0,26/0,26 | 0,30/0,30/0,30 | 0,40/0,40/0,40 | 0,40/0,40/0,40 | 0,26/0,26/0,26 |
| | PI/p1/p2/p3 (mm) | 50/5/10/15 | 20/inf/7,7/15,4 | 60/inf/15/25 | 15/8/15/20 | 15/5/10/15 | 60/12/18/25 | 15/inf/15/25 | 15/inf/5/10 |
| | $\alpha/\beta/\delta/\gamma$ | 4,5/7,3/9,8/10,7 | 13,4/0/12,2/12,1 | 6,9/0/9,6/11,4 | 26,7/6,7/9,8/11,9 | 24,6/12,4/16,6/18 | 8,5/6,9/12,4/14,5 | 33,3/0/9,6/11,4 | 17,9/0/18,8/18,5 |
| | $3\alpha + \beta + \delta + \gamma$ | 41,3 | 64,5 | 41,7 | 108,50 | 120,8 | 59,3 | 120,9 | 91 |
| | EI (GPa) | >170 | 147 | 168 | 82 | 744 | 157 | 55 | 96 |
| TE | Q'/P'/N' | 3/9/15 | 1/6/11 | 1/6/11 | 3/8/13 | 1/6/11 | 3/8/13 | 3/8/13 | 3/8/13 |
| | D1'/D2'/D3' | 0,175/0,175/0,175 | 0,38/0,30/0,30 | 0,30/0,30/0,30 | 0,26/0,26/0,26 | 0,30/0,30/0,30 | 0,30/0,30/0,30 | 0,30/0,30/0,30 | 0,26/0,26/0,26 |
| | PE/p1'/p2'/p3' (mm) | 65/5/10/15 | 40/inf/7,7/15,4 | 60/inf/5/10 | 60/12/18/25 | 60/inf/5/10 | 35/8/15/20 | 60/12/18/25 | 60/12/18/25 |
| | $\alpha'/\beta'/\delta'/\gamma'$ | 9,3/7,3/9,8/10,7 | 19,1/0/15,5/14,6 | 17,1/0/21,7/21,2 | 16,4/4,5/8,1/9,6 | 16,3/0/21,7/21,2 | 32,7/7,8/11,2/13,7 | 20,1/5,2/9,4/11 | 13,2/4,5/8,1/9,6 |
| | $3\alpha' + \beta' + \delta' + \gamma'$ | 55,7 | 87,4 | 94,2 | 71,4 | 91,8 | 130,8 | 85,9 | 61,8 |
| | J/L | 3/9 | 3/8 | 3/8 | 4/9 | 3/8 | 3/8 | 4/9 | 3/8 |
| | $3\alpha + \beta + \delta + \gamma + 3\alpha' + \beta' + \delta' + \gamma'$ | 97 | 151,9 | 135,9 | 179,9 | 212,6 | 190,1 | 206,8 | 152,8 |
| | EC (GPa) | >160 | 103 | 109 | 106 | 80 | 78 | 79 | 141 |
| | EC/EI | / | 0,70 | 0,65 | 1,29 | 1,08 | 0,49 | 1,44 | 1,48 |

Tableau 2

| Câble | | T2-4 | 260 | 261 | 262 | 263 | 264 | 265 | 266 |
|---|---|---|---|---|---|---|---|---|---|
| TI | Q/N | 3/9 | 4/9 | 1/6 | 3/8 | 3/8 | 3/8 | 1/6 | 3/8 |
| | D1/D2 | 0,175/0,175 | 0,30/0,30 | 0,30/0,26 | 0,26/0,26 | 0,35/0,35 | 0,35/0,35 | 0,30/0,26 | 0,35/0,35 |
| | Pl/p1/p2 (mm) | 45/5,5/12 | 20/7,7/15,4 | 60/inf/7,7 | 15/8/15 | 30/5/10 | 15/8/15 | 60/inf/5 | 60/12/18 |
| | α/β/γ | 3,4/6,6/8,2 | 13,6/9,9/11,8 | 6,8/0/12,9 | 29,6/6,7/9,8 | 10/14,4/19,2 | 35,6/9/13 | 6,8/0/19,4 | 5/6/10,9 |
| | 2α + β + γ | 21,6 | 48,9 | 26,5 | 75,7 | 53,60 | 93,20 | 33 | 26,90 |
| | EI (GPa) | >170 | 148 | 171 | 71 | 130 | 42 | 165 | 173 |
| TE | Q'/P'/N' | 3/9/15 | 1/6/11 | 1/6/11 | 1/6/11 | 1/6/11 | 3/8/13 | 1/6/11 | 3/8/13 |
| | D1'/D2'/D3' | 0,255/0,255/ 0,255 | 0,38/0,30/0,3 0 | 0,30/0,26/ 0,26 | 0,30/0,26/ 0,26 | 0,39/0,35/ 0,35 | 0,35/0,35/ 0,35 | 0,30/0,26/ 0,26 | 0,26/0,26/ 0,26 |
| | PE/p1'/p2'/p3' (mm) | 55/6/12/18 | 40/inf/7,7/15, 4 | 35/inf/5/ 10 | 60/inf/15/ 25 | 60/inf/5/ 10 | 60/12/18/ 25 | 60/inf/7,7/ 15,4 | 45/12/18/ 25 |
| | α'/β'/δ'/γ' | 10,3/8,8/11,9/ 12,9 | 19,1/0/15,5/1 4,6 | 25,1/0/19,4/ 18,7 | 17/0/6,7/ 7,7 | 14,5/0/25,4/ 24,6 | 22/6/10,9/ 12,8 | 15,3/0/12,9/ 12,4 | 18,3/4,5/8,1/ 9,6 |
| | 3α' + β' + δ' + γ' | 64,5 | 87,4 | 113,4 | 65,4 | 93,5 | 95,7 | 71,4 | 77,1 |
| J/L | | 3/6 | 3/8 | 4/9 | 4/9 | 3/8 | 4/9 | 4/9 | 3/8 |
| 2α + β + γ + 3α' + β' + δ' + γ' | | 86,1 | 136,3 | 139,9 | 141,1 | 147,1 | 188,9 | 104,2 | 104 |
| EC (GPa) | | >160 | 102 | 97 | 94 | 84 | 72 | 148 | 142 |
| EC/EI | | / | 0,69 | 0,56 | 1,33 | 0,64 | 1,72 | 0,90 | 0,82 |

**Tableau 3**

EP 3 728 727 B1

| | Câble | T2-1 | T2-2 | T2-4 | 360 | 361 |
|---|---|---|---|---|---|---|
| TI | Q/P/N | 3/9/15 | 3/-/9 | 3/-/9 | 1/6/11 | 3/8/13 |
| | D1/D2/D3 | 0,175/0, 175/0,175 | 0,255/0,255 | 0,175/0,175 | 0,26/0,26/0,26 | 0,35/0,35/0,35 |
| | Pl/p1/p2/p3 (mm) | 50/5/10/15 | 55/8/16 | 45/5,5/12 | 20/inf/7,7/15,4 | 60/12/18/25 |
| | $\alpha/\beta/\delta/\gamma$ | 4,5/7,3/9,8/10,7 | 4/6,6/-/9 | 3,4/6,6/8,2 | 13,4/0/12,2/12,1 | 7,4/6/10,9/12,8 |
| | $3\alpha + \beta + \delta + \gamma$ | 41,3 | / | / | 64,5 | 51,9 |
| | EI (GPa) | >170 | >170 | >170 | 147 | 164 |
| TE | Q'/N' | 3/9/15 | 3/9 | 3/9/15 | 3/8 | 1/6 |
| | D1'/D2' | 0,175/0,175/0,175 | 0,255/0,255 | 0,255/0,255/0,255 | 0,35/0,35 | 0,39/0,35 |
| | PE/p1'/p2' (mm) | 65/5/10/15 | 60/8/16 | 55/6/12/18 | 40/7,7/15,4 | 35/inf/15 |
| | $\alpha'/\beta'/\gamma'$ | 9,3/7,3/9,8/10,7 | 9,9/6,6/9 | 10,3/8,8/11,9/12,9 | 18,6/9,4/12,7 | 27,3/0/8,8 |
| | $2\alpha' + \beta' + \gamma'$ | / | 35,4 | / | 59,3 | 63,4 |
| J/L | | 3/9 | 3/9 | 3/6 | 3/8 | 3/8 |
| $3\alpha + \beta + \delta + \gamma + 2\alpha' + \beta' + \gamma'$ | | / | / | / | 123,8 | 115,3 |
| EC (GPa) | | >160 | >160 | >160 | 111 | 112 |
| EC/EI | | / | / | / | 0,75 | 0,68 |

Tableau 4

EP 3 728 727 B1

| | Câble | 362 | 363 | 364 | 365 | 366 |
|---|---|---|---|---|---|---|
| TI | Q/P/N | 1/6/11 | 3/8/13 | 1/6/11 | 3/8/13 | 1/6/11 |
| | D1/D2/D3 | 0,39/0,35/0,35 | 0,26/0,26/0,26 | 0,30/0,26/0,26 | 0,26/0,26/0,26 | 0,39/0,35/0,35 |
| | Pl/p1/p2/p3 (mm) | 15/inf/5/10 | 15/5/10/15 | 60/inf/5/10 | 30/8/15/20 | 30/inf/15/25 |
| | $\alpha/\beta/\delta/\gamma$ | 20,7/0/25,4/24,6 | 26,7/10,7/14,5/15,7 | 4,6/0/19,4/18,7 | 11/6,7/9,8/11,9 | 12,3/0/8,8/10,3 |
| | $3\alpha + \beta + \delta + \gamma$ | 112,10 | 121 | 51,90 | 61,40 | 56 |
| | EI (GPa) | 65 | 73 | 146 | 157 | 157 |
| TE | Q'/N' | 1/6 | 3/8 | 1/6 | 1/6 | 3/8 |
| | D1'/D2' | 0,39/0,35 | 0,35/0,35 | 0,39/0,35 | 0,39/0,35 | 0,26/0,26 |
| | PE/p1'/p2' (mm) | 50/inf/15 | 60/5/10 | 35/inf/5 | 45/inf/15 | 60/8/15 |
| | $\alpha'/\beta'/\gamma'$ | 13,8/0/8,8 | 16/14,4/19,2 | 19,7/0/25,4 | 17,6/0/8,8 | 14,5/6,7/9,8 |
| | $2\alpha' + \beta' + \gamma'$ | 36,4 | 65,6 | 64,8 | 44 | 45,5 |
| | J/L | 2/8 | 4/9 | 3/8 | 3/8 | 3/8 |
| | $3\alpha + \beta + \delta + \gamma + 2\alpha' + \beta' + \gamma'$ | 148,5 | 186,6 | 116,7 | 105,4 | 101,5 |
| | EC (GPa) | 100 | 83 | 85 | 143 | 149 |
| | EC/EI | 1,54 | 1,14 | 0,58 | 0,91 | 0,95 |

**Tableau 5**

**Revendications**

1. Câble multi-torons (60) à deux couches présentant un module EC et comprenant :

   - une couche interne (CI) du câble constituée de J>1 torons internes (TI) enroulés en hélice, chaque toron interne (TI) comprenant :

     • une couche interne (C1) constituée de Q≥1 fils internes (F1), et
     • une couche externe (C2; C3) constituée de N>1 fils externes (F2; F3) enroulés autour de la couche interne (C1),

   - une couche externe (CE) du câble constituée de L>1 torons externes (TE) enroulés autour de la couche interne (CI) du câble, chaque toron externe (TE) comprenant :

     • une couche interne (C1') constituée de Q'≥1 fils internes (F1'),
     • une couche externe (C2'; C3') constituée de N'>1 fils externes (F2'; F3') enroulés autour de la couche interne (C1'),

   **caractérisé en ce que** 50 GPa ≤ EC ≤ 160 GPa, le module EC est mesuré sur un câble issu de fabrication, c'est-à-dire dépourvu de toute composition élastomérique dans laquelle serait noyé le câble pour former une nappe et il est calculé en mesurant la pente de la partie élastique d'une courbe force-allongement obtenue en appliquant la norme ASTM D2969-04 de 2014 au câble testé, puis en rapportant cette pente à la section métallique du câble ; **en ce que** la couche interne (CI) du câble présente un module EI, 25 GPa ≤ EI ≤ 180 GPa, le module EI est mesuré en prenant la couche interne du câble soit à l'issue de sa fabrication, soit en déroulant la couche externe de torons externes du câble fini de façon à obtenir la couche interne du câble seule et il est calculé en mesurant la pente de la partie élastique d'une courbe force-allongement obtenue en appliquant la norme ASTM D2969-04 de 2014 à la couche interne du câble testé, puis en rapportant cette pente à la section métallique de la couche interne du câble ; et **en ce que** 0,60 ≤ EC/EI ≤ 1,20 ou 0,40 ≤ EC/EI ≤ 0,59 ou 1,21 ≤ EC/EI ≤ 3,00.

2. Câble (60) selon la revendication précédente, dans lequel 50 GPa ≤ EC ≤ 89 GPa.

3. Câble (60) selon la revendication précédente, dans lequel 36 GPa ≤ EI ≤ 175 GPa.

4. Câble (60) selon la revendication 1, dans lequel 90 GPa ≤ EC ≤ 130 GPa.

5. Câble (60) selon la revendication précédente, dans lequel 25 GPa ≤ EI ≤ 180 GPa, de préférence 64 GPa ≤ EI ≤ 180 GPa.

6. Câble (60) selon la revendication 1, dans lequel 131 GPa ≤ EC ≤ 160 GPa.

7. Câble (60) selon la revendication précédente, dans lequel 78 GPa ≤ EI ≤ 180 GPa, de préférence 100 GPa ≤ EI ≤ 180 GPa.

8. Câble (60) selon l'une quelconque des revendications précédentes, dans lequel J=2, 3 ou 4, de préférence J=3 ou 4.

9. Câble (60) selon l'une quelconque des revendications précédentes, dans lequel L=7, 8, 9 ou 10, de préférence L=8, 9 ou 10 et plus préférentiellement L=8 ou 9.

10. Câble (60) selon l'une quelconque des revendications précédentes, dans lequel la couche externe (CE) du câble est désaturée.

11. Pneumatique (10), **caractérisé en ce qu'**il comprend un câble (60) selon l'une quelconque des revendications précédentes.

12. Pneumatique (10) selon la revendication précédente, comprenant une armature de carcasse (24) ancrée dans deux bourrelets (18) et surmontée radialement par une armature de sommet (14) elle-même surmontée d'une bande de roulement (22), l'armature de sommet (14) étant réunie auxdits bourrelets (18) par deux flancs (16), l'armature de sommet (14) comprenant au moins un câble (60) selon l'une quelconque des revendications 1 à 10.

**Patentansprüche**

1. Zweischichtiger Mehrstrangkord (60), der einen EC-Modul aufweist und Folgendes umfasst:

   - eine innere Schicht (CI) des Kords, die aus J>1 inneren Strängen (TI) gebildet ist, die schraubenlinienförmig gewickelt sind, wobei jeder innere Strang (TI) Folgendes umfasst:

     • eine innere Schicht (C1), die aus Q≥1 inneren Drähten (F1) gebildet ist, und
     • eine äußere Schicht (C2; C3), die aus N>1 äußeren Drähten (F2; F3) gebildet ist, die um die innere Schicht (C1) gewickelt sind,

   - eine äußere Schicht (CE) des Kords, die aus L>1 äußeren Strängen (TE) gebildet ist, die um die innere Schicht (CI) des Kords gewickelt sind, wobei jeder äußere Strang (TE) Folgendes umfasst:

     • eine innere Schicht (C1'), die aus Q'≥1 inneren Drähten (F1') gebildet ist,
     • eine äußere Schicht (C2'; C3'), die aus N'>1 äußeren Drähten (F2'; F3') gebildet ist, die um die innere Schicht (C1') gewickelt sind,
     **dadurch gekennzeichnet, dass** 50 GPa ≤ EC ≤ 160 GPa, der EC-Modul an einem aus der Herstellung stammenden Kord gemessen wird, das heißt ohne jegliche Elastomerzusammensetzung, in der der Kord versenkt werden würde, um eine Schale zu bilden, und er durch Messen der Steigung des elastischen Teils einer Kraft/DehnungsKurve, die durch Anwenden der Norm ASTM D2969-04 von 2014 auf den getesteten Kord erhalten wird und dann durch Beziehen dieser Steigung auf den metallischen Abschnitt des Kords berechnet wird;
     dass die innere Schicht (CI) des Kords einen EI-Modul aufweist, 25 GPa ≤ EI ≤ 180 GPa, der EI-Modul durch Nehmen der inneren Schicht des Kords entweder nach seiner Herstellung oder durch Abwickeln der äußeren Schicht von äußeren Strängen des fertigen Kords, um nur die innere Schicht des Kords zu erhalten, gemessen wird und er durch Messen der Steigung des elastischen Teils einer Kraft/Dehnungs-Kurve, die durch Anwenden der Norm ASTM D2969-04 von 2014 auf die innere Schicht des getesteten Kords erhalten wird, und dann durch Beziehen dieser Steigung auf den metallischen Abschnitt der inneren Schicht des Kords berechnet wird; und
     dass 0,60 ≤ EC/EI ≤ 1,20 oder 0,40 ≤ EC/EI ≤ 0,59 oder 1,21 ≤ EC/EI ≤ 3,00.

2. Kord (60) nach dem vorangehenden Anspruch, bei dem 50 GPa ≤ EC ≤ 89 GPa.

3. Kord (60) nach dem vorangehenden Anspruch, bei dem 36 GPa ≤ EI ≤ 175 GPa.

4. Kord (60) nach Anspruch 1, bei dem 90 GPa ≤ EC ≤ 130 GPa.

5. Kord (60) nach dem vorangehenden Anspruch, bei dem 25 GPa ≤ EI ≤ 180 GPa, vorzugsweise 64 GPa ≤ EI ≤ 180 GPa.

6. Kord (60) nach Anspruch 1, bei dem 131 GPa ≤ EC ≤ 160 GPa.

7. Kord (60) nach dem vorangehenden Anspruch, bei dem 78 GPa ≤ EI ≤ 180 GPa, vorzugsweise 100 GPa ≤ EI ≤ 180 GPa.

8. Kord (60) nach einem der vorangehenden Ansprüche, bei dem J = 2, 3 oder 4, vorzugsweise J = 3 oder **4.**

9. Kord (60) nach einem der vorangehenden Ansprüche, bei dem L = 7, 8, 9 oder 10, vorzugsweise L = 8, 9 oder 10 und stärker bevorzugt L = 8 oder 9.

10. Kord (60) nach einem der vorangehenden Ansprüche, bei dem die äußere Schicht (CE) des Kords entsättigt ist.

11. Reifen (10), **dadurch gekennzeichnet, dass** er einen Kord (60) nach einem der vorangehenden Ansprüche umfasst.

12. Reifen (10) nach dem vorangehenden Anspruch, der eine Karkassenverstärkung (24) umfasst, die in zwei Wulsten (18) verankert ist und radial durch eine Gürtelverstärkung (14) überlagert ist, die ihrerseits von einer Lauffläche (22) überlagert ist, wobei die Gürtelverstärkung (14) mit den Wulsten (18) durch zwei Seitenwände (16) vereinigt ist, wobei die Gürtelverstärkung (14) mindestens einen Kord (60) nach einem der Ansprüche 1 bis 10 umfasst.

**Claims**

1. Two-layer multi-strand cord (60) having a modulus EC and comprising:

   - an internal layer (CI) of the cord made up of J>1 internal strands (TI) wound in a helix, each internal strand (TI) comprising:

     • an internal layer (C1) made up of Q≥1 internal threads (F1), and
     • an external layer (C2; C3) made up of N>1 external threads (F2; F3) wound around the internal layer (C1),

   - an external layer (CE) of the cord made up of L>1 external strands (TE) wound around the internal layer (CI) of the cord, each external strand (TE) comprising:

     • an internal layer (C1') made up of Q'≥1 internal threads (F1'),
     • an external layer (C2'; C3') made up of N'>1 external threads (F2'; F3') wound around the internal layer (C1'),

   **characterized in that** 50 GPa ≤ EC ≤ 160 GPa, the modulus EC of a cord is measured on an as-manufactured cord, namely a cord without any elastomeric compound in which the cord would be embedded in order to form a ply and is calculated by measuring the gradient of the elastic portion of a force-elongation curve obtained by applying standard ASTM D2969-04 of 2014 to the cord tested, and then by apportioning this gradient to the metal cross section of the cord, and **in that**
   the internal layer (CI) of the cord have a modulus EI, 25 GPa ≤ EI ≤ 180 GPa, the modulus EI of the internal layer of the cord is measured by taking the internal layer of the cord either as-manufactured or by unravelling the external layer of external strands from the finished cord in order to obtain the internal layer of the cord alone and is calculated by measuring the gradient of the elastic portion of a force-elongation curve obtained by applying standard ASTM D2969-04 of 2014 to the internal layer of the cord tested, and then by apportioning this gradient to the metal cross section of the internal layer of the cord, and **in that** EI, 0.60 ≤ EC/EI ≤ 1.20 or 0.40 ≤ EC/EI ≤ 0.59 or 1.21 ≤ EC/EI ≤ 3.00.

2. Cord (60) according to the preceding claim, in which 50 GPa ≤ EC ≤ 89 GPa.

3. Cord (60) according to the preceding claim, in which 36 GPa ≤ EI ≤ 175 GPa.

4. Cord (60) according to Claim 1, in which 90 GPa ≤ EC ≤ 130 GPa.

5. Cord (60) according to the preceding claim, in which 25 GPa ≤ EI ≤ 180 GPa, preferably 64 GPa ≤ EI ≤ 180 GPa.

6. Cord (60) according to Claim 1, in which 131 GPa ≤ EC ≤ 160 GPa.

7. Cord (60) according to the preceding claim, in which 78 GPa ≤ EI ≤ 180 GPa, preferably 100 GPa ≤ EI ≤ 180 GPa.

8. Cord (60) according to any one of the preceding claims, in which J=2, 3 or 4, preferably J=3 or 4.

9. Cord (60) according to any one of the preceding claims, in which L=7, 8, 9 or 10, preferably L=8, 9 or 10 and more preferentially L=8 or 9.

10. Cord (60) according to any one of the preceding claims, in which the external layer (CE) of the cord is desaturated.

11. Tyre (10), **characterized in that** it comprises a cord (60) according to any one of the preceding claims.

12. Tyre (10) according to the preceding claim, comprising a carcass reinforcement (24) anchored in two beads (18) and surmounted radially by a crown reinforcement (14) which is itself surmounted by a tread (22), the crown reinforcement (14) being joined to the said beads (18) by two sidewalls (16), the crown reinforcement (14) comprising at least one cord (60) according to any one of Claims 1 to 10.

**FIG. 1**

**FIG. 2**

**FIG. 3**

FIG. 4

FIG. 5

**FIG. 6**

FIG. 7

**FIG. 8**

**FIG. 9**

**FIG. 10**

## RÉFÉRENCES CITÉES DANS LA DESCRIPTION

**Documents brevets cités dans la description**

- WO 2008026271 A
- WO 2015090920 A
- WO 2014048897 A
- US 5843583 A
- WO 2005014925 A
- WO 2007090603 A
- FR 2419181
- FR 2419182